(19) Europäisches Patentamt
European Patent Office
Office européen des brevets

(11) **EP 1 789 755 B1**

## (12) EUROPÄISCHE PATENTSCHRIFT

(45) Veröffentlichungstag und Bekanntmachung des Hinweises auf die Patenterteilung:
**24.08.2011 Patentblatt 2011/34**

(21) Anmeldenummer: **05782165.4**

(22) Anmeldetag: **07.09.2005**

(51) Int Cl.:
*G01C 21/20* (2006.01)   *G01C 21/36* (2006.01)

(86) Internationale Anmeldenummer:
**PCT/EP2005/009616**

(87) Internationale Veröffentlichungsnummer:
**WO 2006/029749 (23.03.2006 Gazette 2006/12)**

(54) **INFORMATIONSPUNKT**

INFORMATION POINT

POINT D'INFORMATION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **16.09.2004 DE 102004045010**

(43) Veröffentlichungstag der Anmeldung:
**30.05.2007 Patentblatt 2007/22**

(73) Patentinhaber: **Fraunhofer-Gesellschaft zur Förderung der angewandten Forschung e.V.
80686 München (DE)**

(72) Erfinder:
• **ZINK, Alexander
96135 Stegaurach (DE)**

• **FAZLIJA, Fetim
96049 Bamberg (DE)**
• **FAZLIJA, Negjmedin
96049 Bamberg (DE)**
• **KORTE, Olaf
91338 Igensdorf (DE)**

(74) Vertreter: **Zinkler, Franz et al
Schoppe, Zimmermann, Stöckeler & Zinkler
Patentanwälte
Postfach 246
82043 Pullach bei München (DE)**

(56) Entgegenhaltungen:
**EP-A- 0 672 890    DE-C1- 19 841 169**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung ist auf dem Gebiet der Informationstechnologie, insbesondere auf dem Gebiet der Bereitstellung von Informationen.

Zum Anzeigen von Informationen über in einer Umgebung angeordnete Objekte, beispielsweise Gebäude, können z.B. mobile Informationsterminals eingesetzt werden, z.B. PDA (PDA: Personal Digital Assistent), in denen die Informationen über die Objekte gespeichert sind. Dabei werden die Informationen in Abhängigkeit von einer Position (Standort) eines Benutzers des mobilen Terminals angezeigt.

Existierende ortsbasierte Informationssysteme berücksichtigen hauptsächlich den geographischen Standort des Benutzers zur Auswahl von Informationsobjekten bzw. zur geographischen Gewichtung der Relevanz eines Informationsobjekts, z. B. eines historischen Gebäudes. Zu diesem Zweck beinhalten diese Informationsobjekte neben weiteren nichtortsbezogenen Parametern in vielen Fällen lediglich die geographische Koordinate des Standorts und die eigentlichen darzustellenden Informationen.

Die geographische Beschreibung der Informationsobjekte durch die alleinige Angabe des Standortes erlaubt es jedoch nicht, beispielsweise eine besondere Beschaffenheit und die geographische Umgebung der verschiedenen Typen von Informationen zu berücksichtigen. Alle Informationsobjekte werden bei der Auswahl nach geographischen Aspekten gleich behandelt, weil zum Auswahl-Zeitpunkt lediglich deren geographische Position bekannt ist.

Es ist die Aufgabe der vorliegenden Erfindung, ein effizientes Konzept für eine objektbezogene Informationsauswahl zu schaffen.

Diese Aufgabe wird durch einen Informationspunkt gemäß Anspruch 1 oder durch ein Verfahren zur Informationsauswahl gemäß Anspruch 13 oder durch ein Computerprogramm gemäß Anspruch 14 gelöst.

Die vorliegende Erfindung basiert auf der Erkenntnis, dass die Auswahl von Informationen über Objekte effizient durchgeführt werden kann, wenn den Objekten objektbezogene Relevanzbereiche zugeordnet werden, und wobei die dem Objekt zugeordneten Informationen mit den Relevanzbereichen verknüpft sind.

Gemäß einem Aspekt schafft die vorliegende Erfindung einen Informationspunkt mit einer Einrichtung zum Bereitstellen einer Datenstruktur, die Einträge über verschiedene Objekte aufweist, wobei jedem Objekt ein begrenzter geographischer Bereich zugeordnet ist und wobei jedem Objekt eine Objektinformation zugeordnet ist, einer Einrichtung zum Bestimmen einer geographischen Position des Informationspunktes, einer Einrichtung zum Untersuchen, ob die geographische Position des Informationspunktes in dem geographischen Bereich, der einem Objekt zugeordnet ist, liegt, und einer Einrichtung zum Bereitstellen, z.B. Anzeigen, von Objektinformationen, die einem Objekt zugeordnet sind, falls die Einrichtung zum Untersuchen festgestellt hat, dass der Informationspunkt in dem geographischen Bereich des Objekts liegt.

Erfindungsgemäß kann der Informationspunkt ein Informationsterminal, das beispielsweise in einer Umgebung aufstellbar ist, ein mobiles Informationsterminal, das von einem Benutzer verwendet wird, oder ein Umgebungsbezugspunkt, bezüglich dessen die Informationen angezeigt werden sollen, sein.

Die Einrichtung zum Bereitstellen von Objektinformationen kann beispielsweise eine Einrichtung zum Anzeigen von Objektinformationen, z.B. einen Bildschirm, umfassen.

Gemäß einem weiteren Aspekt kann die Einrichtung zum Bereitstellen von Objektinformationen eine Schnittstelle zum Ausgeben von Objektinformationen umfassen, an die beispielsweise eine Einrichtung zum Anzeigen koppelbar ist, um die Objektinformationen anzuzeigen.

Gemäß einem weiteren Aspekt kann die Einrichtung zum Bereitstellen von Objektinformationen eine Einrichtung zum Anzeigen von Objektinformationen sein.

Handelt es sich bei dem Informationspunkt um ein mobiles Informationsterminal, so kann die Einrichtung zum Anzeigen ein Bestandteil des mobilen Informationsterminals sein, z.B. in Form eines Bildschirmes.

Die Einrichtung zum Anzeigen von Objektinformationen kann jedoch von dem Informationspunkt beabstandet sein und beispielsweise an einem anderen Ort angeordnet sein. In diesem Fall kann die Einrichtung zum bereitstellen der Objektinformationen eine Sendeeinheit zum Aussenden von Informationen umfassen. In diesem Fall kann der Informationspunkt ferner eine Empfangseinheit zum Empfangen von Steuerungsbefehlen umfassen.

Bei der geographischen Position des Informationspunktes kann es sich um eine reelle oder eine virtuelle Position handeln. Handelt es sich bei der geographischen Position um eine reelle geographische Position, so wird sie durch die tatsächliche Lage des Informationspunktes in der reellen Umgebung bestimmt. In diesem Fall kann ein Benutzer vor Ort mit Informationen versorgt werden.

Handelt es sich bei der geographischen Position jedoch um eine virtuelle Position, so wird sie durch eine Auswahl eines Umgebungspunktes in beispielsweise einer Umgebungskarte bestimmt. In diesem Fall kann ein Benutzer unabhängig von der Lage des Benutzers in der Umgebung mit Informationen versorgt werden.

Beispielsweise kann für jedes Objekt, z.B. für jedes historische Gebäude in einer Stadt, ein geographischer Objektbereich zugeordnet werden, der beispielsweise von der Lage der anderen Objekte sowie deren Objektbereiche abhängig sein kann.

Da ein Objektbereich beschränkt ist, kann einem Benutzer nach dem Eintreten in den Objektbereich die objektbezogene Information angezeigt werden. Mit sinkender Entfernung zum Objekt oder in Abhängigkeit von einer Geschwindigkeit des Benutzers können verschiedene Informationen über das Objekt angezeigt werden, die beispielsweise bestimmten Subbereichen des Objektbereichs zugeordnet sind.

Im Gegensatz zu bekannten geographischen Beschreibungen von Informationsobjekten, die es nicht erlauben, einen individuellen und flexiblen geographischen Relevanzbereich für ein individuelles Informationsobjekt zu definieren, werden erfindungsgemäß die geographischen Relevanzbereiche, die den Objekten zugeordnet sind, mit Informationen über die Objekte verknüpft, so daß eine flexible und benutzerspezifische Informationsauswahl ermöglicht wird.

Herkömmliche ortsbasierten Informationssysteme können beispielsweise nicht gewährleisten, dass ein Informationsobjekt, wie z. B. ein Gebäude, zum Auswahl-Zeitpunkt für den Benutzer tatsächlich sichtbar ist. Für eine gezielte Wiedergabe wäre die Berücksichtigung der unmittelbaren Umgebung, der Sichtweite und die räumlichen Ausmaße des Informationsobjekts notwendig.

Das Konzept der objektbezogenen Relevanzbereiche erlaubt, für jedes Informationsobjekt einen geographischen Bereich zu definieren, aus dem heraus das Informationsobjekt ausgewählt werden kann.

Die objektbezogenen Relevanzbereiche ermöglichen es beispielsweise, unterschiedliche Auswahlentfernungen für ein Informationsobjekt zu definieren.

Durch die objektbezogenen Relevanzbereiche können gezielt geographische Bereiche definiert werden, in denen ein Informationsobjekt für den Benutzer zum Zeitpunkt der potentiellen Auswahl sichtbar ist.

Weiterhin kann durch eine entsprechende Definition eines objektbezogenen Relevanzbereichs die Auswahl eines Informationsobjekts nur für bestimmte Bewegungsrichtungen des Benutzers eingeschränkt werden.

Informationsobjekte, die selbst keine feste geographische Position besitzen (‚Unpositionierte Informationsobjekte'), jedoch nur für ein wohl definiertes geographisches Gebiet relevant sind, können durch die Angabe eines objektbezogenen Relevanzbereichs gezielt auf eine potentielle Auswahl aus nur diesem Gebiet heraus festgelegt werden.

Gegenstand der Erfindung ist ein Verfahren zur Informationsauswahl mit Hilfe der Verwendung objektbezogener Relevanzbereiche. Ein objektbezogener Relevanzbereich definiert den geographischen Bereich, in dem sich ein Bezugspunkt (z. B. die aktuelle Benutzer-Position) befinden muss, damit das Informationsobjekt, zu dem der Relevanzbereich gehört, ausgewählt bzw. wiedergegeben werden darf. Die Definition eines derartigen Bereichs erfolgt durch eine unlimitierte Anzahl beliebiger geometrischer Formen. Als geometrische Grundformen eignen sich beispielsweise Polygone, Kreise, Winkel und Kreissegmente.

Außerdem können die geometrischen Formen darüber hinaus ggf. durch einen booleschen Ausdruck beliebig verknüpft werden, um eine detailliertere Beschreibung eines objektabhängigen Relevanzbereichs zu ermöglichen.

Die auswählbaren Informationen können in Form von unabhängigen Informationsobjekten gespeichert sein. Ein Informationsobjekt besteht aus den eigentlichen darzustellenden Informationen und aus objektspezifischen Parametern (Metadaten). Diese Parameter enthalten keine, eine oder mehrere geographische Positionen. Bei diesen geographischen Positionen kann es sich um die georeferenzierten Standorte eines Informationsobjekts oder um beliebige geographische Positionen handeln, die zu einem Informationsobjekt gehören. Weiterhin kann für jeden Standort oder jede Position ein eigener Relevanzbereich definiert werden.

Außerdem kann jegliche Positionsangabe fehlen bzw. durch einen bestimmten 'Positionswert' explizit festlegen, dass es sich um ein 'Unpositioniertes Informationsobjekt' handelt. In diesem Fall hängt die Auswahl dieses Informationsobjekts nicht von seinem Standort ab, wohl aber von möglichen weiteren Auswahl-Kriterien.

Bei der Auswahl eines Informationsobjekts ist in vielen Fällen primär die geographische Position des Benutzers relevant.

Ist für eine bestimmte Position eines Informationsobjekts jedoch ein objektbezogener Relevanzbereich definiert, so kann die zu diesem Objekt gehörige Information nur dann ausgewählt bzw. wiedergegeben werden, wenn sich der Benutzer zum Zeitpunkt der Auswahl-Entscheidung innerhalb des objektbezogenen Relevanzbereichs befindet.

Wird neben der Position auch die Bewegungsrichtung des Benutzers ausgewertet, so kann mit Hilfe eines entsprechenden objektbezogenen Relevanzbereichs eine richtungsabhängige Auswahl dieses Informationsobjekts erfolgen.

Signalisiert eine bestimmte Positionsangabe des Informationsobjekts die Eigenschaft 'Unpositioniertes Informationsobjekt', so kann durch den Mechanismus der objektbezogenen Relevanzbereiche dennoch eine geographische Einschränkung des möglichen Auswahl-Bereichs vorgegeben werden.

Beim Auswahlverfahren mit objektbezogenen Relevanzbereichen wird vom ortsbezogenen Informationssystem laufend eine Positionsangabe (z. B. GPS-Koordinaten oder WLAN-Ortungssystem) ausgewertet. Diese Positionsangabe definiert den aktuellen Bezugspunkt für folgende Auswahl-Vorgänge (z. B. den aktuellen Standort des Benutzers). Die Formatierung der Positionsangabe ist nicht relevant - sie kann z. B. in geographischen Standard-Koordinaten erfolgen. Außerdem können weitere Parameter erfasst werden, die für eine geographische Auswahl relevant sind: beispielsweise die aktuelle Bewegungsrichtung und Geschwindigkeit des Bezugspunkts (also z. B. des Benutzers). Diese Angaben können dem ortsbezogenen Informationssystem von dedizierter Hardware (etwa einem GPS-Empfänger), von kooperierender Software (beispielsweise einem Navigationssystem) oder auf sonstigem Wege bereitgestellt werden.

Die Informationsobjekte, die für eine Auswahl zur Verfügung stehen, können zum Beispiel als unabhängige Informationsobjekte gespeichert sein, in Form einer Datenbank vorliegen, individuell online abrufbar sein, und so weiter.

Informationsobjekte, die einen definierten objektbezogenen Relevanzbereich besitzen, werden nur dann ausgewählt, wenn sich der Bezugspunkt (also z. B. der Benutzer) zum Auswahl-Zeitpunkt in diesem definierten Bereich befindet.

Die objektbezogenen Relevanzbereiche können dabei als absolut positionierte Flächen oder relativ zur Position des Informationsobjekts definiert sein. Letzteres ist besonders dann sinnvoll, wenn ein Informationsobjekt gleichzeitig einer Vielzahl von Positionen angehört (Beispiel: alle Autobahnrasthöfe Bayerns werden dem Benutzer durch eine einheitliche Ansage präsentiert).

Für die Auswertung wird ein boolescher Ausdruck, der einen geographischen Relevanzbereich durch die Verknüpfung von geometrischen Grundformen definiert, ausgewertet. Beispielsweise können die logischen Operatoren UND "&", ODER "I" und NICHT "!" verwendet werden. Während der Auswertung kann jedes Element des booleschen Ausdrucks, also die Repräsentation jeder geometrischen Grundform, die Werte "wahr" oder "unwahr" annehmen. "Wahr" bedeutet, dass der Bezugspunkt sich zum Auswahl-Zeitpunkt innerhalb des Bereichs, der durch diese geometrischen Grundform definiert ist, befindet; andernfalls besitzt das Element den Wert "unwahr".

Ein Informationsobjekt wird nur dann ausgewählt, wenn der gesamte boolesche Ausdruck den Wert "wahr" hat und der Bezugspunkt (also z. B. der Benutzer) sich damit zum Auswahl-Zeitpunkt in dem definierten objektbezogenen Relevanzbereich des Informationsobjekts befindet.

Neben der 'manuellen' Definition eines objektbezogenen Relevanzbereichs kann der Autor der Informationsobjekte deren Auswahl-Freigabe auch auf generelle Situationen einschränken, in denen sich der Benutzer zum Auswahlzeitpunkt befinden muss, damit eine Auswahl des entsprechenden Informationsobjekts erfolgen kann. Diese Situationen müssen durch das ortsbezogene Informationssystem detektiert werden können.

Beispielsweise könnte ein Satz von Situation definiert werden, die mit 'Autobahn', 'Landstraße', 'Stadt' und 'Fußgänger' bezeichnet werden. Das ortsbezogene Informationssystem kann nun feststellen, in welcher Situation sich der Bezugspunkt (also z. B. der Benutzer) befindet und damit eine schnelle Grob-Auswahl aller für eine Auswahl überhaupt in Frage kommenden Informationsobjekten treffen. Die Situationsdetektion könnte zum Beispiel durch die Auswertung der Bewegungsmuster des Bezugspunktes oder durch hinterlegtes, entsprechend markiertes Kartenmaterial erfolgen.

Der Mechanismus der objektbezogenen Relevanzbereiche erlaubt die flexible und individuelle Definition eines geographischen Bereichs für jede Positionsangabe eines Informationsobjekts, in welchem sich ein Bezugspunkt befinden muss, damit die Auswahl dieses Informationsobjekts erlaubt ist. Diese Möglichkeit ist bei den bestehenden ortsbasierten Informationssystemen nach aktuellem Wissensstand nicht vorhanden.

Das Verfahren kann standardisierte Darstellungsformate für die Definition eines objektbezogenen Relevanzbereichs verwenden. Es arbeitet bei Bedarf ausschließlich mit dem geographischen Standard-Koordinatensystem für Positionsangaben, sowie Längen- und Winkelangaben. Die Genauigkeit ist nur durch die externe Quelle beschränkt, welche die Positionsangaben liefert.

Der Einsatzbereich des Verfahrens ist nicht eingeschränkt. Es kann im Freien genauso wie in Räumen angewendet werden. Es ist für beliebige ortsbestimmende Systeme einsetzbar.

Die Definitionen von objektbezogenen Relevanzbereichen ist nicht auf bestimmte Arten von Informationen festgelegt. Informationsobjekte, die beispielsweise eine oder mehrere fest definierte Positionen besitzen, können ebenso objektbezogene Relevanzbereiche besitzen, wie Informationsobjekte, die keiner fixen Position zugeordnet sind (aber beispielsweise dennoch nur in einem wohl definierten geographischen Gebiet relevant sind).

Eine grundlegende Neuerung des Mechanismus der objektbezogenen Relevanzbereiche und der situationsabhängigen Auswahl-Freigabe von Informationsobjekten ist, dass nicht nur die Position, Bewegungsrichtung etc. des Benutzers bzw. die zugehörigen geographischen Auswahl-Parameter zur Laufzeit vom ortsbasierten Informationssystem gewählt und ggf. optimiert werden können. Vielmehr ist es nun für den Autor der Informationsobjekte möglich, bereits bei der Erstellung jedes einzelnen Informationsobjekts in die späteren Auswahlvorgänge optimierend einzugreifen.

Weitere Ausführungsbeispiele der vorliegenden Erfindung werden Bezug nehmend auf die folgenden Figuren erläutert. Es zeigen:

Fig. 1 ein Blockdiagramm eines Informationspunktes gemäß einem Ausführungsbeispiel der vorliegenden Erfindung;

Fig. 2 einen objektbezogenen Relevanzbereich eines ortsbezogenen Informationsobjekts;

Fig. 3 eine Einschränkung eines unpositionierten Infor- mationsobjekts auf einen geographischen Bereich;

Fig. 4  eine Übersicht über den Modul-Aufbau von UMIS;

Fig. 5  ein UMIS-Hauptmodul;

Fig. 6  ein Positionserfassungsmodul;

Fig. 7  ein Objekt-Verwaltungsmodul;

Fig. 8  ein Auswahl-Modul;

Fig. 9  ein Schnittstellenmodul;

Fig. 10  Module der Objekt-Verwaltung;

Fig. 11  eine dreidimensionale Speicherstruktur der Ob- jektlisten-Verwaltung;

Fig. 12  eine Spezifikation des primären und sekundären Auswahlbereichs;

Fig. 13  eine Übersicht über die anfallenden Arbeits- schritte bei der geographischen Auswahl;

Fig. 14  eine Übersicht über das Adaptivity Module;

Fig. 15  Ein- und Ausgabeparameter des Physical Adaptation Modules;

Fig. 16  eine Interaktion des Adaptionsmoduls mit den Hauptkomponenten des UMIS-Systems;

Fig. 17  ein geographisches Parameter-Adaptionsmodul;

Fig. 18  eine Tabelle der charakteristischen Durch- schnittswerte;

Fig. 19  einen prinzipiellen Ablauf bei der Situationsaus- wahl;

Fig. 20  einen Kurvenverlauf der Adaptionskurve;

Fig. 21  Adaptionskurven für die obere Auswahlentfernung des primären Auswahlbereichs für die jeweilige Situation;

Fig. 22  Adaptionskurven für die untere Auswahlentfernung des primären Auswahlbereichs für die jeweilige Situation;

Fig. 23  Adaptionskurven für die obere Auswahlentfernung des sekundären Auswahlbereichs für die jeweilige Situation;

Fig. 24  Adaptionskurven für die untere Auswahlentfernung des sekundären Auswahlbereichs für die jeweilige Situation;

Fig. 25  eine Adaption des oberen Öffnungswinkels des primären Auswahlbereichs;

Fig. 26  eine Adaption des unteren Öffnungswinkels des primären Auswahlbereichs;

Fig. 27  eine Adaption des oberen Öffnungswinkels des sekundären Auswahlbereichs;

Fig. 28  eine sukzessive Adaption der Auswahlentfernungen gemäß der Objektdichte;

Fig. 29  einen Überblick über den Testaufbau;

Fig. 30  eine Benutzeroberfläche des Logfile-Viewers während der Simulation;

Fig. 31  eine erweiterte Benutzeroberfläche des Logfile- Viewers mit einer verbesserten graphischen Wie- dergabe und hinterlegter Straßenkarte;

Fig. 32    geographische Auswahlbereiche beim statischen Auswahlprozess;

Fig. 33    eine Situationsbestimmung mit einem Langzeitfens- ter von 600 Sekunden;

Fig. 34    eine Situationsbestimmung mit einem Langzeitfens- ter von 300 Sekunden;

Fig. 35    eine Situationsbestimmung mit einem Langzeitfens- ter von 180 Sekunden;

Fig. 36    geographische Auswahlbereiche beim dynamischen Auswahlprozess;

Fig. 37    eine Auswahl der Objekte mit dynamischen Auswahl- parametern;

Fig. 38    Objekte in München mit verschiedenen Sichtweiten, Olympiaturm (links) und kleines Kino mit Cafe (rechts);

Fig. 39    Sichthindernisse vor Informationsobjekt;

Fig. 40    eine Situationsbestimmung anhand der Durch- schnittsgeschwindigkeit;

Fig. 41    eine Situationsbestimmung anhand der aktuellen und durchschnittlichen Geschwindigkeit;

Fig. 42    eine Situationsbestimmung anhand der bisherigen Auswahlroutinen unter Einbeziehung der aktuellen Geschwindigkeit;

Fig. 43    obere und untere Auswahlentfernungen des primären Auswahlbereichs für den Situationstyp *Fußgänger*;

Fig. 44    obere und untere Auswahlentfernungen des sekundä- ren Auswahlbereichs für den Situationstyp *Fußgän- ger;*

Fig. 45    einen exemplarischen Eintrag für die situations- abhängige Auswahl (schwarz hervorgehoben);

Fig. 46    ein Ablaufdiagramm der erweiterten Auswahlroutine für die situationsabhängige Auswahl;

Fig. 47    eine prinzipielle Funktionsweise der objektabhän- gigen Relevanzbereiche;

Fig. 48    eine Kreisform und benötigte Parameter;

Fig. 49    einen Winkelbereich und benötigte Parameter;

Fig. 50    ein Kreissegment und die benötigten Parameter;

Fig. 51    grundlegende Bestandteile eines Polygons;

Fig. 52    Unterteilungen der verschiedenen Polygontypen;

Fig. 53    Unterteilungen der verschiedenen Polygontypen;

Fig. 54    eine Anzahl der Schnittpunkte mit den Kanten des Polygons ist für jede Halbgerade, deren Ursprung der Punkt a ist, ungerade und für jede "Halbgera- de, deren Ursprung der Punkt $b$ ist, gerade;

Fig. 55    drei verschiedene Möglichkeiten, wie die Halbge- rade $\overline{r_a}$ die Kanten eine Polygons schneiden kann;

Fig. 56    einen Algorithmus zur Bestimmung, ob der Punkt a innerhalb des Polygons liegt;

Fig. 57    Sonderfälle: bei (a) und (d) wird das Paritätsbit invertiert, bei (b) und (e) wird das Paritätsbit nie invertiert; eine zweifache Invertierung er- folgt bei (c) und (f);

Fig. 58    ein Beispiel für die Definition eines objektab- hängigen Auswahlbereichs;

Fig. 59    unterschiedliche Relevanzbereiche bzw. Auswahl- entfernungen von Informationsobjekten;

Fig. 60    eine Berücksichtigung der Sichtbarkeit eines Objekts durch die objektabhängigen Relevanzberei- che;

Fig. 61    eine gezielte Ansage von Regionsinformationen;

Fig. 62    eine Verwendung der objektabhängigen Relevanzbe- reiche zur Erstellung von Besichtigungstouren;

Fig. 63    eine richtungsabhängige Auswahl von Informations- objekten;

Fig. 64    eine Realisierung der geometrischen Grundformen;

Fig. 65    eine Übersicht über die Implementierung der objektabhängigen Relevanzbereiche;

Fig. 66    eine dynamische Objekt-Aktualisierung des UMIS- Systems zur Laufzeit;

Fig. 67    eine Aktualisierung des Auswahlbereichs durch die Verwendung einer Rasteraufteilung; bereits gela- dene Felder sind schwarz, zu ladende grün und zu löschende rot markiert;

Fig. 68    ein Sequenzdiagramm des Aktualisierungsvorgangs;

Fig. 69    Durchschnittsgeschwindigkeiten für die Bestimmung der aktuellen Benutzersituation;

Fig. 70    eine Situationsbestimmung anhand der Durch- schnittsgeschwindigkeit mit einem Langzeitfenster von 300 Sekunden;

Fig. 71    eine Situationsbestimmung anhand der aktuellen und der durchschnittlichen Geschwindigkeit mit einem Langzeitfenster von 600 Sekunden;

Fig. 72    eine Verwendung der aktuellen Geschwindigkeit und des bisherigen Verfahrens mit einem Langzeitfens- ter von 600 Sekunden zur Bestimmung der aktuellen Situation;

Fig. 73    eine fehlerhafte Auswahl von Objekten mit dynami- schen Auswahlparametern ohne Berücksichtigung der Situation;

Fig. 74    eine situationsabhängige Auswahl von Informati- onsobjekten;

Fig. 75    eine Situationsbestimmung für den neu hinzugefüg- ten Situationstyp *Fußgänger*;

Fig. 76    eine Objekt-Auswahl für den Situationstyp Fußgän- *ger;*

Fig. 77    eine Auswahl von Informationsobjekten mit objekt- abhängigen Relevanzbereichen;

Fig. 78    unterschiedliche Auswahlentfernungen für zwei Informationsobjekte durch die Definition objekt- abhängiger Relevanzbereiche;

Fig. 79    eine entfernungsabhängige Auswahl eines Informa- tionsobjekts für die Wiedergabe von Ansagen mit unterschiedlichem Detailgrad;

Fig. 80    eine richtungsabhängige Auswahl von Informations- objekten; und

Fig. 81    eine Regionsinformation für das Gebiet der Frän- kischen Schweiz.

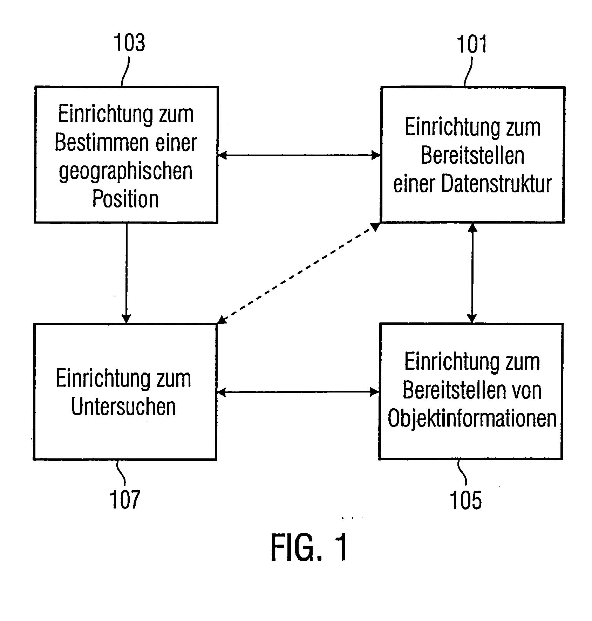

Fig. 1 zeigt ein Blockdiagramm eines Informationspunktes gemäß einem Ausführungsbeispiel der vorliegenden Erfindung.

Der Informationspunkt umfasst eine Einrichtung 101 zum Bereitstellen einer Datenstruktur, wobei die Einrichtung 101 zum Bereitstellen mit einer Einrichtung 103 zum Bestimmen einer geographischen Position des Informationspunktes sowie mit einer Einrichtung 105 zum Bereitstellen von Objektinformationen gekoppelt ist. Die Einrichtung 105 zum Bereitstellen von Objektinformationen kann beispielsweise eine Einrichtung zum Anzeigen von Objektinformationen sein oder umfassen.

Der Informationspunkt umfasst ferner eine Einrichtung 107 zum Untersuchen, ob die geographische Position Informationspunktes in einem geographischen Bereich, der einem Objekt zugeordnet ist, liegt. Die Einrichtung 107 zum Untersuchen ist mit der Einrichtung 103 zum Bestimmen der geographischen Position des Informationspunktes sowie mit der Einrichtung 105 zum Bereitstellen von Objektinformationen gekoppelt.

Gemäß der vorliegenden Erfindung umfasst die Datenstruktur, die von der Einrichtung 101 bereitgestellt wird, Einträge über verschiedene Objekte, wobei jedem Objekt ein begrenzter geographischer Bereich zugeordnet ist, und wobei jedem Objekt eine Objektinformation zugeordnet ist. Bei den Objektinformationen kann es sich beispielsweise um detaillierte Objektbeschreibungen handeln oder um sonstige Informationen, die mit dem Objekt zusammenhängen.

Der begrenzte geographische Bereich, der einem Objekt zugeordnet ist, ist beispielsweise durch geometrische Grundformen definiert und hängt von anderen objektbezogenen Bereichen (Relevanzbereichen) ab.

Die Einrichtung zum Bestimmen der geographischen Position des Informationspunktes kann beispielsweise einen GPS-Empfänger umfassen (GPS: global positioning system), einen Kompass oder eine sonstige Einrichtung, die in der Lage ist, die Position des Informationspunktes, z.B. eines mobilen Informationsterminals, autark zu bestimmen.

Die Einrichtung 107 zum Untersuchen ist ausgebildet, um auf der Basis der erfassten geographischen Position des Informationspunktes zu untersuchen, ob die geographische Position in dem geographischen Bereich, der einem Objekt zugeordnet ist, liegt. Wie es in Fig. 1 gezeigt ist, kann die Einrichtung 107 zum Untersuchen mit der Einrichtung 101 zum Bereitstellen gekoppelt sein, um die Form sowie Ausdehnung des jeweiligen Objektbereichs zu empfangen.

Falls die Einrichtung 107 zum Untersuchen feststellt, dass der Informationspunkt in dem geographischen Bereich des Objekts liegt, so ist die Einrichtung 105 zum Bereitstellen von Objektinformationen ausgebildet, um die Objektinformation, die dem Objekt zugeordnet ist, anzuzeigen. Falls die Einrichtung 107 zum Untersuchen festgestellt hat, dass der Informationspunkt außerhalb des Objektbereichs liegt oder falls das Objekt für den Benutzer uninteressant ist, so wird die Information über das Objekt nicht angezeigt.

Gemäß der vorliegenden Erfindung kann jedem geographischen Bereich, der einem Objekt zugeordnet ist, ferner ein Objektattribut zugeordnet werden. Das Objektattribut kann beispielsweise die Interessen des Benutzers des Informationspunktes widerspiegeln. Handelt es sich bei den in der Umgebung angeordneten Objekten um Objekte, die für den Benutzer uninteressant sind, so kann das Objektattribut beispielsweise zu Null gesetzt werden, so dass eine Anzeige des entsprechenden Objekts beispielsweise unterdrückt wird.

Darüber hinaus kann das Objektattribut eine wählbare Objektrelevanz umfassen, die eine Relevanz des Objekts für einen Benutzer des Informationspunktes, z.B. eines mobilen Terminals, angibt.

Handelt es sich bei den Objekten beispielsweise um fremdsprachige Bücher unterschiedlichen Erscheinungsdatums in einer Bibliothek, so sind beispielsweise südamerikanische Bücher jüngeren Erscheinungsdatums interessanter für den Benutzer als beispielsweise englische Bücher älteren Erscheinungsdatums. Das Objektattribut kann in diesem Fall beispielsweise eine höhere Relevanz der südamerikanischen Bücher jüngeren Erscheinungsdatums und eine niedrigere Relevanz der englischsprachigen Bücher älteren Erscheinungsdatums anzeigen.

Wie es bereits erwähnt worden ist, kann ein geographischer Bereich, der einem Objekt zugeordnet ist, von einer Topologie der Umgebung, in der das Objekt angeordnet ist, abhängen. Darüber hinaus kann ein geographischer Bereich, der einem Objekt zugeordnet ist, von einer Topologie der Umgebung, in dem das Objekt angeordnet ist, und von einem geographischen Bereich, der einem weiteren Objekt zugeordnet ist, abhängen. Die geographischen Objektbereiche werden beispielsweise mit Hilfe der geometrischen Formen beschrieben, wie beispielsweise Kreissegmente, Geraden oder Rechtecke. Darüber hinaus kann, neben einer zweidimensionalen Beschreibung der geographischen Bereiche, auch eine dreidimensionale Beschreibung der geographischen Bereiche zur Verfügung gestellt werden. In diesem Fall können beispielsweise auch unterschiedliche Höhen der Objekte berücksichtigt werden, so dass, im Falle einer Objektverdeckung durch ein weiteres Objekt, eine Information über das verdeckte Objekt unterdrückt wird.

Gemäß einem weiteren Aspekt der vorliegenden Erfindung können die Objektbereiche mehrere Subobjektbereiche aufweisen, die beispielsweise in unterschiedlicher Entfernung zum Objekt liegen, wobei jedem Subbereich unterschiedliche Informationen zugeordnet werden können.

So kann beispielsweise eine Grobinformation über das Objekt Bereichen zugeordnet werden, die am Rande des geographischen Objektbereichs angeordnet ist, und es kann eine detaillierte Objektinformation mit Subbereichen verknüpft werden, die in der Nähe des eigentlichen Objekts angeordnet sind. Nähert sich der Benutzer, so können auf diese Weise immer feinere Informationen über das Objekt angezeigt werden.

Gemäß einem weiteren Aspekt der vorliegenden Erfindung kann die Einrichtung 103 zum Bestimmen der geographischen Objektinformation ausgebildet sein, um eine Geschwindigkeit des Informationspunktes, z.B. des mobilen Informationsterminals, und/oder um eine Geschwindigkeitsrichtung Informationspunktes zu erfassen.

In Abhängigkeit von der Geschwindigkeit des Informationspunktes kann die Einrichtung 107 zum Untersuchen ausgebildet sein, um festzustellen, dass der Informationspunkt in dem geographischen Bereich liegt, wenn der Informationspunkt sich innerhalb eines vorbestimmten Zeitintervalls in dem Objektbereich befindet. Bewegt sich der Benutzer mit einer hohen Geschwindigkeit, so kann die Einrichtung 107 zum Untersuchen feststellen, dass der Benutzer innerhalb eines sehr kurzen Zeitintervalls an dem betroffenen Objekt vorbeifährt. Ist das Zeitintervall ganz kurz, z. B. 2 Sekunden, so kann die Information über das Objekt unterdrückt werden.

Wird beispielsweise die Geschwindigkeitsrichtung des Informationspunktes erfasst, so kann die Einrichtung 107 zum Untersuchen ausgebildet sein, um festzustellen, dass der Informationspunkt in dem geographischen Bereich liegt, wenn ein Objekt in der Geschwindigkeitsrichtung angeordnet ist und beispielsweise vor dem Beobachter angeordnet ist, oder feststellen, dass der Informationspunkt nicht in dem Objektbereich liegt, wenn der Objektbereich beispielsweise hinter dem Informationspunkt liegt. Beispielsweise kann so gewährleistet werden, dass Objekte, die der Benutzer hinter sich gelassen hat, nicht mehr in Betracht gezogen werden.

Gemäß einem weiteren Ausführungsbeispiel der vorliegenden Erfindung kann die Einrichtung 101 zum Bereitstellen beispielsweise ausgebildet sein, um Objektinformationen in Abhängigkeit von einer Geschwindigkeit und/ oder Geschwindigkeitsrichtung bereitzustellen. Alternativ kann die Einrichtung 105 zum Bereitstellen von Objektinformationen ausgebildet sein, um die Informationen in Abhängigkeit von der Geschwindigkeit und/oder Geschwindigkeitsrichtung bereitzustellen und/oder anzuzeigen.

Die Einrichtung 105 zum Bereitstellen von Objektinformationen kann beispielsweise einen Bildschirm oder Lautsprecher umfassen, um die Informationen zur Verfügung zu stellen. Darüber hinaus kann die Einrichtung 105 zum Bereitstellen von Objektinformationen ausgebildet sein, um dem Benutzer die Möglichkeit zur Verfügung zu stellen, benutzerspezifische Objektattribute einzugeben, so dass diese dann beispielsweise der Einrichtung 107 zum Untersuchen zur Verfügung gestellt werden können, so dass Objekte ausgeblendet werden, die den Benutzer nicht interessieren.

Gemäß einem weiteren Aspekt liefert die vorliegende Erfindung eine Einrichtung zum Erzeugen einer Datenstruktur, die Einträge über verschiedene Objekte aufweist, wobei jedem Objekt ein begrenzter geographischer Bereich zugeordnet ist und wobei jedem Objekt eine Objektinformation zugeordnet ist. Die Einrichtung zum Erzeugen der Datenstruktur umfasst eine Einrichtung zum Berechnen von geographischen Objektbereichen (Bereichen) für verschiedene Objekte unter Verwendung von geometrischen Formen, beispielsweise Kreissegmente, Rechtecke usw.

Die Einrichtung zum Erzeugen der Datenstruktur kann ferner eine Einrichtung zum Verknüpfen der Objektinformationen mit den Objektbereichen aufweisen, um die Datenstruktur zu erhalten, wobei die Objektinformationen beispielsweise frei eingebbar sind.

Ein Beispiel ist die Verwendung des Mechanismus der ortsbezogenen Relevanzbereiche in einem ortsbasierten Informationssystem, beispielsweise für touristische Informationen. Die vorhandenen Informationsobjekte, die für eine Auswahl zur Verfügung stehen, könnten individuelle objektbezogene Relevanzbereiche besitzen. Diese ortsbezogenen Relevanzbereiche könnten derart definiert werden, dass diese den Bereich beschreiben, in dem die Informationsobjekte zum Zeitpunkt der Auswahl für den Benutzer sichtbar sind. Bewegt sich also der Benutzer des Informationssystems innerhalb eines objektbezogenen Relevanzbereichs, so steht das dazugehörige Informationsobjekt für eine Auswahl zur Verfügung.

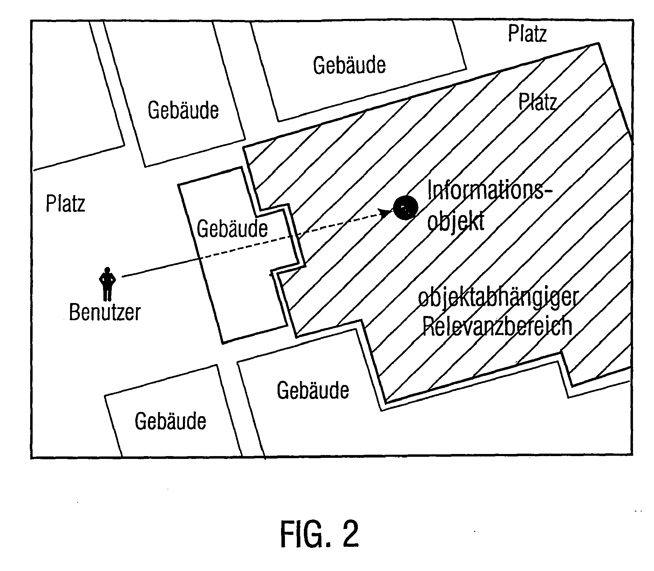

Dieses Verfahren ermöglicht somit, dass bereits vom Autor der Informationsobjekte sichergestellt werden kann, dass die Informationsobjekte zu Beginn der Wiedergabe für den Benutzer sichtbar sind, was bei den bestehenden ortsbasierten Informationssystemen nicht möglich ist. Fig. 2 zeigt ein entsprechendes Beispiel, das den Bereich eines Informationsobjekts darstellt, in dem es sichtbar ist. Solange sich der Benutzer außerhalb des markierten Relevanzbereichs befindet, wird das Informationsobjekt sicher nicht ausgewählt, unabhängig von den aktuellen geographischen Auswahlparametern des Informationssystems.

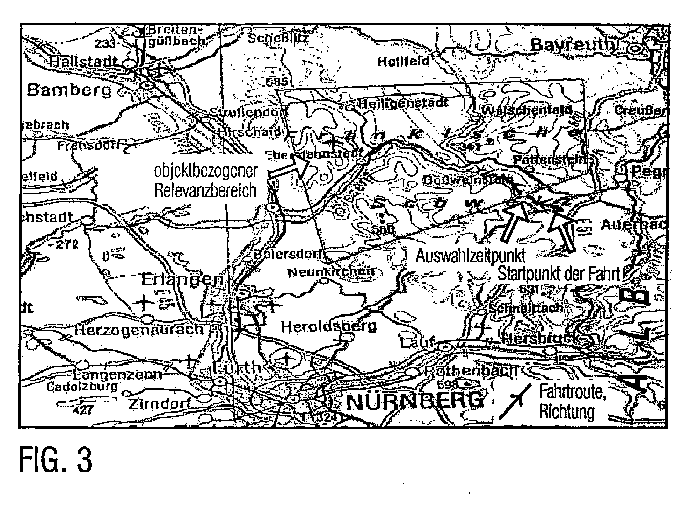

Eine weiterer Anwendungsfall ist die gezielte Wiedergabe von Informationen, die selbst keiner Position zugeordnet werden können, aber dennoch nur in einem wohl definierten geographischen Gebiet relevant sind. Beispielsweise ist in Fig. 3 das Kerngebiet der Fränkischen Schweiz durch ein entsprechendes Relevanzgebiet definiert. Das dazugehörige Informationsobjekt (in diesem Beispiel eine allgemeine Einführung in die Fränkische Schweiz) wird dann ausgewählt, wenn sich der Benutzer in den definierten Relevanzbereich bewegt. Das Informationsobjekt besitzt also keinen festen Standort, sondern wird nur durch seinen Relevanzbereich geographisch beschrieben und eingeschränkt.

Dieses Verfahren funktioniert unabhängig davon, aus welcher Richtung sich der Benutzer in das beschriebene Gebiet bewegt. Außerdem könnte positionierten Informationsobjekten vom Informationssystem ein Vorrang bei der Auswahl eingeräumt werden, da deren Relevanz für den (sich bewegenden) Benutzer in vielen Fällen flüchtiger ist als die eines 'Unpositionierten Informationsobjekts'.

Ein weiteres Anwendungsbeispiel ist, die Auswahl von Informationsobjekten festzulegen auf eine bestimmte Richtung, aus der sich der Benutzer nähert. So ist es beispielsweise möglich, auf einer Straße zwei Informationsobjekte mit individuellen Hinweisen auf den Standort einer Sehenswürdigkeit anzulegen. Je nach dem aus welcher Richtung sich der Benutzer diesen Informationsobjekten nähert, hört er nur die für ihn und seine aktuelle Bewegungsrichtung angepasste Variante der Präsentation.

Schließlich ist mit Hilfe der objektbezogenen Relevanzbereiche auch die Definition von unterschiedlichen Detailstufen der Präsentation eines Informationsobjekts realisierbar. Beispielsweise könnte es eine Variante des Informationsobjekts 'Olympiaturm München' geben, die die Sehenswürdigkeit sehr knapp beschreibt. Diese Variante besitzt einen objektbezogenen Relevanzbereich, der die Innenstadt Münchens explizit ausschließt. Für die selbe geographische Position wird ein zweites Informationsobjekt mit einer detaillierteren Vorstellung des Olympiaturms definiert, dessen Relevanzbereich nur die unmittelbare Umgebung der Sehenswürdigkeit umfasst.

Bewegt sich ein Autofahrer auf der Autobahn auf die Stadt München zu oder umfährt er die Stadt lediglich, so erhält er eine knappe Information über den "Olympiaturm München'. Nähert er sich dagegen unmittelbar dem Olympiaturm oder ist gar zu Fuß in der Innenstadt Münchens unterwegs, so erhält er die passendere Detail-Vorstellung der Sehenswürdigkeit, die sich unmittelbar vor ihm befindet.

Diese Aufgabe lässt sich ebenfalls sehr elegant und mit globalerem Ansatz mit den beschriebenen situationsabhängigen Auswahl-Freigaben lösen.

Im folgenden werden weitere Ausführungsbeispiele der vorliegenden Erfindung beschrieben.

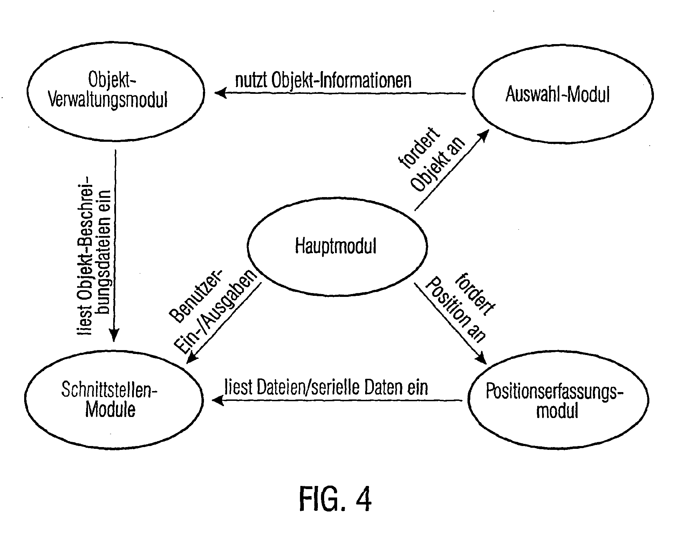

Der erfindungsgemäße Informationspunkt *(Universal Mobile Information System - UMIS)* wurde modular konzipiert. "Modular" bedeutet in diesem Zusammenhang, dass funktionale Einheiten gekapselt sind und ausschließlich über exakt definierte Schnittstellen miteinander kommunizieren. In Fig. 4 sind die festgelegte Einteilung der HauptKomponenten des Systems sowie die globalen Zusammenhänge dieser Einheiten dargestellt.

Das zentrale Modul von UMIS ist das Hauptmodul, welches beim Programmstart als erstes initialisiert wird. Das Hauptmodul koordiniert die Kommunikation der vorhandenen Module über die definierten Schnittstellen. Dem Positionserfassungsmodul kommt die wichtige Aufgabe der Bestimmung der aktuellen Benutzerposition zu, welche auf Anfrage des Hauptmoduls zurückgegeben wird. Für die Selektion eines Informationsobjekts ist das Auswahlmodul zuständig. Anhand vorgegebener geographischer und abstrakter Auswahlparameter erfolgt die Auswahl eines Informationsobjekts. Die zur Verfügung stehenden Objekte werden vom Objektinformations-Modul gezielt bereitgestellt. Dieses Modul durchsucht beim System-Start beliebige Ordner nach gültigen Objektbeschreibungsdateien. Die gültigen Dateien werden eingelesen und in einer mehrdimensionalen Struktur abgelegt, um kurze Zugriffszeiten bei gezielten Anfragen zu gewährleisten. Die vom Betriebssystem bereitgestellten Ein- und Ausgaberoutinen sind in verschiedenen Schnittstellen-Modulen gekapselt, um eine leichte Portierung von UMIS auf andere Plattformen zu erreichen. Diese Routinen greifen z. B. auf das Datei-system und auf Hardware-Schnittstellen zu. Eine andere Aufgabe ist die Erfassung von Benutzer-Eingaben und die Ausgabe von Audio- und Multimedia-Inhalten.

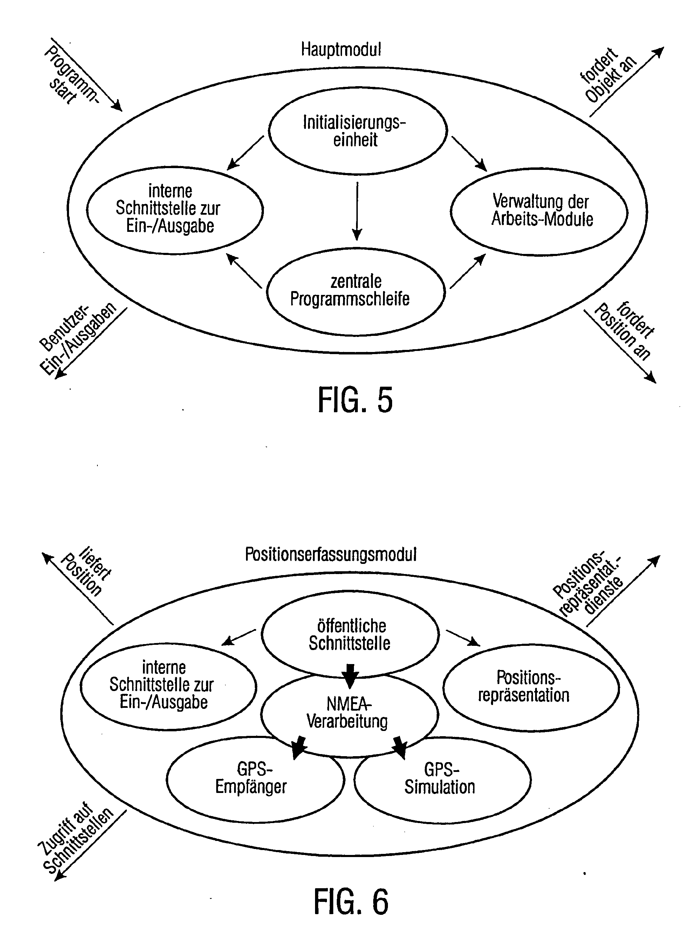

Das Hauptmodul initialisiert sämtliche benötigten Arbeitsmodule nach dem Programmstart. Der Programmstart erfolgt durch das Betriebssystem Windows. Nach der Initialisierung ist es für die Koordination der einzelnen Arbeitsmodule verantwortlich. Eine weitere Aufgabe dieser Einheit besteht darin, die Benutzereingaben sowie die Ausgabe der Audio- und Multimediainhalte zu steuern. Die verschiedenen Bestandteile des Hauptmoduls und deren Aufgaben zeigt Fig. 5.

Die Ausführung des Hauptmoduls erfolgt unmittelbar nach dem Start von UMIS. Es stellt ab diesem Zeitpunkt den Programm-Kern dar. Als erstes wird die Initialisierungseinheit aufgerufen, die sämtliche benötigten Arbeitsmodule, sowie die internen Schnittstellen zur Ein- und Ausgabe erzeugt und initialisiert. Anschließend wird die zentrale Programmschleife aufgerufen, die ab diesem Aufruf sämtliche Entscheidungen zur Laufzeit trifft. In der Programmschleife erfolgt eine zyklische Abfrage nach möglichen Benutzereingaben. Falls diese vorliegen werden sie sofort abgearbeitet, um kurze Reaktionszeiten zu ermöglichen. Weiterhin fordert die Schleife die aktuelle Benutzerposition an und leitet diese an das Objektauswahl-Modul weiter, das anhand der vorhandenen Auswahlparameter und des aktuellen Standorts ein neues Informationsobjekt auswählt. Die Wiedergabe des ausgewählten Objekts wird dann in der Programmschleife initiiert. Die grundlegenden Ein-/Ausgaben übernimmt das Betriebssystem Windows.

Dem Positionserfassungsmodul obliegt die wichtige Aufgabe die aktuellen Positionsdaten des Benutzers zu erfassen und an das Hauptmodul zurückzuliefern. Die Positionsdaten enthalten neben der eigentlichen Position als Längen- /Breitengrad-Paar auch Informationen zur Geschwindigkeit und Fortbewegungsrichtung des Benutzers. In Fig. 6 sind die internen Einheiten dieses Moduls dargestellt.

Der standardisierte Zugriff auf die Dienste des Positionserfassungsmoduls erfolgt über die öffentliche Schnittstelle. Diese greift auf die NMEA-Verarbeitungseinheit zu, um die aktuellen Positionsdaten zu bekommen. Die NMEA-Verarbeitungseinheit verifiziert und verarbeitet die von vielen GPS-Empfängern ausgegebenen "NMEA-konform" formatierten Positionsangaben. Die NMEA-Datensätze können unabhängig von der tatsächlichen Quelle ausgewertet werden. Eine Möglichkeit, NMEA-Datensätze zu empfangen, ist die Verwendung eines realen GPS-Empfängers der Marke "Garmin". Eine andere Möglichkeit besteht darin, aufgezeichnete oder synthetisch erzeugte GPS-Signale über die GPS-Simulationseinheit einzulesen. Im Simulationsmodus arbeitet UMIS bis auf das Einlesen der GPS-Daten analog zur Live-Benutzung. Die hierarchische Realisierung des Moduls durch abgeleitete Unter-Module erlaubt die Erfassung dieser Daten auf verschiedene Arten.

Die primäre Aufgabe der Positionsrepräsentations-Einheit ist die Speicherung der Positionsdaten im geographischen Standard-Koordinatensystem. Weiterhin enthält sie die gesamte Ein- und Ausgabelogik zur Verarbeitung von Koordinaten in verschiedensten Formatierungen. Ein Grund für die Notwendigkeit dieser Einheit besteht darin, dass UMIS intern mit einer abstrakten Darstellung der Positionsdaten arbeitet. Diese interne Darstellung ist in bestimmten Fällen ungeeignet. Ein Beispiel ist die Ausgabe des aktuellen Standorts an den Benutzer, der die gewohnten geographischen Standard-Koordinaten erwartet. Der Zugriff auf diese Möglichkeit der Positionsspeicherung und -repräsentation ist allen Bereichen und Modulen in UMIS erlaubt.

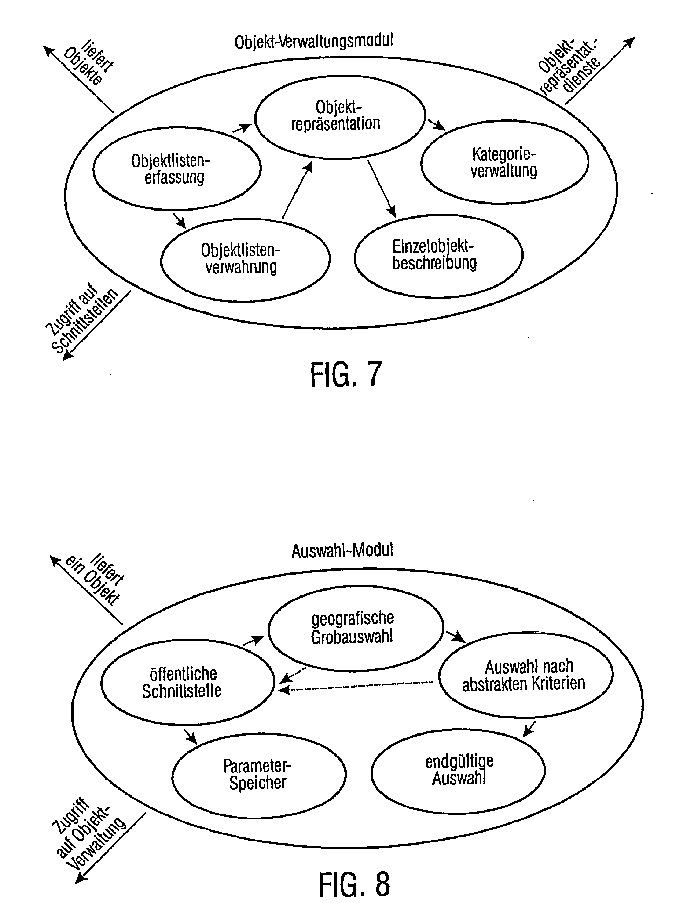

Aufgabe des Objekt-Verwaltungsmoduls ist, die erfassten Informationsobjekte in einer systematischen Struktur abzulegen und dadurch einen schnellen Zugriff auf diese Objekte zu gewährleisten. Eine Übersicht über die enthaltenen Bestandteile dieses Programmteils zeigt Fig. 7.

Die systematische Ablage der Objekte erfolgt in der Objektlisten-Verwaltung. Die Objekte sind in der Regel durch ihre geographische Position eindeutig bestimmt. Für die interne Speicherung der Objekte wurde eine dreidimensionale Datenbank-Struktur entwickelt, die als primären Schlüssel die Positionsangabe zur Objektauswahl verwendet. Weiterhin ist die Speicherung von unpositionierten Informationsobjekten möglich.

Die Objektlisten-Erfassung ist für die Initialisierung dieser Datenstruktur verantwortlich. Diese Einheit durchsucht einen gegebenen Zweig des Dateisystems nach gültigen Objektbeschreibungsdateien. Die in den Objekt-Dateien spezifizierten Parameter werden verwendet, um das Objekt in der dreidimensionalen Struktur zu registrieren.

Jedes registrierte Objekt wird durch seine Objekt-Repräsentation dargestellt. Diese enthält alle Parameter, die für die grundlegenden Schritte des Auswahlprozesses benötigt werden, und einen Verweis auf die Objektbeschreibungsdatei. Durch das Modul der Einzelobjektbeschreibung ist der Zugriff auf diese Informationen möglich. Die Objektrepräsentationsdienste sind allen externen Einheiten von UMIS zugänglich. Diese Dienste erlauben es, dass Objekte gezielt angesprochen oder gespeichert werden können.

Jedem Objekt ist ein individueller Pfad in der dynamisch erzeugten Kategorie-Hierarchie zugeordnet. Diese Pfade, welche aus Kategorie-Namen bestehen, werden für die interne Nutzung in Speicherplatz sparende Index-Listen umgewandelt. Die eindeutige, bidirektionale Umwandlung zwischen Pfadname und Index-Listen erfolgt durch das Modul zur Kategorie-Verwaltung.

Die primäre Aufgabe des Auswahl-Moduls ist die Selektion eines Informationsobjekts. Fig. 8 zeigt den Auswahlprozess, der in mehrere Schritte gegliedert ist. Im nächsten Abschnitt wird eine detaillierte Beschreibung dieses Vorgangs behandelt.

Den Auftrag zur Selektion eines Objekts nach vorgegebenen Kriterien erhält das Auswahl-Modul über seine öffentliche Schnittstelle. Zur Ausführung des Auftrags ist weiterhin die Position des Benutzers notwendig.

Anschließend ermittelt die geographische Grobauswahl die Menge der Objekte, die grundsätzlich für eine Selektion in Frage kommen. Zu diesem Zweck wird auf die dreidimensionale Datenbank-Struktur zurückgegriffen, welche im Objekt-Verwaltungsmodul abgelegt ist. Die ermittelte Menge von Informationsobjekten wird der Einheit zur Auswahl nach abstrakten Kriterien übergeben. Diese schränkt die Menge der in Frage kommenden Objekte durch die Anwendung abstrakter Auswahl-Kriterien weiter ein. Zu den abstrakten Kriterien zählen beispielsweise die bisherigen Wiederholungen eines Objekts, die maximal erlaubte Anzahl der Wiederholungen, die vom Benutzer festgelegte Kategoriegewichtung und viele weitere.

Falls aus dem Selektionsprozess nur ein Objekt übrig bleibt, gilt dieses als ausgewählt. Das Modul zur endgültigen Auswahl tritt dann in Aktion, wenn keine eindeutige Wahl getroffen werden kann, obwohl alle relevanten Kriterien beachtet wurden. In diesem Fall wird nach fest im Programm verankerten Regeln eine willkürliche Wahl aus der Liste der in Frage kommenden Objekte getroffen. Ist allerdings kein gültiges Objekt nach einem Auswahl-Durchgang verfügbar, erfolgt die sukzessive Erhöhung der gesetzten geographischen Grobauswahl-Limits bis an die absoluten Maximalwerte. Der Auswahlprozess wird dabei nach jeder Anpassung der Selektionsparameter neu gestartet.

Im Parameter-Speicher befinden sich die vom Benutzer konfigurierbaren Grenzwerte, die vom Auswahlmodul zur Selektion benötigt werden. Die Grenzwerte bestimmen zum Beispiel die geographische Lage des Selektionsgebiets anhand von minimalen und maximalen Distanzen und Öffnungswinkeln sowie die untersten zulässigen Grenzwerte für Kategorie-Bewertungen.

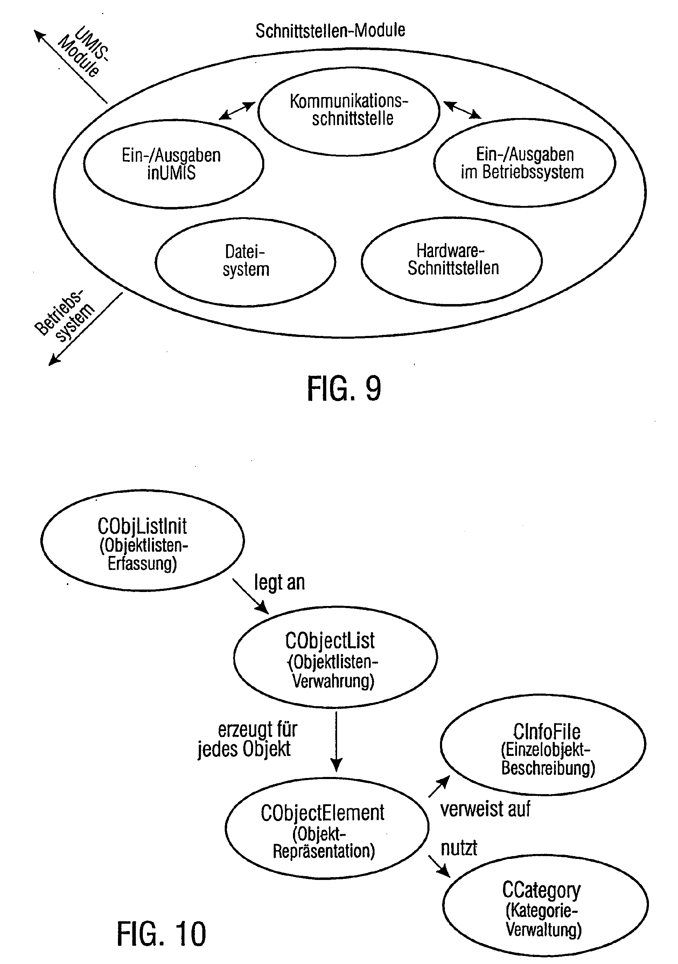

Das Schnittstellen-Modul ist in drei separate FunktionsGruppen unterteilt, die in Fig. 9 dargestellt sind. Den Zugriff auf die gesamte in UMIS benötigte Funktionalität des Dateisystems ist durch das erste Modul möglich. Dazu zählen beispielsweise Befehle zum Ermitteln und Setzen von Verzeichnissen genauso wie Routinen zum Einlesen von Text-Dateien. Weiterhin sind Funktionen vorhanden, die die Arbeit mit Verzeichnis- und Dateinamen unabhängig vom tatsächlichen Betriebssystem vereinheitlichen.

Innerhalb des Programms greift UMIS an fest definierten Stellen auch auf die Hardware-Schnittstellen zu. Die Funktionalität des Schnittstellen-Moduls wird nur bei der Realisierung des Positionserfassungsmoduls für Geräte zur Standortbestimmung benötigt. Für die Kommunikation mit der Oberfläche ist die zunächst aufwändig erscheinende Struktur aus den Einheiten Ein-/Ausgaben in UMIS, Kommunikationsschnittstelle und Ein-/Ausgaben im Betriebssystem zuständig. Der Vorteil ist die unkomplizierte Umsetzung von UMIS auf andere Betriebssysteme und Benutzer-Oberflächen.

Das Modul Ein-/Ausgaben in UMIS kapselt auf der ANSI-konformen Software-Seite der Schnittstellen-Konstruktion die Ein- und Ausgaben. Es bleibt für das System unabhängig vom dahinterliegenden Betriebssystem gleich. Die Funktionalitäten, die die direkten Ein-/Ausgaben im Betriebssystem realisieren, sind in einem eigenen Modul gekapselt. Den Informationsaustausch zwischen dem ANSI-konformen Hauptmodul von UMIS und dem betriebssystemabhängigen Teil übernimmt eine Kommunikationsschnittstelle.

Die Objektverwaltung hat die Aufgabe, die vorhandenen Informationsobjekte zu erfassen und in einer geordneten Form abzuspeichern. Ein schneller Zugriff auf Objekte, die sich in relativer Nähe zur aktuellen Benutzerposition befinden, ist dabei entscheidend. Aus diesem Grund spielt die geographische Position eines Informationsobjekts eine wichtige Rolle bei dieser systematischen Ablagestruktur.

Fig. 10 zeigt die Module, aus denen sich die Objektverwaltung zusammensetzt, und gibt einen Überblick über die prinzipiellen Aufgaben und Beziehungen, die zwischen diesen Modulen bestehen. Die dargestellten Einheiten werden im Folgenden im Detail beschrieben.

Jedes Informationsobjekt wird durch eine Objekt-Beschreibungsdatei definiert. Diese Datei enthält folgende relevanten Datenfelder:

- **Title**
  Dieses Datenfeld beinhaltet einen kurzen Titel des Informationsobjekts.
- **Description**
  Hier ist die Angabe einer ausführlichen Beschreibung des Objekts möglich.
- **Address**
  Das Address-Datenfeld soll dem Benutzer die Möglichkeit geben, selbständig weitere Informationen über das Objekt einzuholen. Die Form der Adresse ist dabei nicht auf eine postalische Adresse eingeschränkt. So ist zum Beispiel die Angabe einer Internet-Adresse möglich.
- **Category**
  Jedes Objekt muss einem eindeutigen Pfad durch die Kategorie-Hierarchie zugeordnet sein. Die Angabe mindestens einer Kategorie-Stufe ist dabei erforderlich. Der interne Kategorie-Baum wird dynamisch anhand dieses Datenfelds aufgebaut.
- **Position**
  Die Angabe der Position eines Informationsobjekts erfolgt in geographischen Standard-Koordinaten (Längen- /Breitengrad). Bei der Angabe von mehreren Positionen wird intern für jede Positionsangabe ein eigenständiges Objekt angelegt. Falls in diesem Datenfeld keine Position angegeben wird oder das besondere Koordinatenpaar (90*s, 180*w) in die Liste der Positionen aufgenommen wird, dann wird das Objekt als "unpositioniertes Objekt" erfasst. "Unpositionierte Objekte" werden bei der Auswahl berücksichtigt, wenn keine Objekte mit fest definierten Positionen verfügbar sind.
- **Importance**
  Dieses Datenfeld gibt die relative Wichtigkeit eines Objekts in Relation zu den anderen verfügbaren Objekten an. Ein hoher Wert bedeutet eine hohe relative Wichtigkeit.
- **MaxRepetitions**
  Dieser Wert definiert die maximal zulässige Anzahl der Wiederholungen für die Wiedergabe eines Objekts. Die Angabe des Werts 0 bedeutet eine unbeschränkte Anzahl an möglichen Wiederholungen. Falls kein Wert definiert ist, wird der Standard-Wert 0 angenommen.
- **MediaFolder**
  In diesem Datenfeld ist der Ordner angegeben, der die Audio- und HTML-Seiten enthält. Die Angabe des Pfadnamens vom Ordner kann dabei relativ zum Verzeichnis der Objektbeschreibungsdatei (z. B. "../../Media4") oder absolut (z. B. "C:\Media4") erfolgen.
- **SoundFileName**
  Dieses Feld enthält den Namen der Audio-Datei, das bei der Auswahl des Objekts wiederzugeben ist.
- **HTMLFileName**
  Der Dateiname der HTML-Datei, die bei einer erfolgreichen Auswahl des Objekts anzuzeigen ist, ist in diesem Datenfeld definiert. Bei einer falschen oder fehlenden Angabe erfolgt die Anzeige einer Standard-HTML-Datei.
- **NoInterruption**
  Durch die Angabe des Werts 1 kann der Autor des Informationsobjekts eine Unterbrechung der Wiedergabe durch "relevantere" Objekte verhindern.

Die Konzeption des verwendeten Datei-Formats erlaubt eine leichte Erstellbarkeit der Beschreibungsdateien. Sowohl die Erzeugung als auch die Einsicht ist ohne proprietäre Hilfsprogramme möglich.

Die Aufgabe des Moduls *CObjListInit* ist die Erfassung sämtlicher gültiger Beschreibungsdateien und die jeweilige Erzeugung einer Objekt-Repräsentation *CObjectElement. CObjListInit* übergibt die Objekt-Repräsentationen an das Objektlisten-Verwahrungstool *CObjectList.*

Eine Objekt-Repräsentation enthält zur Laufzeit von UMIS alle relevanten Daten eines Informationsobjekts. Die benötigten Informationen sind im Folgenden aufgelistet:

- geographische Position des Objekts

- numerische interne Repräsentation des Kategorie-Pfads

- maximal erlaubte Anzahl der Wiederholungen

- relative Wichtigkeit des Objekts

- gesamter Pfad der zugehörigen Objekt-Beschreibungsdatei

Bei der Ausführung des Objekt-Repräsentationsmoduls CObjectElement sind zwei konträre Kriterien entscheidend. Zum einen müssen sämtliche Informationen, die für den Auswahlprozess benötigt werden, sofort verfügbar sein. Aus diesem Grund werden diese Parameter im Arbeitsspeicher gehalten, wodurch langsame und Strom fressende Zugriffe auf externe Datenträger entfallen. Das zweite, konträre Kriterium, ist den benötigten Arbeitsspeicher nach Möglichkeit klein zu halten. Deshalb enthält die Objekt-Repräsentation nur die für den eigentlichen Auswahl-Vorgang benötigten Auswahlparameter und einen Verweis auf die Beschreibungsdatei. Durch die Angabe des Pfadnamens der Beschreibungsdatei können die Daten, die nur nach einer erfolgreichen Auswahl eines Objekts benötigt werden, jederzeit nachgeladen werden. Weiterhin findet eine Umwandlung des Kategorie-Pfads in eine interne, Speicherplatz sparende Index-Liste statt.

Das Konzept erlaubt somit eine große Menge an Objekten beim Systemstart zu erfassen und diese zur Laufzeit verfügbar zu halten.

Die Objekt-Repräsentationen werden in einer internen Datenstruktur abgelegt. Mit dem Objekt-Verwaltungsmodul CObjectList ist ein schneller und effizienter Zugriff auf dies Daten möglich. Bei der Auswahl eines Objekts ist seine Position das wichtigste Kriterium. Aus diesem Grund benutzt *CObjectList* eine dreidimensionale Datenstruktur, um die Objekte abzulegen. Die überdeckte Fläche wird zunächst schachbrettartig aufgeteilt. Alle Objekte, deren Position in eines der erzeugten Rechtecke fallen, werden ähnlich den Stockwerken eines Hochhauses auf dem jeweiligen Feld "aufgestapelt". Die ersten beiden Dimensionen repräsentieren die Längen- und Breitengradabschnittsindizes des Rechtecks, wo das Objekt abgelegt wird. Die dritte Dimension bezeichnet die Position des Objekts in einem Feld und ist vergleichbar mit den Stockwerken eines Hochhauses, weil die Objekte in einem erzeugten Rechteck ähnlich den Stockwerken eines Hochhauses "aufgestapelt" werden. Die Grenzen des überdeckten Bereichs sind nicht statisch und können bei der Erzeugung der Datenstruktur definiert werden. Die beiden Koordinaten-Bereiche des definierten Bereichs werden typischerweise in 100 Abschnitte zerlegt.

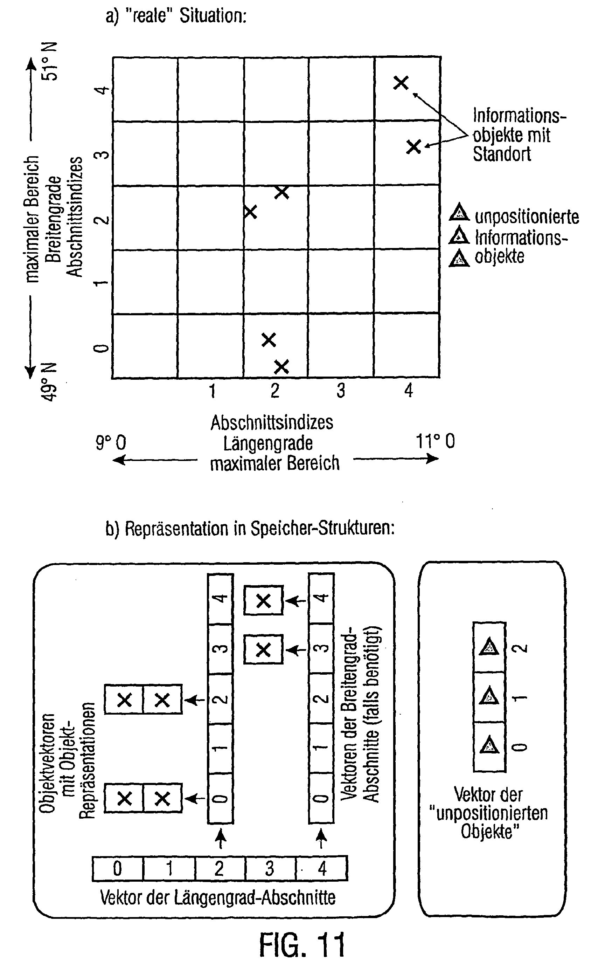

"Unpositionierte" Objekte, die keine geographische Position besitzen, sind in einer separaten eindimensionalen Struktur abgelegt. Fig. 11 verdeutlicht die Ablage von Objekten auf einer aufgeteilten Fläche und zeigt deren Repräsentation in der beschriebenen dreidimensionalen Speicher-Struktur.

Aus Gründen der Effizienz ist es wichtig, Objekt-Repräsentationen während der Bearbeitung nicht unnötig zu kopieren und sie mehrmals im Speicher zu halten. Mit der Hilfe von "**Objekt-Handles**" kann dieses Problem umgangen werden. Diese besitzen lediglich einen Verweis auf die zugrundeliegende Objekt-Repräsentation, die nur im Modul *CObjectList* tatsächlich existiert.

Folgende Informationen beinhaltet ein "Object-Handle" in der aktuell implementierten Form:

- Längengrad-Index

- Breitengrad-Index

- Objektvektor-Index

- exakte Position

- Gültigkeitssiegel

In der dreidimensionalen Speicher-Struktur ist ein Speicherort eines Objekts durch Längengrad-, Breitengrad- und Objektvektor-Index eindeutig definiert. Falls sich die Indizes der bereits erfassten Objekte aufgrund von neuen, während der Laufzeit erfassten Objekte ändern, so kann durch die exakte Position die korrekte Objekt-Repräsentation zum jeweiligen "Object-Handle" bestimmt werden. Das Gültigkeitssiegel bestimmt, ob ein "Object-Handle" eine gültige Repräsentation darstellt. Die Notwendigkeit, ein "Object-Handle" als ungültig zu markieren, findet beispielsweise im Auswahl-Modul Verwendung. In diesem Modul kann es in den Auswahlroutinen vorkommen, dass kein gültiges Objekt ermittelbar ist.

Die Auswahlparameter lassen sich in abstrakte und geographische Parameter unterteilen. In dieser Arbeit liegt der Schwerpunkt bei den geographischen Parametern. Die gegenwärtige Position des Benutzers wird ergänzt durch die Bewegungsrichtung und die Geschwindigkeit. Die minimale und maximale Entfernung, die ein Informationsobjekt vom aktuellen Standort besitzen darf, ist durch den Benutzer anpassbar. Weiterhin kann er den minimalen und maximalen Winkel, unter welchem ein Objekt relativ zur Fahrtrichtung erscheinen darf (gilt spiegelsymmetrisch zu beiden Seiten), anpassen.

Bei den abstrakten Auswahlparametern ist die maximal erlaubte Anzahl der Wiederholungen und die relative Wichtigkeit eines Objekts durch den Autor des Informationsobjekts bestimmt. Die restlichen Parameter sind durch den Benutzer anpassbar. Ein Objekt erfüllt die minimale Auswahl-Schwelle für Kategorie-Bewertungen, wenn jede Einzelkategorie des objekteigenen Kategorie-Pfads höher als die Auswahl-Schwelle gewichtet ist. Bei der mittleren Gewichtung der Kategorien ist es wichtig, dass der Mittelwert der Bewertungen aller Einzelkategorien des Kategorie-Pfads möglichst hoch ist. Die Anzahl der Wiederholungen eines Objekts seit dem Systemstart findet bei der Auswahl ebenfalls Berücksichtigung.

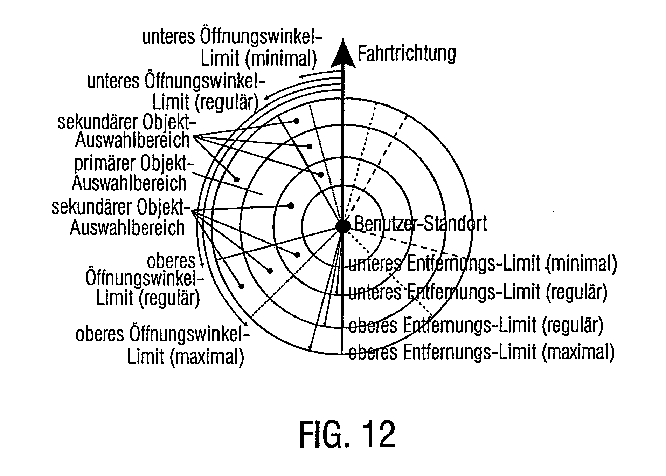

Beim Auswahlprozess werden zwei geographische Objekt-Auswahlbereiche verwendet. Der für den Benutzer relevantere Bereich wird im Folgenden als primärer Auswahlbereich bezeichnet. Bei einem erfolglosen Auswahl-Vorgang im primären Auswahlbereich werden die Auswahlparameter sukzessive an den sekundären Bereich angepasst. Fig. 12 stellt den primären sowie den im Bedarfsfall nach und nach erweiterten sekundären Auswahlbereich dar.

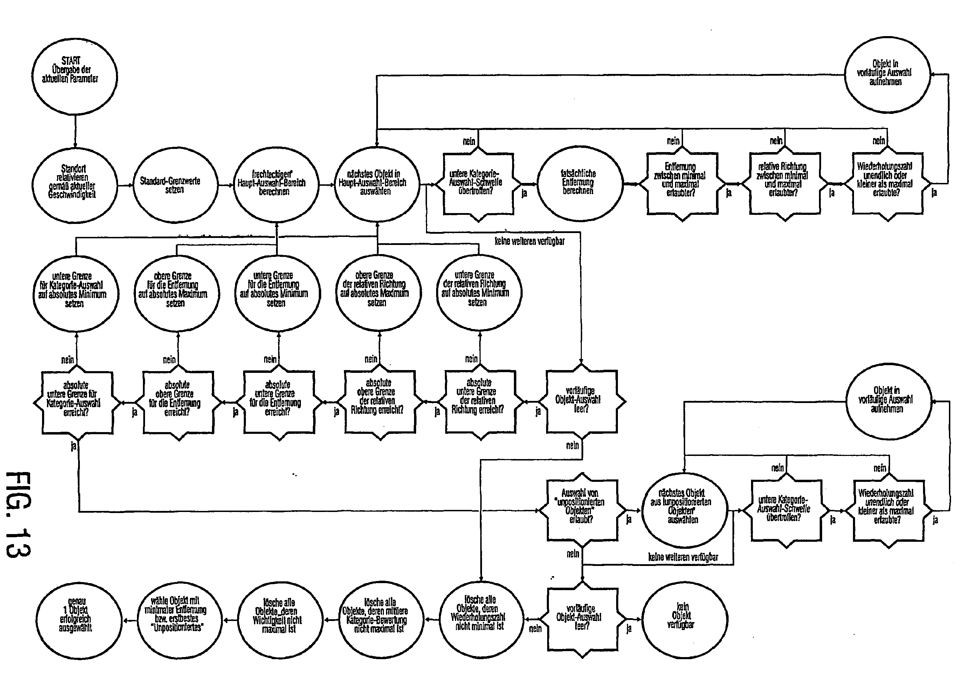

Eine Übersicht sämtlicher anfallender Arbeitsschritte und Entscheidungspunkte verdeutlicht Fig. 13. Der Prozess gliedert sich in vier größere Einheiten:

- **Initialisierung**

  Bei der Initialisierung werden zunächst alle Parameter gesetzt. Anschließend erfolgt die Relativierung des Auswahlbereichs in Abhängigkeit von der aktuellen Geschwindigkeit und Fahrtrichtung. Durch diese Maßnahme wird beispielsweise verhindert, dass die Beschreibung eines Objekts während der Fahrt auf der Autobahn präsentiert wird, obwohl es wegen der hohen Geschwindigkeit zum Zeitpunkt des tatsächlichen Starts der Audio-Wiedergabe bereits hinter dem Benutzer liegen kann. Die Umsetzung der Relativierung beruht auf der Verlegung des Bezugspunktes entsprechend der aktuellen Geschwindigkeit ("virtuelle Benutzerposition"). Es gibt die Möglichkeit, für die Relativierung die untere und obere Geschwindigkeitsgrenze sowie eine maximale Anpassungsentfernung anzugeben. Unterhalb dieser Grenze erfolgt keine Relativierung. Zwischen der minimalen und maximalen Grenze wird die zu addierende Distanz proportional angepasst. Die maximale Relativierungsentfernung wird bei Überschreitung der oberen Grenze benutzt.

- **Geographische Grobauswahl**

  Die Geographische Grobauswahl liefert aus der Menge der registrierten Objekt-Repräsentationen diejenigen, die für die geographischen Auswahlparameter überhaupt in Frage kommen. Zu diesem Zweck wird ein "rechtwinkliger" geographischer Bereich definiert. Zur aktuellen Position wird die maximale Entfernung, die ein Objekt besitzen darf, in jede Himmelsrichtung "aufaddiert". Anschließend erfolgt die Übergabe des Rechtecks, das durch die Minimal- und Maximal-Positionen definiert ist, an das Objektlisten-Verwaltungsmodul *CObjectList. CObjectList* liefert sukzessive nur die in Frage kommenden Objekte zurück.

- **Auswahl nach geographischen und abstrakten Kriterien**

  Die vorselektierten Objekte müssen nun auf die Einhaltung der geographischen und abstrakten Mindest-Anforderungen überprüft werden. Ein Objekt, das alle diese Kriterien erfüllt, wird der vorläufigen Auswahl hinzugefügt.

  Konnte nach der Vorauswahl kein gültiges Objekt aus der Menge der verfügbaren gefunden werden, so erfolgt in einer festgelegten Reihenfolge die Anhebung der Auswahlparameter auf ihre Maximalwerte. Ein erneuter vollständiger Vorauswahl-Prozess bis zu diesem Punkt wird durchlaufen, wenn ein neu gesetzter Wert vorliegt. Falls kein gültiges Objekt trotz maximaler Selektionsparameter vorliegt, erfolgt die Abfrage, ob der Benutzer "unpositionierte Objekte" zur Auswahl freigegeben hat. Sind "unpositionierte Objekte" erlaubt, dann werden alle diese Objekte auf Einhaltung der abstrakten Kriterien wie maximale Wiederholungszahl und Kategorie-Gewichtung überprüft. Erfüllt wiederum kein Objekt die Anforderungen oder der Benutzer hat die Auswahl von "unpositionierten Objekten" untersagt, dann wird der Auswahlprozess für die aktuelle Position erfolglos abgebrochen.

- **Endgültige Auswahl**

  Alle Objekte, die sich zu diesem Zeitpunkt in der vorläufigen Objekt-Auswahl befinden, erfüllen die gestellten Mindestanforderungen. Ziel des letzten Auswahlschritts ist es, anhand von relativen Kriterien die vorselektierten Objekte untereinander zu vergleichen und ein Objekt auszuwählen. Zu den relativen Kriterien zählt die bisherige Anzahl an Wiederholungen, die mittlere Gewichtung der Kategorien sowie die relative Wichtigkeit, welche der Autor definiert hat. Das Objekt, das nach dem abschließenden Schritt übrig bleibt, wird dem Auftrag gebenden Modul zur Wiedergabe zurückgeliefert.

Bei der Wahl der geographischen Auswahlparameter spielt die Umgebung eine entscheidende Rolle. So empfiehlt es sich beispielsweise bei einer Autofahrt auf einer Landstraße oder Autobahn einen größeren Auswahlbereich zu definieren. Der größere Auswahlbereich hat zwei entscheidende Vorteile. Falls der Benutzer sich entscheidet, das Informationsobjekt vor Ort zu besichtigen, dann ist ihm durch die rechtzeitige Ansage beispielsweise die Möglichkeit gegeben, die nächste günstige Ausfahrt zu nehmen. Der zweite gravierende Vorteil ist die räumliche Verteilung der Objekte auf ländlichem Gebiet. Die Distanzen zu Informationsobjekten in einer solchen Umgebung sind größer als beispielsweise in einer Stadt, wo die Objektdichte größer ist.

Innerhalb einer Stadt ist ein großer Auswahlbereich aufgrund der besonderen Topologie unangemessen. Wie bereits hervorgehoben, ist die Dichte von Informationsobjekten typischerweise erheblich größer als außerhalb einer Stadt und legt somit einen kleinen Auswahlbereich nahe. Dadurch werden dem Benutzer nur die Objekte, die sich in unmittelbarer Nähe befinden, zur Auswahl angeboten.

In der ersten Version von UMIS erfolgte die geographische Auswahl anhand statischer Parameter, die nur vor dem Systemstart definierbar waren. Das Hauptproblem bei dieser Lösung ist die sich ständig ändernde Umgebung und damit die Notwendigkeit, die geographischen Parameter an die neuen Situationen des Benutzers anzupassen. Die Adaption der Parameter an die neue Situation ist aber nur vor dem Systemstart möglich und somit ein regelmäßiger Neustart notwendig. Aus diesem Grund wurde ein dynamisches Auswahlverfahren entwickelt, das die geographischen Parameter ständig an die aktuelle Situation des Benutzers adaptiert. Die entsprechenden Routinen sind im **Physical Adaptation Module** implementiert.

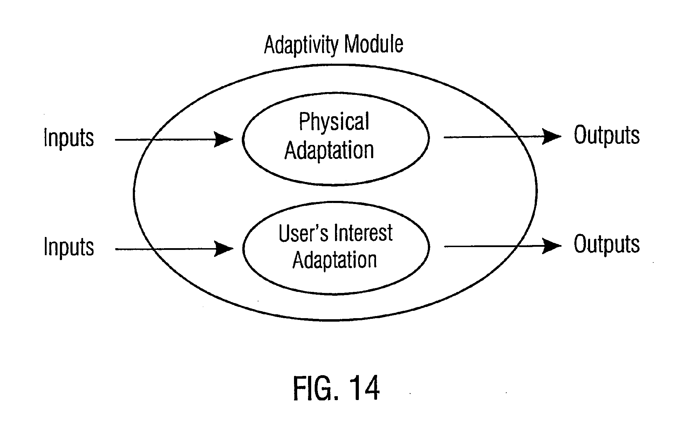

Weiterhin wurde im Rahmen dieser Erweiterung eine dynamische Adaptionsfähigkeit an die Interessen des Benutzers entwickelt. Dieses Modul versucht anhand der Interaktion des Benutzers bei der Wiedergabe eines Informationsobjekts Rückschlüsse auf seine Vorlieben zu ziehen und die entsprechenden Kategoriepfade höher oder niedriger zu bewerten. Eine Interaktion des Benutzers kann beispielsweise der Abbruch einer Wiedergabe eines Objekts sein, was in diesem Fall die Herabstufung der betroffenen Kategorien bedeutet, die zu diesem Objekt gehören. Das **User's Interest Adaptation Module** beinhaltet die entsprechenden Routinen. Diese beiden Einheiten sind, wie in Fig. 14 dargestellt, im **Adaptivity Module** gekapselt. In den folgenden Abschnitten wird das **Physical Adaptation Module** bezüglich seiner Funktionalität und Struktur detaillierter beschrieben.

Das Ziel des *Physical Adaptation Modules* ist die ständige Adaption der geographischen Auswahlparameter an die aktuelle Umgebung des Benutzers.

Die Adaption erfolgt in zwei Arbeitsschritten. Zunächst muss die geographische Situation detektiert werden. Der zweite Schritt ist ausgehend von der ermittelten Situation die Berechnung der Parameter für den primären und sekundären geographischen Auswahlbereich.

Das *Physical Adaptation Module* unterscheidet drei verschiedene "Umgebungstypen" bzw. Situationen:

- City

- Road

- Motorway

Die Namen charakterisieren typische Situationen, in denen sich der Benutzer befinden kann. *City* repräsentiert beispielsweise eine Fahrt mit einer geringen Durchschnittsgeschwindigkeit, häufigem Anhalten und vielen Abbiegevorgängen. *Motorway* dagegen steht für eine hohe Durchschnittsgeschwindigkeit, keine Stops und fehlende scharfe Kurven. Die Kriterien für die Situation *Road* liegen zwischen den beiden erwähnten Situationen. In Zukunft werden auch die gleichbedeutenden deutschen Bezeichnungen *Stadt, Landstraße und Autobahn* verwendet. Zur Bestimmung der wahrscheinlichsten Situation benötigt das *Physical Adaptation Module* aktuelle Positionsdaten. Das *position data structure,* die vom *Positionserfassungs-Modul* berechnet wird, enthält alle benötigen Benutzer-Daten:

- geographische Position

- Fahrtrichtung

- Geschwindigkeit

- Zeitstempel der Positionserfassung

Das Modul berücksichtigt auch die Anzahl der verfügbaren Objekte. Aus diesem Grund benötigt das *Physical Adaptation Module* Informationen über die geographischen Positionen aller verfügbaren Objekte, die vom *Objekt-Verwaltungsmodul* bereitgestellt werden.

Die Adaption wirkt sich auf den geographischen Auswahlprozess aus. Das *Physical Adaptation Module* liefert anhand der Eingabeparameter alle benötigten Auswahlparameter für einen primären und sekundären Auswahlbereich zurück. Die Parameter wurden bereits vorgestellt und in Fig. 12 grafisch dargestellt. Diese Parameter werden in einer Datenstruktur *Selection Limits* abgespeichert, die im Auswahl-Modul definiert ist.

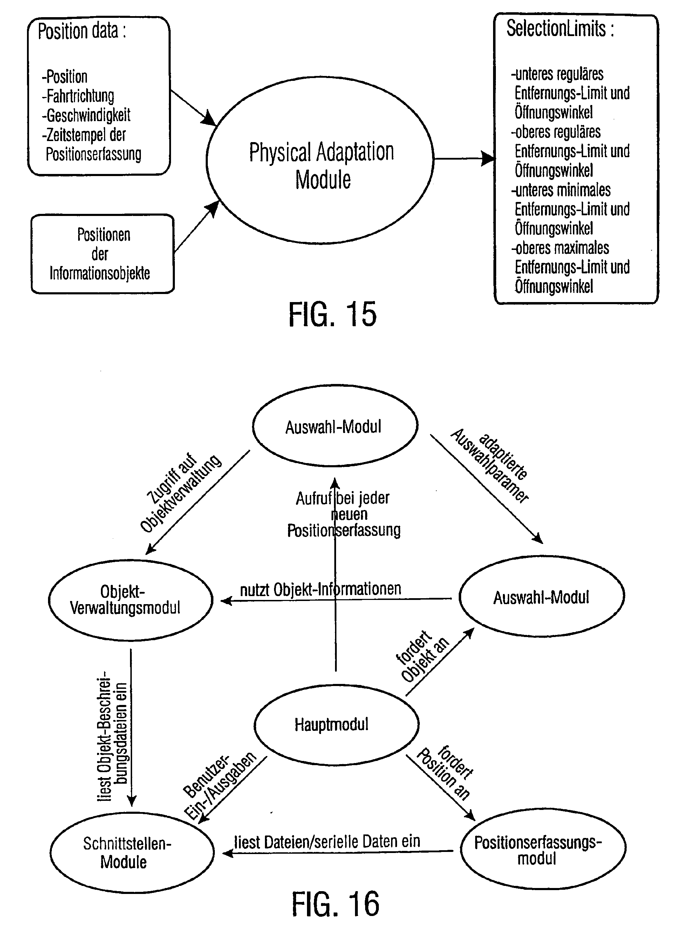

Den in diesem Abschnitt erläuterten Ablauf zeigt Fig. 15.

Die Interaktion des *Physical Adaptation Module* mit den Hauptkomponenten des UMIS-Systems verdeutlicht Fig. 16.

Das Hauptmodul ruft das *Physical Adaptation Module* auf, sobald eine neue Position vom Positionserfassungs-Modul vorliegt. Anhand der neuen Eingabeparameter und der früheren erfassten Parameter erfolgt zunächst die Bestimmung der Situation des Benutzers und anschließend die Berechnung der *Selection Limits.*

Das *Physical Adaptation Module* ist intern in zwei Einheiten unterteilt. Diese Einheiten repräsentieren die zwei grundlegenden Arbeitsschritte bei der Adaption der geographischen Auswahlparameter an die aktuelle Benutzersituation.

In einem ersten Schritt ermittelt der *Style of Driving Analyser,* der als Eingabeparameter die aktuellen Positionsdaten übergeben bekommt, die charakteristischen Durchschnittswerte der Fahrt. Diese Einheit berechnet anhand aktueller und früherer Positionsdaten diese Durchschnittswerte, die anschließend zur Bestimmung der Situation an die *Geographical Limits Adaptation* Einheit übergeben werden.

Die eigentliche Adaption der geographischen Auswahlparameter findet in dieser Einheit statt, die aufgrund des ermittelten Situationstyp, den aktuellen Positions-Daten und der Positionen der Objekte die Anpassung durchführt.

Die primäre Aufgabe dieses Moduls besteht darin aus den Positionsdaten, die während der Fahrt erfasst werden, charakteristische Durchschnittswerte zu berechnen. Diese Durchschnittswerte werden für die Bestimmung der Situation benötigt.

Bei der Auswahl der Kriterien wurde großer Wert darauf gelegt, dass diese in den verschiedenen definierten Situationen bzw. Umgebungstypen unterschiedliche Durchschnittswerte besitzen. Der *Style of Driving-Analyser* ist darauf ausgelegt, dass er die vorgestellten drei Situationen erkennt.

Im Folgenden sind die ausgewählten, charakteristischen Kriterien aufgelistet, sowie deren Berechnung:

- **Geschwindigkeits-Charakteristik**
  Die Geschwindigkeits-Charakteristik ist die durchschnittliche Geschwindigkeit des Benutzers innerhalb eines definierten Zeitfensters und berechnet sich nach folgender Formel:

$$S = \frac{(S_1 + S_2 + S_3 + \ldots + S_n)}{n} \left[\frac{m}{s}\right] \qquad (3.1)$$

$S_i \left[\frac{m}{s}\right]$ sind die aktuellen Geschwindigkeiten und n die Anzahl der erfassten Positions-Daten innerhalb eines Zeitfensters.

- **Anhalte-Charakteristiken**
  Beim Anhaltevorgang werden zwei Parameter ermittelt. Ein Parameter beinhaltet die Anzahl der Anhaltevorgänge innerhalb eines Zeitfensters. Der andere Parameter stellt prozentual das Verhältnis der zeitlichen Summe sämtlicher Anhaltevorgänge innerhalb eines Zeitfenster zu der Länge des verwendeten Zeitfensters dar:

$$\overline{T} = \frac{(T_1 + T_2 + T_{3\ldots,} + T_n)}{T_w} \left[\frac{\circ}{s}\right] \qquad (3.2)$$

$T_i$ [s] sind die Zeitintervalle zwischen zwei Zeitpunkten, zu denen die Geschwindigkeit 0 km/h beträgt. Die Gesamtlänge des benutzten Zeitfensters ist durch $T_w$ [s] beschrieben.

- **Richtungsänderungs-Charakteristik**
  Durch die Richtungsänderungs-Charakteristik wird versucht, die Intensität und die Häufigkeit der Richtungsänderungen des Benutzers zu beschreiben.

Ein Hauptproblem bei der Berechnung sind die kontinuierlichen Abbiegevorgänge, die die Detektion des Endes eines Richtungswechsels erschweren. Diese Eigenschaft führt dazu, dass jeweils nur die Richtungsänderungen zwischen zwei Positionen bestimmt werden. Weiterhin erfolgt eine Gewichtung dieser Richtungsänderung, weil beispielsweise eine Richtungsänderung von 1˚ in zwei Sekunden eine höhere Bewertung bekommen sollte als ein Richtungsänderung von 1˚ innerhalb von zehn Sekunden. Der Parameter, der die Richtungsänderungs-Charakteristik beschreibt, wird nach folgender Formel berechnet:

$$\overline{A} = \frac{\left( \dfrac{A_1}{T_1} + \dfrac{A_2}{T_2} + \dfrac{A_3}{T_3} \ldots + \dfrac{A_n}{T_n} \right)}{n} \left[ \frac{\circ}{s} \right] \qquad (3.3)$$

$A_i[\,^{\circ}]$ ist die Richtungsänderung zwischen zwei aufeinander folgenden Positionen und $T_i[\,^{\circ}]$ die entsprechende Zeitspanne zwischen den beiden Positionen. Die Anzahl der erfassten Positionen innerhalb eines Zeitfensters ist durch das n gegeben.

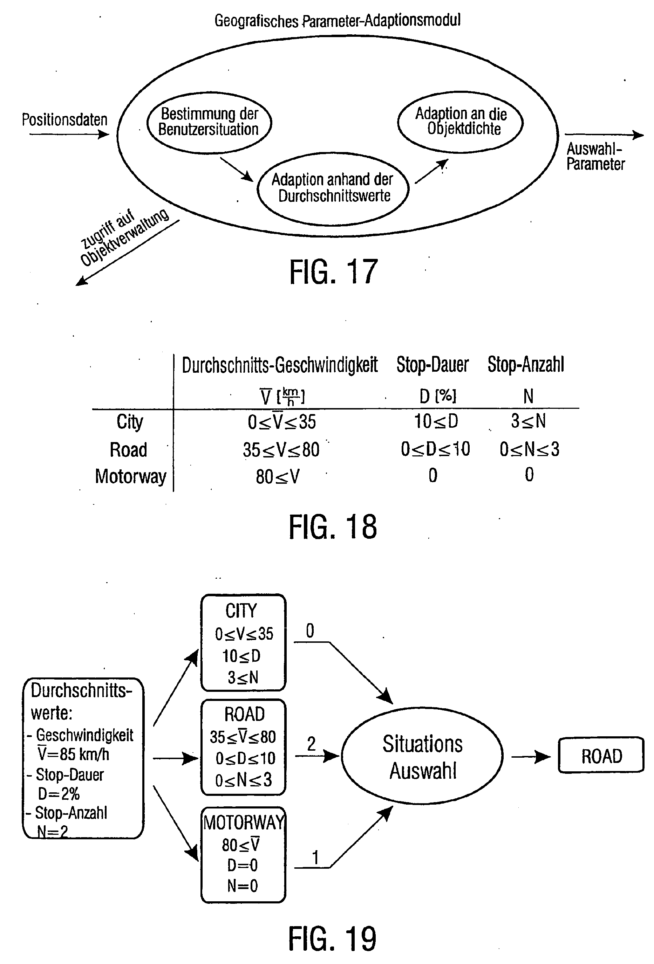

Anhand der ermittelten charakteristischen Durchschnittswerte des *Style of Driving-Analysers,* den Objektpositionen und den Positionsdaten erfolgt die Berechnung der geographischen Auswahlparameter durch das *Physical* Limits Adaptation *Module.* Die Adaption erfolgt in drei Schritten. Jeder Arbeitsschritt ist dabei in einer Einheit gekapselt, wie in Fig. 17 verdeutlicht.

Im Folgenden wird jeder dieser Schritte im Detail betrachtet.

Zur Bestimmung der Benutzersituation werden die vom *Style of Driving-Analyser* berechneten Kriterien verwendet.

Bei der Entwicklung des **Physical Adaptation Modules** wurden im Vorfeld verschiedene Testfahrten durchgeführt und anschließend ausgewertet. Ziel dieser Auswertungen war es, die charakteristischen Durchschnittswerte zu ermitteln, die für die drei gewählten Situationen (City, Road und Motorway) typisch sind.

Bei der Berechnung dieser Werte wurde ein Langzeit-Fenster von sechs Minuten verwendet. Die Benutzung dieser Mindestlänge bei den Berechnungen erlaubt einen guten Rückschluss darauf, in welcher Situation sich der Benutzer befindet. Unter diesen Rahmenbedingungen ergeben sich für die jeweilige Situation die in Fig. 18 gezeigten typischen Standard-Kriterien.

Die vom *Style of Driving Analyser* Modul berechneten charakteristischen Durchschnittswerte werden mit den Werten, der in Fig. 18 dargestellten Situationstypen, verglichen. Die Situation, die die meisten Übereinstimmungen erzielt, wird als aktuelle Situation selektiert. In Fig. 19 ist der prinzipielle Ablauf dargestellt.

Erreichen zwei Situationen die gleiche Anzahl an Übereinstimmungen, so wird diejenige ausgewählt, die in der Reihenfolge zur aktuellen Situation am nächsten liegt. Wenn beispielsweise die Situationen "Road" und "Motorway" die gleiche Anzahl an Übereinstimmungen besitzen und "City" die aktuelle Situation ist, so wird die Situation "Road" ausgewählt. "Road" liegt in der Rangfolge näher an "City". Falls unter den gleichberechtigten Situationen auch die aktuelle Situation enthalten ist, dann wird die aktuelle Situation nicht geändert.

Nach der Auswahl einer Situation erfolgt die Adaption der geographischen Auswahlparameter. Für jede Situation existieren parametrisierbare Kurven, welche die Grundlage für die Berechnung der geographischen Auswahlparameter sind. Jeder Parameter wird anhand einer dieser Kurven aufgrund von charakteristischen Fahrwerten angepasst.

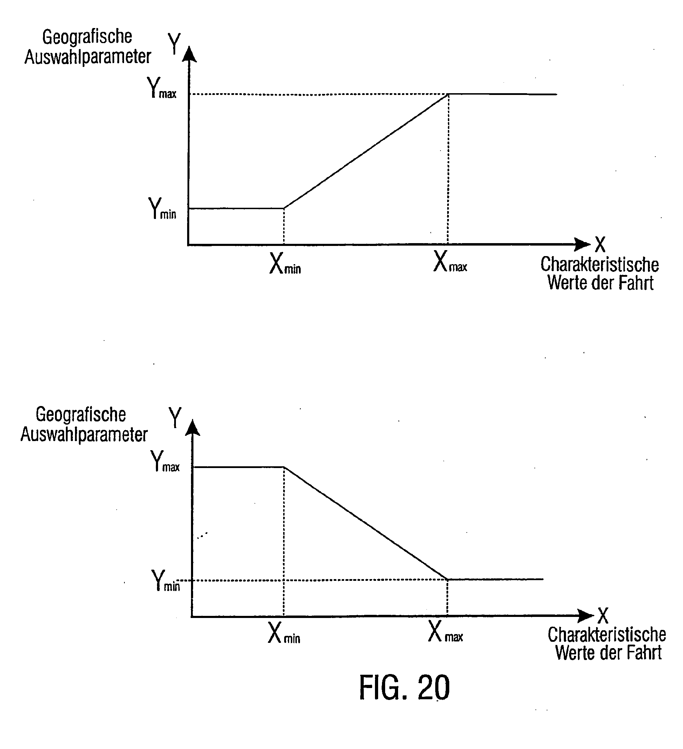

Es existieren zwei grundsätzliche Kurvenverläufe. Während die eine Kurve einen fallenden Verlauf besitzt, weist die andere einen steigenden Kurvenverlauf auf. Als Eingangsvariablen x werden charakteristische Fahrwerte, wie beispielsweise durchschnittliche Geschwindigkeiten oder Richtungsänderungen verwendet. Die Ausgangsgrößen sind die geographischen Auswahlparameter. Fig. 20 zeigt die Kurvenverläufe und die notwendigen Parameter für die Parametrisierung.

Die parametrisierten Kurvenfunktionen, die den steigenden Kurvenverlauf beschreiben, ergeben sich gemäß Nuria L. Juan: Specification, implementation and evaluation of an auto-adaptive dynamic parameterization mechanism for a universal mobile information system, Friedrich-Alexander Universität Erlangen-Nürnberg, August 2002, zu:

$$Y(x) = \begin{cases} Y_{min} & \text{für } x \le X_{min} \\ Y_{min} + \dfrac{(Y_{max} - Y_{min})(x - X_{min})}{X_{max} - X_{min}} & \text{für } X_{min} \le x \le X_{max} \qquad (3.4) \\ Y_{max} & \text{für } x \le X_{min} \end{cases}$$

Der fallende Kurvenverlauf wird durch folgende funktionen beschrieben:

$$Y(x) = \begin{cases} Y_{max} & \text{für } x \le X_{min} \\ Y_{max} + \dfrac{(Y_{max} - Y_{min})(x - X_{min})}{X_{max} - X_{min}} & \text{für } X_{min} \le x \le X_{max} \qquad (3.5) \\ Y_{min} & \text{für } x \le X_{min} \end{cases}$$

Grundlage für die Berechnung der Auswahlentfernungen für den primären und sekundären Auswahlbereich, ist die Mittelung der Geschwindigkeit über ein mittleres Zeitfenster. Typische Werte für die Länge dieses Zeitfensters liegen im Bereich von 180 Sekunden. Die Auswahlwinkel sind von den Durchschnittswerten der Richtungsänderungen abhängig, die durch ein Kurz-Zeitfenster berechnet werden. Die verwendeten Fensterlängen sind in der Regel ca. 30 Sekunden groß.

Bei der Parametrisierung der folgenden Kurven soll erreicht werden, dass ausgehend von der gewählten Situation die Auswahlbereiche nur relevante Objekte einschließen. Wenn der Benutzer sich beispielsweise mit einer niedrigen Durchschnittsgeschwindigkeit bewegt, dann kann in der Regel eine bebaute Umgebung angenommen werden, die wahrscheinlich durch Gebäude oder andere Hindernisse die Sichtweite behindern. Aus diesem Grund sollte in diesem Fall ein kleiner Auswahlbereich selektiert werden. Weiterhin ist in der Regel in derartigen Gebieten auch eine hohe Dichte an Informationsobjekten wie Sehenswürdigkeiten vorhanden, so dass bei der Verwendung eines kleinen Auswahlbereichs trotzdem genügend Objekte zur Auswahl vorhanden sind. Bei höheren Durchschnittsgeschwindigkeiten kann beispielsweise eine Fahrt auf einer Landstraße oder Autobahn angenommen werden. Hier sind aufgrund der niedrigen Objektdichte größere Auswahlbereiche sinnvoll.

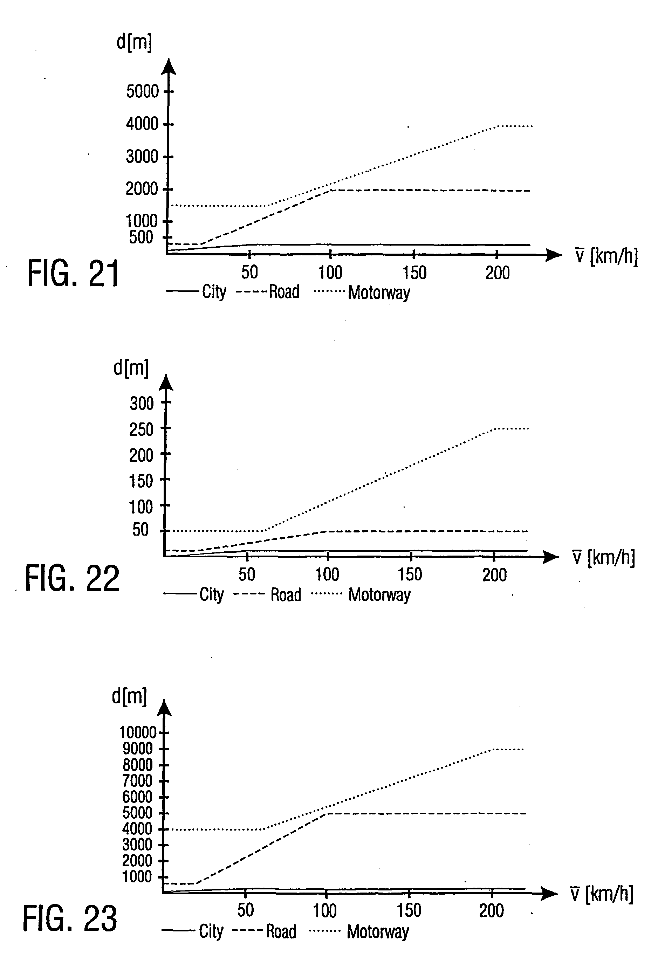

Die folgenden Adaptions-Kurven (Fig. 21 - 24) zeigen die in Nuria L. Juan: Specification, implementation and evaluation of an auto-adaptive dynamic parameterization mechanism for a universal mobile information system, Friedrich-Alexander Universität Erlangen-Nürnberg, August 2002, empfohlenen Kriterien bei der Wahl der Auswahlentfernungen ausgehend von der gewählten Situation und der Durchschnittsgeschwindigkeit bei einer gewählten Zeitfensterlänge von 180 Sekunden.

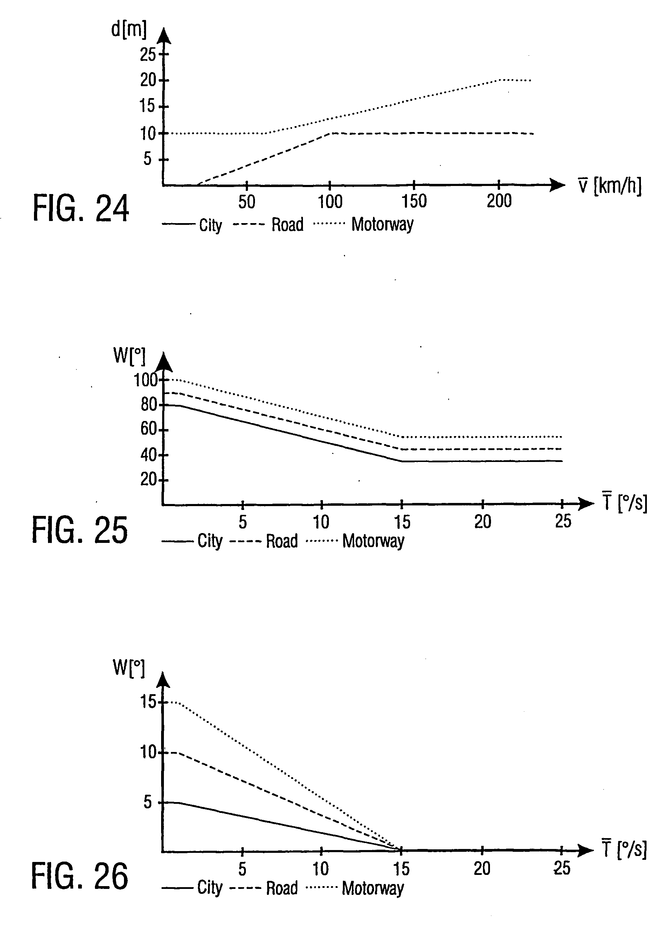

Die in Nuria L. Juan: Specification, implementation and evaluation of an auto-adaptive dynamic parameterization mechanism for a universal mobile information system, Friedrich-Alexander Universität Erlangen-Nürnberg, August 2002, empfohlenen Einstellungen bei der Wahl der Auswahlwinkel ausgehend von der gewählten Situation und den Durchschnittswerten der Richtungsänderungen bei einer gewählten Zeitfensterlänge von 30 Sekunden sind in den Grafiken (Fig. 25 - 27) aufgelistet.

Beim unteren Öffnungswinkel des sekundären Auswahlbereichs erfolgt keine Adaption. Dieser Winkel hat den konstanten Wert Null.

Der letzte Schritt bei der dynamischen Anpassung der Auswahlparameter wird anhand der Objektdichte im Auswahlbereich durchgeführt. Das Ziel ist es, sicherzustellen, dass dem System genügend Objekte zur Auswahl zur Verfügung stehen.

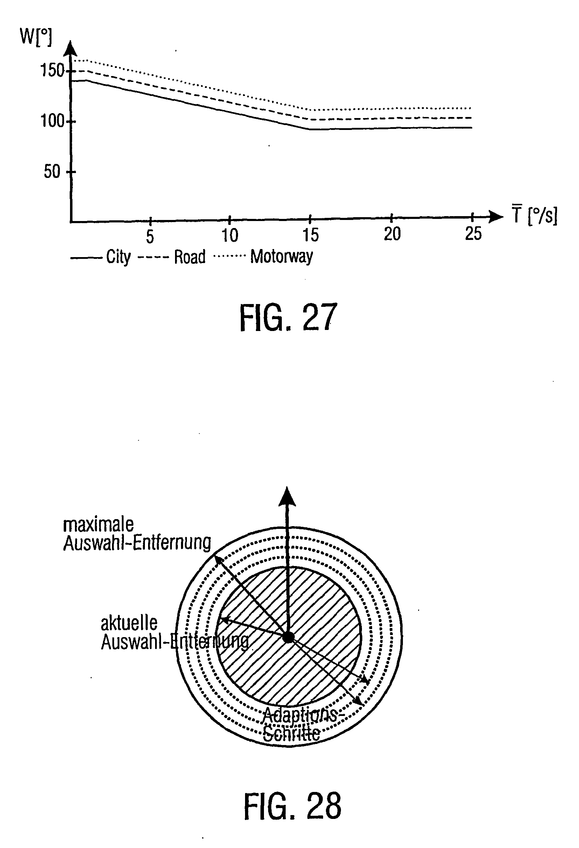

Bei diesem Verfahren werden nur die Auswahlentfernungen des primären und sekundären Auswahlbereichs schrittweise erhöht, bis eine Mindestanzahl oder ein festgelegter Prozentsatz der registrierten Objekte zur Verfügung stehen. Die Erhöhung dieser Parameter wird jedoch abgebrochen, wenn die festgelegten maximalen Werte erreicht sind. Die Anzahl der Schritte bei der Anhebung der Entfernungen ist flexibel einstellbar (siehe Fig. 28).

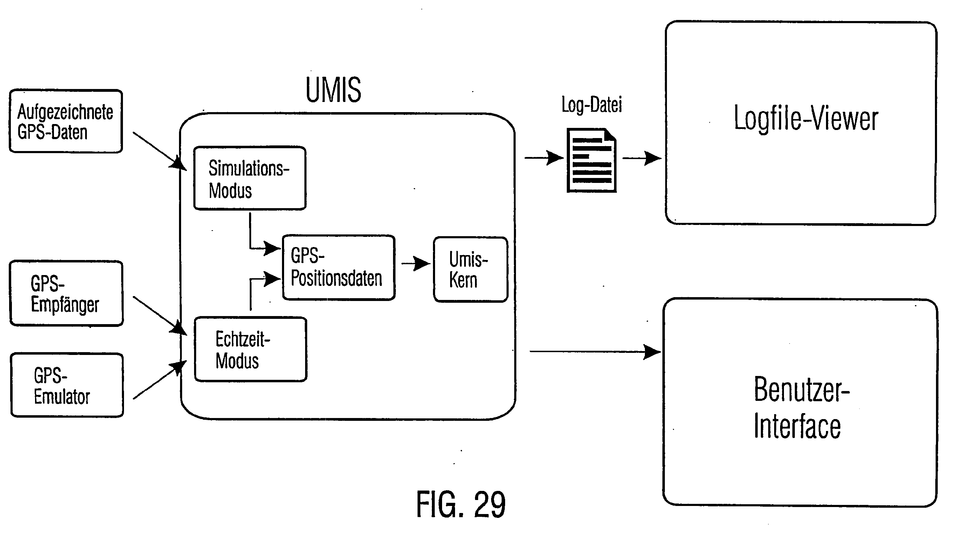

Einen Überblick über den prinzipiellen Testaufbau und den Ablauf zeigt Fig. 29.

Die vorliegende Implementierung von UMIS ist in der Lage, GPS-Signale direkt von einem NMEA-konformen GPS-Empfänger (z. B. der Marke "Garmin" ) zu empfangen. Gleichzeitig besteht die Möglichkeit, Positionsinformationen durch ein integriertes GPS-Simulationsmodul, welches die Einspielung von aufgezeichneten oder synthetisch erzeugten GPS-Signalen auf unterster Systemebene erlaubt, einzuspielen. Die Simulation erfolgt für das restliche UMIS-System völlig transparent. Im Echtzeit-Modus besteht weiterhin die Möglichkeit, GPS-Signale, die durch einen GPS-Emulator erzeugt werden, über die entsprechende Schnittstelle an das UMIS-System weiterzuleiten. Sowohl im Echtzeit-Modus wie im Simulations-Modus erfolgt die Wiedergabe der Informationsobjekte einheitlich über die entsprechenden Ausgabe-Einheiten wie beispielsweise das Benutzer-Interface oder die Lautsprecher.

UMIS besitzt einen Log-Mechanismus, der zur Protokollierung von internen Vorgängen, Entscheidungen und System-Zuständen dient. Die Daten werden für spätere Auswertungen in einer Text-Datei abgespeichert. Der Benutzer hat anschließend die Möglichkeit, sich den Inhalt dieser Log-Datei mit einem üblichen Texteditor zu betrachten oder den Logfile-Viewer zu benutzen. Der Logfile-Viewer ist ein Programm, das die gefahrene Strecke und einige andere relevante Informationen grafisch darstellt und eine nachträgliche Simulation dieser Fahrt erlaubt. Der nächste Abschnitt befasst sich im Detail mit der Arbeitsweise des Logfile-Viewers und stellt weiterhin die im Rahmen dieser Arbeit entwickelten Erweiterungen vor.

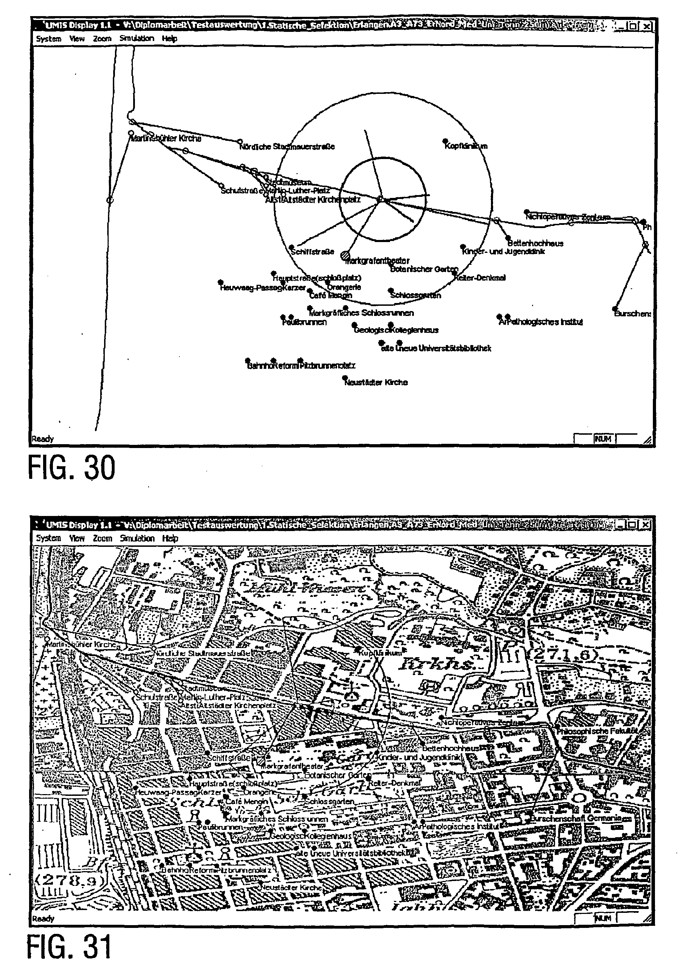

Der Logfile-Viewer erlaubt es die Informationen einer Log-Datei graphisch darzustellen und das Verhalten von UMIS nachträglich zu simulieren. Die Entstehung des Logfile-Viewers ergab sich aus der Notwendigkeit, das Verhalten des UMIS-Systems besser nachzuvollziehen. Die wichtigste Eigenschaft ist die Simulation einer bereits aufgezeichneten UMIS-Fahrt. Die zeitliche Bewegung des Benutzers kann sowohl in Echtzeit als auch in einer schnelleren Geschwindigkeit simuliert werden. Die Einstellung der Geschwindigkeit ist in fünf Stufen unterteilt, wobei die höchste Geschwindigkeit das Achtfache und die kleinste Stufe die Hälfte der Echtzeit-Geschwindigkeit beträgt. Fig. 30 zeigt den Logfile-Viewer bei einer Simulation einer UMIS-Fahrt.

Zur Darstellung der aktuellen Benutzer-Position wird ein Pfeil-Symbol verwendet, das zusätzlich die aktuelle Bewegungsrichtung wiedergibt. Weiterhin ist der primäre und sekundäre Auswahlbereich angedeutet. Die Auswahlentfernungen sind durch Kreise um die Benutzer-Position und die Auswahlwinkel durch Linien dargestellt. Die blaue Linie zeigt die gefahrene Strecke, wobei die Figur nur ein Teil der gesamten Strecke wiedergibt. Es handelt sich um einen vergrößerten Ausschnitt. Der Logfile-Viewer bietet die Möglichkeit, einen Ausschnitt zu vergrößern oder zu verkleinern.

In der Figur werden die Standorte der Informationsobjekte durch kleine Kreise repräsentiert. Neben dem durch den Autor der Informationsobjekte vergebenen Titel wird noch der Status farbig wiedergegeben. Die gelb markierten Objekte zeigen beispielsweise die in der Simulation bereits mindestens einmal ausgewählten Objekte. Bei den grünen Objekten handelt es sich dagegen um die noch nicht ausgewählten Objekte. Das rote Informationsobjekt ist das aktuelle bzw. das zuletzt ausgewählte Objekt. Auswahllinien verbinden jede Objekt-Position mit der Benutzerposition, an der sich der Benutzer zum Zeitpunkt der Auswahl des Informationsobjekts aufhielt.

Für die Evaluierung des bisherigen Auswahlverhaltens von UMIS wurden weitere Erweiterungen im Logfile-Viewer durchgeführt. Eine Verbesserung ist beispielsweise die wesentlich detailliertere und akkuratere Darstellung des primären und sekundären Auswahlbereichs, wie in Fig. 31 zu sehen ist.

Das neue Konzept erlaubt es, diese beiden Bereiche besser zu erkennen. Weiterhin ist es nun möglich, bestimmte digitale Landkarten-Formate einzulesen und diese in Kombination mit den bisherigen Informationen auf der Benutzeroberfläche darzustellen. Die eingelesenen digitalen Karten erleichtern es, die Objekte, die Benutzerpositionen und die gesamte Fahrtstrecke räumlich einzuordnen.

Bei der Evaluierung des dynamischen Auswahlprozesses konnte der bisherige Logfile-Viewer die sich ständig ändernden geographischen Auswahlparameter nicht wiedergeben, weil die Parameter der Auswahlbereiche nur einmal beim Programmstart eingelesen wurden. Aus diesem Grund musste der Logmechanismus in UMIS dahingehend erweitert werden, dass zusätzlich zu jeder Benutzer-Position die entsprechenden Auswahlbereiche mitgeloggt werden. Eine entsprechende Anpassung im Logfile-Viewer ermöglicht es, diese Parameter aus der von UMIS geschriebenen Log-Datei auszulesen und darzustellen. Beim dynamischen Auswahlprozess werden im Logfile-Viewer die ermittelten Situationen wie "Stadt", "Landstraße" und "Autobahn" farbig wiedergegeben, indem die Fahrtstrecke gemäß der berechneten Situation farbig gezeichnet wird.

Um die Funktionalität des Systems in unterschiedlichen Situationen zu testen, wurden zu Beginn der Evaluationsarbeit einige Teststrecken nach bestimmten Kriterien festgelegt. Diese Teststrecken sollten einen Großteil der möglichen Umgebungstypen bzw. Situationen repräsentieren, in welchen sich der Benutzer von UMIS befinden kann.

Im Folgenden werden die verwendeten Streckenverläufe dargestellt, sowie deren Besonderheiten aufgelistet:

**Teststrecke Erlangen**

Die Stadt Erlangen hat sich wegen der günstigen Lage zum Fraunhofer-Institut zur Durchführung von zahlreichen Testfahrten angeboten. Ein weiterer Vorteil sind die vom Landesvermessungsamt Bayern zur Verfügung gestellten digitalen Landkarten der Stadt Erlangen und Umgebung, die sich durch ihre Genauigkeit (1:25.000) gegenüber anderen verwendeten Karten auszeichnen. Die Stadt Erlangen besitzt sowohl einen typischen Altstadt-Bereich mit den zugehörigen kleinen Gassen als auch die für eine Großstadt typischen Charakteristiken, wie z. B. mehrspurige Straßen. Weiterhin besitzt die Stadt eine in unmittelbarer Nähe verlaufende Autobahn sowie weitere Bundes- und Landstraßen.

**Teststrecke München**

Die Stadt München repräsentiert eine typische Großstadt, die über eine Million Einwohner besitzt. Die mehrspurigen Schnellstraßen innerhalb der Stadt, sowie große Gebäudekomplexe prägen das Stadtbild. Die Sichtweite, die sich dem Benutzer bietet, sowie die Fortbewegungsgeschwindigkeit ist hier sehr unterschiedlich.

**Teststrecke Fränkische Schweiz**

Dieses Gebiet bietet mehrere Aspekte, die es für die Wahl als Testgebiet prädestinierte. Es handelt sich um eine Urlaubsregion in Bayern, die vielfältige Sehenswürdigkeiten besitzt. Das Gebiet liegt im Städte-Dreieck Bamberg-Bayreuth-Erlangen. Als Teststrecke wird die Hauptstraße durch das Kerngebiet der Fränkischen Schweiz gewählt. Die Fränkische Schweiz ist eine typische Mittelgebirgslandschaft mit kleinen Tälern, Höhen und kurvenreichen Straßeverläufen.

**Teststrecke Autobahn A73**

Als Autobahn-Teststrecke wurde die A73 zwischen Bamberg und Erlangen gewählt, da sich diese ebenfalls wegen der unmittelbaren Nähe anbietet. Eine Autobahnfahrt zeichnet sich durch hohe Durchschnittsgeschwindigkeiten und seltene Abbiegevorgänge aus.

Der folgende Abschnitt beschreibt die durch die praktischen und simulierten UMIS-Fahrten erzielten Ergebnisse und Eindrücke. Sie sind die Grundlage für die später erarbeiteten Optimierungsansätze und neuen Konzepte für die ObjektAuswahl. Die Präsentation der gewonnenen Erkenntnisse gliedert sich in vier Abschnitte. Zunächst werden die Ergebnisse des geographischen Auswahl-Prozesses mit statischen Auswahlparametern vorgestellt. Anschließend werden die Testergebnisse der geographischen Auswahl anhand dynamischer Auswahlparameter präsentiert. Nach dem Test des statischen und dynamischen Auswahl-Prozesses werden einige Schwachstellen des existierenden UMIS-Systems bzgl. der Auswahl erläutert, die zum Teil auf subjektiven Eindrücken beruhen. Abschließend erfolgt eine kritische Betrachtung der internen geographischen Objekt-Verwaltung.

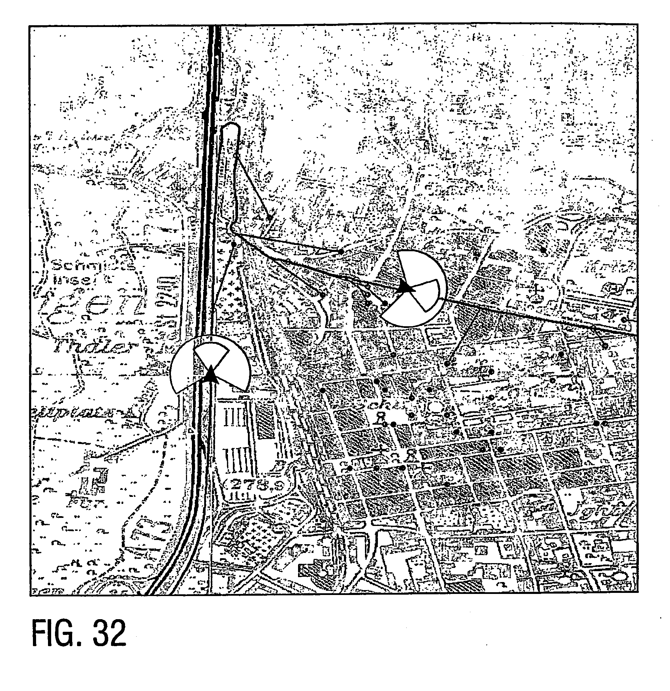

Beim statischen Auswahlprozess werden die geographischen Auswahlparameter im bisherigen UMIS-System nur beim Systemstart eingelesen. Diese Parameter können sich während der gesamten Fahrt nicht mehr ändern oder anpassen. Der gravierende Nachteil bei dieser Methode ist, dass vor der Fahrt das Zielgebiet sowie die Lage der Objekte bekannt sein sollte, um diese Parameter optimal einzustellen. Im letzten Abschnitt wurden bereits für verschiedene Situationstypen optimierte Parametereinstellungen vorgestellt. Das geschilderte Problem wird in der folgenden Fig. 32 verdeutlicht.

Die Figur zeigt den Ausschnitt einer Testfahrt in Erlangen mit verschiedenen Benutzer-Positionen, an denen der Auswahlbereich zu sehen ist. Die Linien verbinden die geographische Position eines Objekts (dargestellt durch einen Punkt) mit der Position, an der die Auswahl erfolgte. Vor Beginn der Fahrt wurde ein kleiner Auswahlbereich ausgewählt, der für eine Fahrt innerhalb der Stadt optimiert wurde. Zu Beginn der Fahrt befindet sich der Benutzer jedoch auf der Autobahn, wo ein großer Auswahlbereich eingestellt sein sollte. Während der Fahrt durch die Stadt erfolgte die Wiedergabe der Objekte, die sich innerhalb des für diese Situation angepassten Auswahlbereichs befanden. Beim Verlassen des innerstädtischen Bereichs waren die Auswahlparameter wiederum zu klein und somit nicht der Situation entsprechend.

In solchen Fällen gibt es zwei Möglichkeiten. Eine Möglichkeit ist ein regelmäßiger Neustart des Systems mit den für die aktuelle Situation passenden Auswahlparametern. Diese Lösung widerspricht aber der Grundidee des UMIS-Systems, wonach versucht wird, die Benutzer-Interaktionen auf ein Minimum zu reduzieren. Die andere Möglichkeit besteht darin, dass der Benutzer die aktuellen Parameter während der gesamten Fahrt beibehält. Diese Maßnahme führt aber zu inakzeptablen und unpassenden Auswahlergebnissen. Zum Beispiel wird ein Benutzer mit einem für die Stadt optimierten kleinen Auswahlbereich während einer Autobahnfahrt so gut wie keine Objekt-Wiedergaben bekommen, da sich in der unmittelbaren Nähe von Autobahnen normalerweise keine Sehenswürdigkeiten oder andere Informationsobjekte befinden. Die generelle Wahl eines großen Auswahlbereichs liefert ebenso ungünstige Auswahlergebnisse, da beispielsweise innerhalb der Stadt Objekte aus großer Entfernung oder sogar außerhalb der Stadt ausgewählt werden können.

Beim dynamischen Auswahlprozess sollen die geographischen Auswahlparameter entsprechend der Situation des Benutzers automatisch angepasst werden. Diese Idee soll die im letzten Abschnitt ermittelten Schwachstellen des statischen Auswahlprozesses beseitigen.

Die Adaption der geographischen Parameter erfolgt durch das Adaptions-Modul in zwei Schritten. In einem ersten Schritt wird versucht, die aktuelle Situation des Benutzers anhand charakteristischer Bewegungsmerkmale der Fahrt zu bestimmen. Es werden dabei die bereits erwähnten drei Situationen (Stadt, Landstraße, Autobahn) unterschieden. Anschließend werden ausgehend von der ermittelten Situation die geographischen Parameter anhand parametrisierter Adaptionsfunktionen angepasst.

Bei der Evaluierung wurde zunächst die Situationsbestimmung getestet. Anschließend erfolgte die Überprüfung der dynamischen Parameteradaption und der Auswahlergebnisse.

Die Bestimmung der Umgebungssituation erfolgt aufgrund charakteristischer Bewegungsmerkmale, die laufend aus den ermittelten Daten der Fahrt berechnet werden. Bei der Berechnung der Durchschnittswerte wird ein Langzeit-Fenster verwendet. Die zur Ermittlung der Fahrsituation herangezogenen Bewegungsmerkmale sind die Geschwindigkeit, Anhaltedauer sowie die Anhaltehäufigkeit.

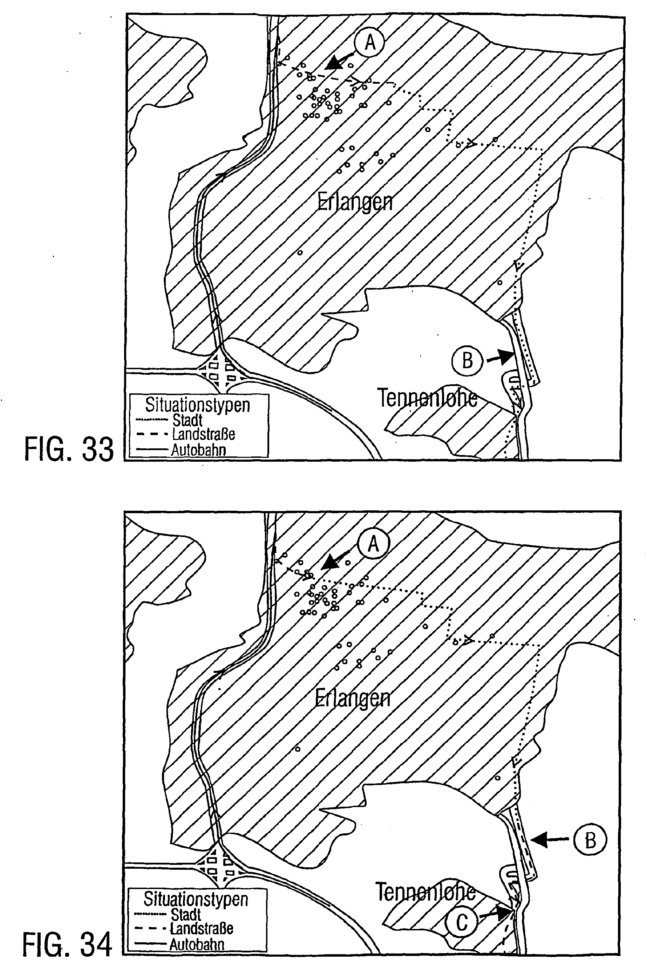

Fig. 33 zeigt eine Test-Fahrt in Erlangen. Die Teststrecke ist entsprechend der ermittelten Situation farbig markiert. Die blaue Farbe soll den Situationstyp Autobahn kennzeichnen, die grüne Farbe den Situationstyp Landstraße und die rot markierten Strecken den Situationstyp Stadt. Auf diese Weise lässt sich ein anschaulicher Überblick über die zuverlässigkeit der Situationsbestimmung erhalten. Als Langzeit-Fenster wurde zunächst der bisher genutzte Wert von zehn Minuten gewählt, der während der Entwicklung des Adaptions-Moduls im Rahmen einer Diplomarbeit bestimmt wurde. In dieser Diplomarbeit wurden weiterhin folgende Durchschnittswerte für die Situationsbestimmung empfohlen, die aus zahlreichen Testfahrten ermittelt wurden.

**Langzeit-Fenster 600 Sekunden:** In Fig. 33 ist zu erkennen, dass das Adaptions-Modul nach Verlassen der Autobahn während der Fahrt innerhalb der Stadt über einen längeren Zeitraum fälschlicherweise den Situationstyp *Landstraße,* erkennt. Dieser Bereich ist in der Darstellung als Bereich A gekennzeichnet. Die weitere Fahrt innerhalb der Stadt wird korrekt als Situationstyp *Stadt* erkannt. Die Trägheit der Situationsbestimmung ist so groß, dass der Bereich B, der außerhalb der Stadt liegt und wo teilweise ein Tempolimit von 80 km/h gilt, immer noch als Stadt bestimmt wird.

Diese Ergebnisse mit einer Fensterlänge von zehn Minuten zeigten ein träges Verhalten bei der Situationsbestimmung. Diese Trägheit tritt in beiden Richtungen auf, das heißt, sowohl der Übergang von einem schnellen zu einem langsamen Situationstyp, als auch umgekehrt erfolgt immer mit einer gewissen Verzögerung. Die Erkennung des Situationstyps Stadt sollte mit einer möglichst geringen Verzögerung stattfinden, damit in dieser Umgebung nicht weit entfernte Objekte ausgewählt werden, obwohl sich vielleicht in unmittelbarer Nähe relevante Informationsobjekte befinden.

**Langzeit-Fenster 300 Sekunden:** Um eine schnellere Situationserkennung durchzuführen, wurde das Langzeit-Fenster auf die halbe Zeit verkürzt. Das resultierende Ergebnis zeigt Fig. 34 Ein Vergleich mit der vorherigen Fig. 33 zeigt die signifikanten Verbesserungen, die sich durch das kleinere Zeitfenster von 5 Minuten ergeben. Es erfolgt eine deutlich schnellere Adaption an die aktuelle Situation. Eine gewisse Verzögerung bleibt jedoch wegen der Auswertung des Langzeit-Fensters. Die richtige Erkennung des Situationstyps Stadt beispielsweise nach dem Verlassen der Autobahn wurde deutlich beschleunigt, was in Fig. 34 durch den Bereich A gekennzeichnet ist. Das Verlassen des Stadtgebiets wird bei dieser Fensterlänge richtig erkannt, was im Bereich B zu sehen ist. Eine zu langsame Erkennung trat im Bereich C auf. Hier konnte die Fahrt in ein Stadtgebiet nicht als solches erkannt werden. Das Verhalten des Adaptions-Moduls lässt sich dadurch erklären, dass es zwar bei der Fahrt durch das Stadtgebiet eine niedrige Durchschnittsgeschwindigkeit detektiert, sich die durchschnittlichen Werte für die Anhaltedauer und Anhaltehäufigkeit jedoch nicht erhöhen, weil der Benutzer zu keiner Zeit anhalten musste.

**Langzeit-Fenster 180 Sekunden:** Besonders störend ist die zu langsame Erkennung der Stadt. Wird nämlich fälschlicherweise eine schnelle Situation (*Landstraße* oder *Autobahn*) in einer Stadt ausgewählt, so werden aufgrund des großen Auswahlbereichs auch Objekte aus großer Entfernung gewählt. Innerhalb einer Stadt sollte der Benutzer aber nur Objekte in seiner unmittelbaren Nähe präsentiert bekommen, so dass der Benutzer die Möglichkeit bekommt, das ihm präsentierte Objekt auch visuell zu erfassen.

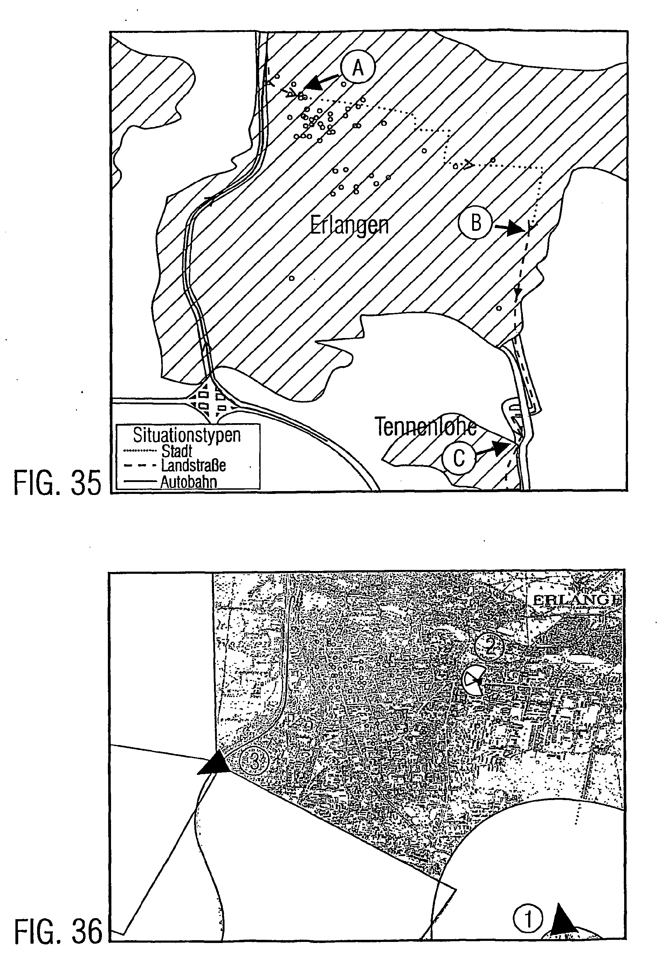

Beim Verlassen der Autobahn und der anschließenden Fahrt in das Stadtgebiet wird der Situationstyp Stadt nur unwesentlich schneller erkannt als bei der Benutzung des Zeitfensters mit der Länge von 300 Sekunden (Fig. 35). Allerdings erfolgte der Übergang vom Situationstyp *Stadt* zum Situationstyp *Landstraße* im Bereich B zu schnell, da sich der Benutzer in diesem Bereich im Stadtgebiet befindet und sich mit einer Höchstgeschwindigkeit von 60 km/h fortbewegt. Im Bereich C wird analog zu den Ergebnissen mit der Fensterlänge von 300 Sekunden das Stadtgebiet nicht als solches detektiert.

Der zweite Schritt bei der dynamischen Objekt-Auswahl nach der Situationsbestimmung ist die Anpassung der geographischen Auswahlparameter anhand parametrisierter Adaptionsfunktionen. Fig. 36 zeigt eine Testfahrt mit dynamischer Parameteranpassung. Für eine bessere Veranschaulichung der Funktionalität wurde jeweils für eine Situation exemplarisch die Benutzerposition und der dazugehörige Auswahlbereich dargestellt. Die erste Benutzerposition (1) zeigt den Auswahlbereich für den Situationstyp *Landstraße.* In der Stadt detektiert das Adaptionsmodul anhand der charakteristischen Bewegungsmerkmale den Situationstyp Stadt. Die Dimensionen des Auswahlbereichs, die sich für diese Situation ergeben, zeigt die nächste Benutzerposition (2). Der letzte Abschnitt der Testfahrt verläuft auf der Autobahn. Nach der Detektion der Situation *Autobahn* werden die Auswahlparameter entsprechend angepasst, wie anhand der letzten Benutzerposition (3) zu sehen ist. Der große Auswahlbereich für die Situationstypen *Autobahn* und *Landstraße,* stellte sich bei Fahrten in der Nähe einer Stadt als gravierendes Problem dar. Durch die Auswahlentfernungen von einigen Kilometern werden viele Objekte, die eigentlich für eine Wiedergabe in einer Stadt bestimmt sind, bereits außerhalb der Stadt ausgewählt.

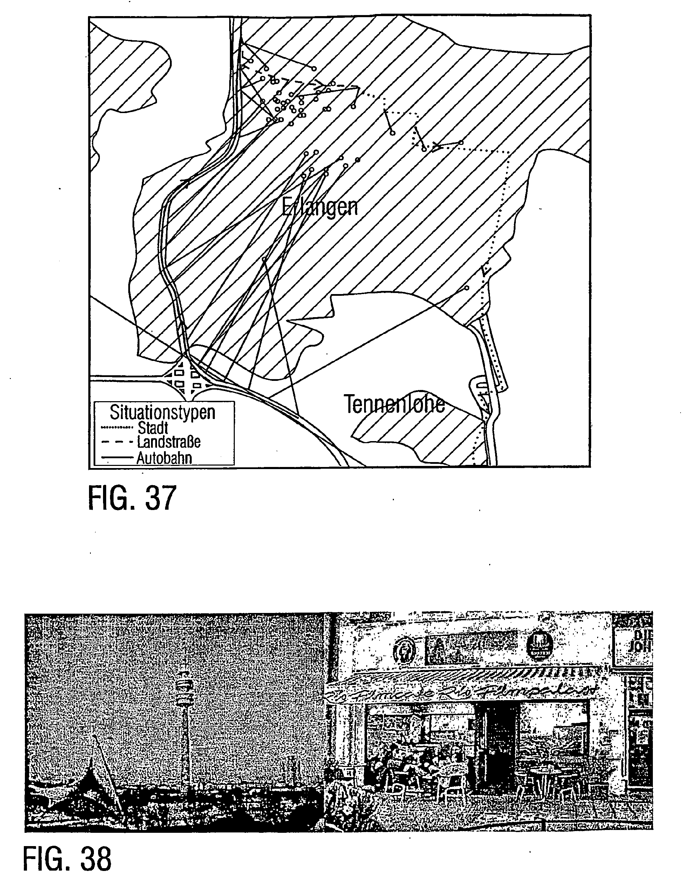

Fig. 37 verdeutlicht das geschilderte Problem. Es zeigt eine Testfahrt in Erlangen, bei der der Benutzer über die Autobahn in die Stadt hineinfährt. Während sich der Benutzer auf der Autobahn befindet, werden kontinuierlich Objekte aus der Stadt ausgewählt und wiedergegeben. Die Auswahl eines Objekts ist durch Auswahllinien dargestellt, die die Objektposition mit der Position, an der die Auswahl erfolgte, verbindet. Dieses Auswahlverhalten besitzt zwei wesentliche Nachteile. Ein Nachteil ist die Überflutung des Benutzers mit zahlreichen Objektwiedergaben. Viele Informationsobjekte und deren Multimedia-Inhalte sind für eine Wiedergabe in unmittelbarer Nähe bestimmt. Ein weiterer Nachteil ist die nochmalige Auswahl und Wiedergabe eines Objekts, das bereits aus der Autobahn-Situation ausgewählt worden ist und für eine erneute Auswahl nicht verfügbar ist, obwohl der UMIS-Benutzer sich direkt vor diesem Objekt befindet. Objekte stehen für eine erneute Auswahl nicht zur Verfügung, wenn die spezifizierte Wiederholungszahl erreicht worden ist.

Das geschilderte Problem tritt nicht nur in Städten auf. Generell zeigte sich, dass bei vielen Informationsobjekten eine Auswahl aus großer Entfernung nicht erwünscht ist.

Im Rahmen dieser Arbeit sollte das UMIS-System auch für eine Verwendung als Fußgänger getestet werden. Durch eine inzwischen vorhandene Portierung von UMIS für das Betriebssystem *Windows CE,* ist es inzwischen möglich, das System mit einem PDA als Hardware-Plattform zu verwenden.

Die im Adaptionsmodul verwendeten Situationstypen zur dynamischen Parameteranpassung bei der Verwendung von UMIS bei der Fortbewegung als Fußgänger beziehungsweise bei sehr niedrigen Geschwindigkeiten erwiesen sich teilweise als ungeeignet. Das Hauptproblem ergab sich durch falsche Richtungsangaben, wenn der Benutzer in kurzen Abständen seine Richtung änderte, sich langsam (ca. 0 bis 1,5 km/h) oder gar nicht bewegte. Die verwendeten Auswahlentfernungen waren für eine anschauliche Wiedergabe nicht immer geeignet, da die Auswahlbereiche zu groß waren. Für eine anschauliche Wiedergabe der Informationsobjekte sollten die Auswahlbereiche so gewählt werden, dass sich die wiedergegebenen Objekte in unmittelbarer Nähe bzw. Sichtweite befinden.

Bei den bisherigen Auswahlverfahren wird die besondere Beschaffenheit und die geographische Umgebung eines Informationsobjekts nicht berücksichtigt. Die Informationsobjekte werden nur durch ihre Position beschrieben. Anhand einiger ausgewählter Beispiele soll zunächst gezeigt werden, dass die bisherige geographische Objektbeschreibung allein durch Längen- und Breitengrad eine gezielte und anschauliche Wiedergabe für sämtliche Objekte nicht gewährleisten kann. Weiterhin wird das Problem mit unpositionierten Objekten erläutert, die zwar keine Position besitzen, für die aber dennoch in bestimmten Fällen eine gezielte Wiedergabe wünschenswert und teilweise notwendig ist. Anhand von Beispielen soll im Folgenden diese Problematik verdeutlicht werden.

Informationsobjekte, wie z. B. Gebäude, unterscheiden sich teilweise stark in ihren Größenordnungen. Die unterschiedlichen räumlichen Ausmaße bewirken, dass einige Informationsobjekte bereits aus größerer Entfernung sichtbar sind. Bei der Erstellung der Beschreibungsdatei ist dem Autor keine Möglichkeit gegeben, die Sichtweite eines Informationsobjekts bei der Beschreibung zu definieren. Anhand eines Beispiels soll dieses Problem anschaulich dargestellt werden.

Bei den Testfahrten in München wurde die Problematik der verschiedenen Sichtweiten von Objekten besonders deutlich. Der Olympiaturm, der in Fig. 38 zu sehen ist, ist ein gutes Beispiel für ein Objekt, das aus einer großen Entfernung zu sehen ist. Weiterhin ist in der Figur ein kleines Geschäft in München abgebildet, das im Gegensatz zum Olympiaturm für den Benutzer lediglich sichtbar ist, wenn er sich in unmittelbarer Nähe befindet.

Ein weiteres Problem, das eine anschauliche Präsentation der Objekte einschränkt, sind Sichthindernisse, die ausgehend vom aktuellen Standort des Benutzers einen freien Blick auf das Informationsobjekt teilweise oder ganz verhindern. Bei der Wiedergabe von einigen Objekten setzt der Autor voraus, dass der Benutzer das Objekt sehen kann und erstellt ausgehend von dieser Annahme entsprechend den Inhalt der Wiedergabe.

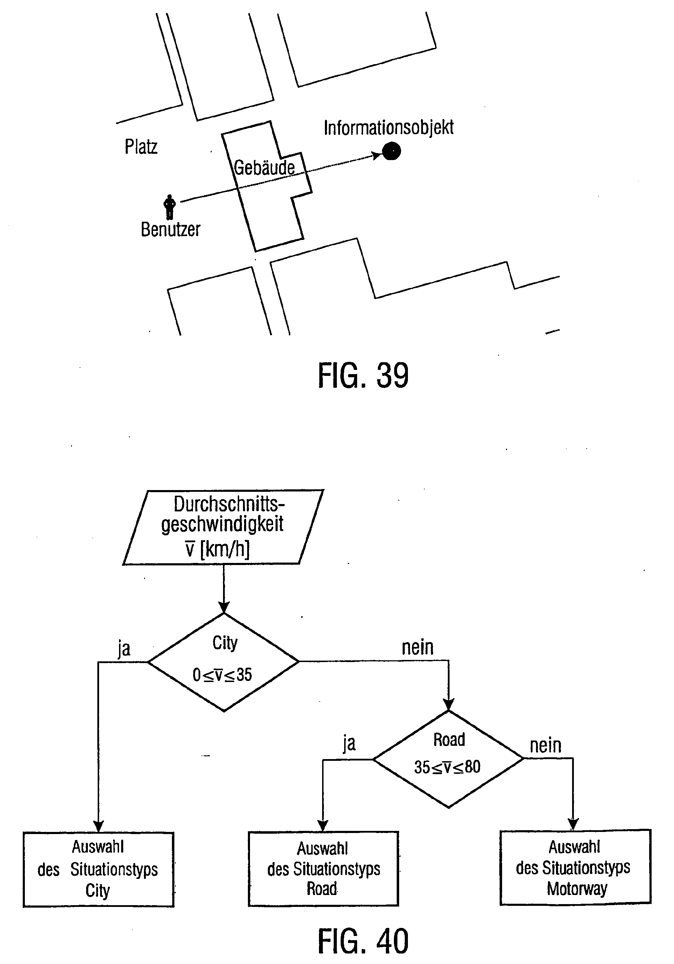

Im Folgenden wird ein Beispiel gezeigt, bei dem der Autor davon ausgeht, dass der Benutzer eine freie Sicht auf das Objekt hat und sich in unmittelbarer Nähe befindet. Beim Informationsobjekt handelt es sich zum Beispiel um den Brunnen im Schlosspark der Stadt Erlangen. Fig. 39 zeigt die entsprechende Testsituation, bei der sich der Benutzer in der Nähe des Informationsobjekts befindet, aber seine Sicht auf den Brunnen durch ein Gebäude verhindert wird.

Neben den Objekten mit eindeutiger Positionsangabe gibt es noch Informationsobjekte, die keinen definierten Standort besitzen. Diese werden "unpositionierte Objekte" genannt. Eingesetzt werden sie beispielsweise für die Wiedergabe von allgemeinen Informationen oder Zwischenmusik. Ein weiterer Anwendungsfall ist die Wiedergabe von Regionsinformationen, die für ein definiertes Gebiet relevant sind, sich aber nicht genau einer Position zuordnen lassen. Das Problem bei der Benutzung eines unpositionierten Objekts als Regionsinformation ist die gezielte Wiedergabe des Beitrags in dem relevanten Gebiet. Beim bisherigen Auswahlprozess gibt es keine Möglichkeit die Auswahl von Regionsinformationen gezielt wiederzugeben.

Anhand der Teststrecke in der *Fränkischen Schweiz* sollen einige problematische Punkte aufgezeigt werden:

Für das Gebiet der *Fränkischen Schweiz* existiert neben den "positionierten Objekten" auch eine Regionsinformation, die als "unpositioniertes Objekt" vorliegt. Diese vorhandenen Regionsinformation soll dem Benutzer, bevor er sich in das Gebiet begibt, allgemeine Informationen über die *Fränkische Schweiz* geben. Für die gezielte Ansage dieser *unpositionierten* Information mit den vorhandenen Auswahlroutinen wird die im Folgenden beschriebene Methode verwendet, die aber eine unbefriedigende Lösung darstellt. Bei dieser Methode werden zunächst sämtliche Informationsobjekte der *Fränkischen Schweiz* in einem Datei-Ordner abgelegt. Der Benutzer muss anschließend, bevor er in das betreffende Gebiet fährt, diesen Ordner in UMIS auswählen und anschließend UMIS starten. In diesem Fall würde die Regionsinformation unmittelbar nach dem start des UMIS-Systems wiedergegeben werden, falls sich kein positioniertes Objekt im Auswahlbereich befindet. Diese Lösung hat einige entscheidende Nachteile. Der Grundgedanke des Systems, dass die benötigten Benutzer-Interaktionen auf ein Minimum reduziert werden sollen, ist hier nicht gegeben. Die Notwendigkeit, dass der Benutzer abhängig von seinem Standort den Datei-Ordner auswählt, der die Objekte in seiner Umgebung enthält, macht das System für den Benutzer unattraktiv und unflexibel.

Ein wichtiges Einsatzgebiet von UMIS ist die Unterstützung von Besichtigungstouren entlang fester, vorgegebener Strecken, bei denen der Autor die Reihenfolge der Objektwiedergaben weitestgehend festlegen möchte. Die Festlegung dieser Reihenfolge erfolgt allerdings nur durch die geographische Position der Informationsobjekte und stößt in vielen Situationen an ihre Grenzen. Ein Beispiel hierfür ist der Einsatz von UMIS als digitaler Reiseführer auf einem Passagierschiff der Salzburg-Schifffahrt. Für diese Besichtigungstour muss das UMIS-System vor der Rückfahrt mit einem neuen Datensatz erneut gestartet werden, da ansonsten Objekte, welche für eine Wiedergabe auf der Rücktour bestimmt sind, bereits auf der Hintour wiedergegeben werden würden.

Das Auswahlverfahren mit statischen Auswahlparametern erwies sich bei den in dieser Arbeit durchgeführten Testfahrten als zu unflexibel. Bei diesem Verfahren wird die aktuelle Umgebungssituation bei der Wahl der Auswahlbereiche nicht berücksichtigt. Die statischen Auswahlparameter führten daher zu unbefriedigenden Ergebnissen bei der geographischen Auswahl.

Das erweiterte Auswahlverfahren mit dynamischen Auswahlparametern berücksichtigt die aktuelle Umgebungssituation, um die geographischen Auswahlbereiche anzupassen. Bei der Evaluierung zeigte sich, dass die Bestimmung der Umgebungssituation der kritische Faktor bei der dynamischen Parameteradaption ist. Die Verwendung von Durchschnittswerten bei der Berechnung von Bewegungsmerkmalen führte zu einer trägen Situationserkennung. Die träge Situationserkennung führte beispielsweise in bestimmten Fällen zur Verwendung von zu großen Auswahlbereichen. Da die anschauliche Wiedergabe von Informationsobjekten in den meisten Fällen nur in der unmittelbaren Umgebung des Objekts gegeben ist, sollte die Wahl von zu großen Auswahlbereichen unbedingt vermieden werden. Die dynamische Adaption der Auswahlparameter erwies sich bei korrekter Situationserkennung als zufriedenstellend.

Es wurde anhand einiger Beispielsituationen gezeigt, dass für eine gezielte Wiedergabe von Informationsobjekten die alleinige Beschreibung durch geographische Längen- und Breitengrade ungenügend ist. Aus diesem Grund kann das bisherige geographische Auswahlverfahren in bestimmten Fällen diese Anforderung nicht erfüllen.

Für eine gezielte Wiedergabe ist die Berücksichtigung der unmittelbaren Umgebung, der Sichtweite und der räumlichen Ausmaße des Informationsobjekts notwendig. Die in diesem Abschnitt gewonnenen Erkenntnisse werden im nächsten Abschnitt dazu verwendet, um den geographischen Auswahlprozess dahingehend zu erweitern.

Bei der Evaluierung der Funktionsweise des Adaptionsmoduls zeigten sich im Wesentlichen drei Probleme.

Ein Problem ist die zuverlässige Bestimmung der aktuellen Umgebungssituation des Benutzers, die für die folgenden Adaptionsschritte maßgeblich ist. Weiterhin werden bei großen Auswahlbereichen Objekte aus großer Entfernung ausgewählt, die eigentlich für eine Auswahl in unmittelbarer Nähe bestimmt sind. Dadurch wird eine anschauliche Wiedergabe verhindert. Ein weiteres Problem ist die fehlende Fußgängersituation. Im Folgenden werden jeweils die Optimierungs-Ansätze für die genannten Probleme vorgestellt.

Bei der Bestimmung der aktuellen Umgebungssituation (Stadt, Landstraße, Autobahn) werden drei charakteristische Bewegungsmerkmale herangezogen. Die dafür zuständige Einheit im *Physical Adaptation Module* vergleicht, bei welcher Situation die berechneten Bewegungsmerkmale die meisten Kriterien erfüllen. Der Situationstyp mit den meisten Übereinstimmungen wird als aktuelle Situation selektiert.

Bei den Evaluierungs-Testfahrten wurden die durchschnittlichen Werte der Geschwindigkeit, der Anhaltedauer und der Anhaltehäufigkeit für die Situationsbestimmung herangezogen. Die Ergebnisse zeigten, dass anhand dieser Parameter eine zuverlässige Bestimmung der Situation nur bedingt möglich ist. Aus diesem Grund sollen einige neue Lösungsansätze vorgestellt werden, die eine potentielle Verbesserung der Situationserkennung ermöglichen.

Wie bereits festgestellt wurde, müssen zu große Auswahlbereiche vermieden werden. Bei der bisherigen Situationsbestimmung, konnte eine Fahrt in eine Stadt nicht als Situationstyp *Stadt* detektiert werden, solange sich der Benutzer kontinuierlich ohne jegliche Anhaltevorgänge fortbewegt. Die fehlenden Elemente Anhaltehäufigkeit und Anhaltedauer schließen in solchen Fällen den Situationstyp *Stadt* aus. Der folgende Ansatz richtet sich daher nur nach der durchschnittlichen Geschwindigkeit und würde hier zu einer schnelleren Detektion der "sicheren" kleinen Auswahlbereiche führen. Den prinzipiellen Ablauf zeigt Fig. 40. Sobald ein neuer Wert für die Durchschnittsgeschwindigkeit vorliegt, wird zunächst überprüft, ob dieser Wert zwischen der minimalen und maximalen durchschnittlichen Geschwindigkeit für den Situationstyp *Stadt* (kleinste Auswahlbereiche) liegt. Liegt der Wert in diesem Bereich, dann wird diese Situation übernommen. Falls der Wert der Durchschnittsgeschwindigkeit nicht in diesem Bereich liegt, wird in einem nächsten Schritt überprüft, ob der Wert zwischen dem minimalen und maximalen Wert des Situationstyps *Landstraße* (mittlerer Auswahlbereich) liegt. Falls diese Bedingung erfüllt ist, wird diese Situation ausgewählt, ansonsten der Situationstyp *Autobahn* (große Auswahlbereiche).

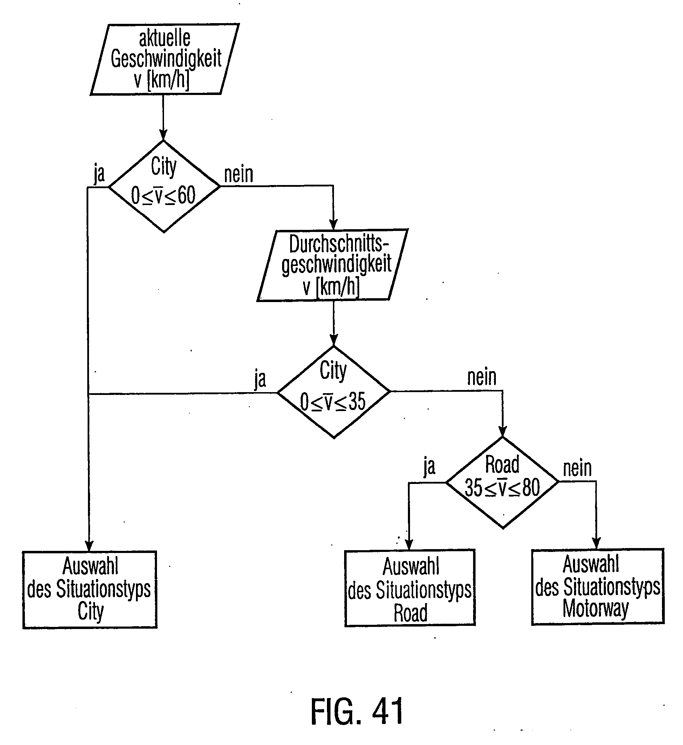

Der im letzten Abschnitt vorgestellte Ansatz verwendet zur Situationsbestimmung die durchschnittliche Geschwindigkeit als alleiniges Kriterium. Dies führt zu einer relativ trägen Situationsbestimmung. Durch eine Verkleinerung des Zeitfensters kann diese Trägheit vermindert werden, jedoch wird in diesem Fall die Empfindlichkeit der Situationsbestimmung gegenüber kurzzeitigen Geschwindigkeitsschwankungen erhöht. Für den folgenden Lösungsansatz wird daher zur zuverlässigen Bestimmung des Situationstyps *Stadt* neben der Durchschnittsgeschwindigkeit auch die aktuelle Geschwindigkeit betrachtet. Hierbei wird die Tatsache ausgenutzt, dass beispielsweise in Städten oder allgemein in bewohnten Gebieten, in denen der Situationstyp *Stadt* erwünscht ist, eine niedrige Geschwindigkeit vorgeschrieben ist. Das dazugehörige Flussdiagramm ist in Fig. 41 dargestellt. Bei den Parameterwerten handelt es sich um Beispielwerte, die bei der folgenden Evaluierung entsprechend angepasst werden müssen.

Der Lösungsansatz aus dem letzten Abschnitt ermöglicht eine schnelle Situationserkennung des Situationstyps Stadt aus einer "schnellen" Situation. Beim Übergang vom Situationstyp *Stadt* zu einem "schnelleren" Situation ist jedoch eine erhöhte Trägheit wünschenswert.

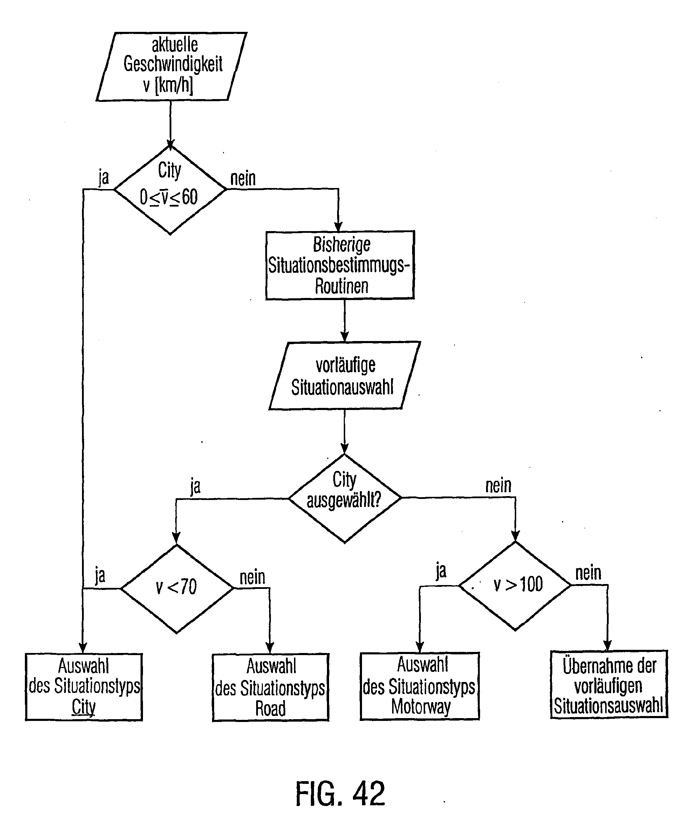

Daher wird im folgenden Lösungsansatz eine Kombination der bisherigen Situationsbestimmung mit der zusätzlichen Einbeziehung der aktuellen Geschwindigkeit verwendet. Dieser Lösungsansatz hat den Vorteil, dass der Situationstyp *Stadt* schnell detektierbar ist und dennoch beim Verlassen einer Stadt aufgrund der Trägheit der Situationserkennung nicht unmittelbar der Situationstyp *Landstraße,* oder *Autobahn* gewählt wird. Bei der Verwendung der aktuellen Geschwindigkeit könnten weitere Grenzwerte für die Situationsbestimmung eingeführt werden. Fig. 42 zeigt einen erweiterten Lösungsansatz, der sich prinzipiell in drei Schritten aufteilt. Der erste Schritt besteht aus der Überprüfung, ob die aktuelle Geschwindigkeit innerhalb der Grenzwerte des Situationstyps *Stadt* liegt. Wenn diese Bedingung erfüllt ist, dann erfolgt die unmittelbare Auswahl dieses Situationstyps. Liegt der Grenzwert nicht in diesem Bereich, dann erfolgt die Bestimmung der Situation mit den bisherigen Auswahlroutinen, wie sie bereits beschrieben wurden. Nach dieser vorläufigen Situationsauswahl werden im letzten Schritt die üblichen Geschwindigkeitsbegrenzungen der drei Situationstypen überprüft um die Trägheit des bisherigen Verfahrens zu reduzieren.

Wie bereits festgestellt wurde, sind die im Adaptionsmodul verwendeten Situationstypen zur dynamischen Parameteranpassung bei der Verwendung von UMIS als Fußgänger beziehungsweise bei sehr niedrigen Geschwindigkeiten teilweise ungeeignet.

Das Hauptproblem ergibt sich durch die falschen Richtungsangaben, wenn der Benutzer in kurzen Abständen seine Richtung ändert, sich langsam (ca. 0 bis 1,5 km/h) oder gar nicht bewegt. In diesen Fällen sollten Richtungsansagen durch das UMIS-System unterdrückt werden, da die Richtigkeit dieser Angaben nicht sichergestellt ist. Weiterhin sollte der Auswahlbereich verkleinert werden, damit für eine anschauliche Wiedergabe nur Objekte in Sichtweite bzw. Reichweite des Benutzers ausgewählt werden.

Das Adaptionsmodul wurde deshalb im Rahmen dieser Arbeit um den Situationstyp *Fußgänger* erweitert. Im Folgenden werden die einzelnen Adaptionsschritte für diesen neuen Funktionstyp vorgestellt.

Die Verwendung der durchschnittlichen Anhaltedauer oder Anhaltehäufigkeit ist als Bewegungsmerkmal für die Bestimmung dieses Situationstyps nicht sinnvoll, da das Verhalten eines Fußgängers sehr unterschiedlich sein kann. Aufgrund der sehr niedrigen Fortbewegungsgeschwindigkeit eines Fußgängers, die in der Regel unterhalb von 6 km/h liegt, wird bei der Situationserkennung nur die aktuelle Geschwindigkeit berücksichtigt.

Die zur Anpassung verwendeten Adaptionskurven wurden anhand, der in dieser Arbeit gewonnen Ergebnisse aus der Evaluierung, entsprechend parametrisiert.

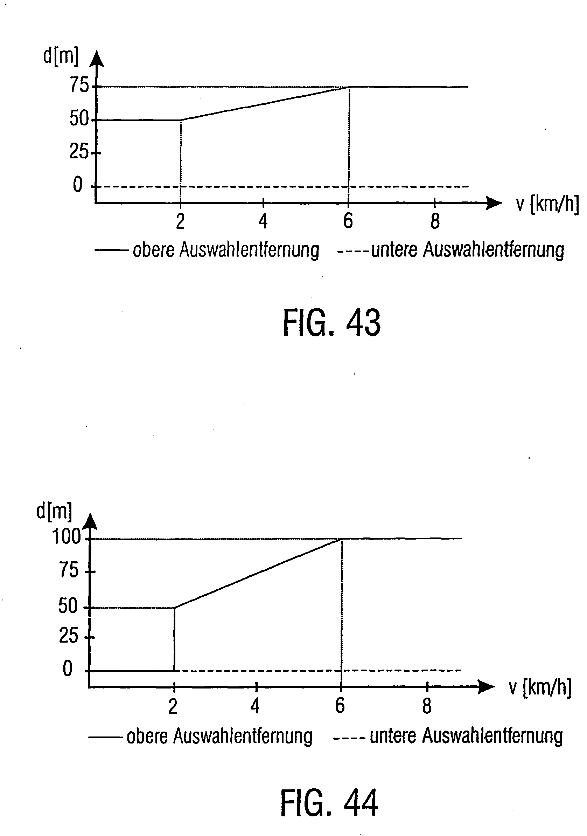

- **Obere und untere Auswahlentfernungen des primären Auswahlbereichs**
  Die Adaption der Auswahlentfernung des primären Auswahlbereichs zeigt die Kurve in Fig. 43. Die obere Auswahlentfernung liegt zwischen 50 und 75 Metern. Bei Geschwindigkeiten unterhalb von 2 km/h sind die vom GPS-Empfänger gelieferten Richtungsangaben unzuverlässig. Wegen der fehlenden Richtungsangaben sollten daher nur Objekte in unmittelbarer Nähe bzw. Sichtweite des Benutzers ausgewählt werden. Bei einer Geschwindigkeit über 2 km/h wird die Auswahlentfernung erhöht. Die untere Auswahlentfernung liegt konstant bei Null.

- **Obere und untere Auswahlentfernungen des sekundären Auswahlbereichs**

  Die Kurve in Fig. 44 zeigt die untere und obere Auswahlentfernung des sekundären Auswahlbereichs. Bei einer Geschwindigkeit unter 2 km/h wird der sekundäre Bereich nicht mehr verwendet. Unterhalb dieser Geschwindigkeit sind die gelieferten Richtungsansagen des GPS-Empfängers nicht zuverlässig. Aus diesem Grund können Objekte, die sich nicht in unmittelbarer Nähe, also nicht im primären Auswahlbereich, befinden, ohne eine Richtungsangabe schwer lokalisiert werden. Dadurch werden nur Objekte im primären Auswahlbereich berücksichtigt. Bewegt sich der Benutzer mit einer Geschwindigkeit über 2 km/h, so erfolgt eine Erhöhung der Auswahlentfernung.

- **Auswahlwinkel**

  Die Auswahlwinkel spielen bei der Adaption innerhalb des Situationstyps Fußgänger eine untergeordnete Rolle. Innerhalb dieser Situation besteht keine Notwendigkeit den Auswahlbereich durch einen Auswahlwinkel einzuschränken. Der Benutzer, der zu Fuß unterwegs ist, kann jederzeit problemlos anhalten und sich das Informationsobjekt in der angesagten Richtung betrachten. Bei niedrigen Geschwindigkeiten unter 2 km/h können Auswahlwinkel wegen der fehlenden Richtungsangaben nicht ausgewertet werden.

Das Hauptproblem bei der bisherigen dynamischen Objekt-Auswahl war die Auswahl von Informationsobjekten, die für eine Wiedergabe in unmittelbarer Nähe bestimmt waren, aus einer größeren Entfernung. Die beiden Nachteile, die dadurch entstehen, sind die Überflutung des Benutzers mit zahlreichen Objektwiedergaben und die fehlende Wiedergabe von Objekten, die bereits angesagt wurden, wenn sich der Benutzer ihnen später direkt nähert.

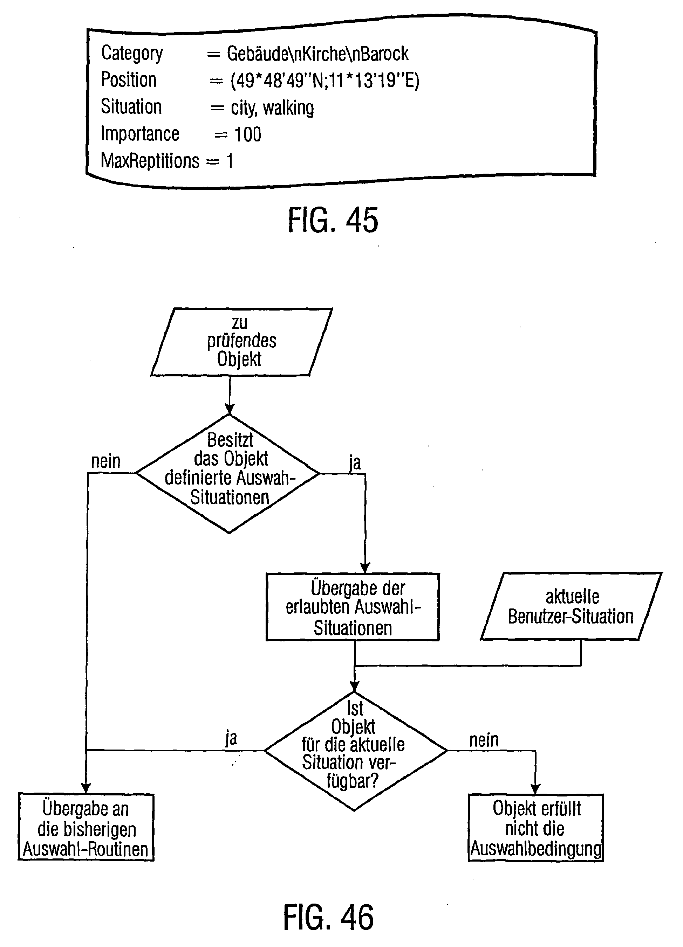

Eine Erweiterung der objekt-Beschreibungsdatei und eine entsprechende Anpassung der Auswahlroutine beseitigt dieses Problem. Das neue Prinzip erlaubt dem Autor die Situationstypen zu definieren, die für eine Auswahl des Objekts in Frage kommen. Die möglichen Situationen sind *Autobahn*, *Landstraße, Stadt* und der neu eingeführte Situationstyp *Fußgänger*. Das Datenfeld, welches diese Angaben enthält, besitzt die Bezeichnung Situation gefolgt von den englischen Bezeichnungen für die zulässigen Situationstypen. Die aufgezählten Situationstypen sind jeweils durch ein Komma getrennt. Fig. 45 zeigt das entsprechende Datenfeld aus einer Beschreibungsdatei eines Objekts, dass nur aus den Situationen Stadt oder Fußgänger ausgewählt werden darf.

Der in dieser Arbeit modifizierte Ablauf der geographischen Objekt-Auswahl ist in Fig. 46 dargestellt.

Informationsobjekte, die keine explizit definierten Auswahlsituationen besitzen, werden wie bisher durch die Auswahlroutine verarbeitet, sind also in jeder Situation auswählbar. Diese Erweiterung beseitigt nicht nur die oben erwähnten Probleme, sondern beschleunigt außerdem in bestimmten Fällen den Auswahlprozess. Ein Objekt, das für die aktuelle Situation nicht verfügbar ist, kann bereits nach dem ersten Auswahlschritt als solches detektiert werden und unnötige weitere Abfragen werden vermieden. In bestimmten Situationen ist daher eine deutliche reduzierung der Rechenzeit möglich.

Ein neuer Lösungsansatz, der durch die Einführung von objektabhängigen Auswahlbereichen eine entscheidende Verbesserung bei der geographischen Auswahl ermöglicht, wird im folgendem Abschnitt vorgestellt. Die Notwendigkeit eines neuen Konzepts, das eine zielgerichtete Auswahl von Objekten gewährleistet, zeigte sich bei der Evaluierung in verschiedenen Situationen.

In einem ersten Schritt wird die Motivation anhand eines kurzen Rückblicks auf die Evaluierungsergebnisse vorgestellt. Anschließend werden die Anforderungen an das neue Konzept aufgestellt. Das auf Basis der Anforderungen erarbeitete Prinzip und die Funktionsweise wird anschließend beschrieben. Ein Abschnitt befasst sich mit der Implementierung des Konzepts und den entsprechenden Algorithmen. Abschließend wird eine Kombination zwischen der bisherigen und der neuen Auswahlroutine erläutert.

Die geographische Beschreibung eines Informationsobjekts nur anhand seiner geographischen Position erwies sich bei den im Rahmen dieser Diplomarbeit durchgeführten Testfahrten und Simulationen als nicht ausreichend. Es zeigte sich, dass bei vielen Informationsobjekten ein definierter objektabhängiger Relevanzbereich sinnvoll ist. Dies ist ein Gebiet, in dem die Auswahl eines Objekts erlaubt ist. Die Motivationen sind dabei vielfältig. Die folgende Aufzählung wiederholt die wichtigsten Erkenntnisse der Evaluierung:

- **Unterschiedliche Auswahlentfernungen für-objekte**

  Informationsobjekte, wie z. B. Gebäude, besitzen unterschiedliche Größenordnungen. Der Autor besitzt bei dem bisherigen keine Möglichkeit, unterschiedliche Sichtweiten bzw. Entfernungen, aus denen ein Objekt ausgewählt werden darf, zu definieren. Der Olympiaturm in München beispielsweise wird ebenso wie ein Restaurant in einer kleinen Seitenstraße nur anhand seiner Position beschrieben.

- **Ansage von Objekten, wenn sie für den Benutzer sichtbar sind**

  Eine anschauliche Wiedergabe von Informationsobjekten ist in der Regel besonders im innerstädtischen Bereich dann gegeben, wenn für den Benutzer während der Wiedergabe die Objekte sichtbar sind. Bei einigen Objekten setzt der Autor der Beschreibungsdatei dieses voraus und erstellt entsprechend den Inhalt der Wiedergabe. Die freie Sicht in einer Stadt ist durch Sichthindernisse wie z. B. Gebäude jedoch in den meisten Fällen teilweise oder nicht gegeben.

- **Gezielte Ansage von Regionsinformationen**
  Ein weiteres Problem ist die gezielte Ansage von Regionsinformationen. Diese Informationen sind für ein größeres, jedoch wohl definiertes Gebiet relevant und sollten aus diesem Grund wiedergegeben werden, sobald sich der Benutzer in diesem Bereich befindet. Die bisherige Realisierung als positioniertes oder unpositioniertes Objekt ist für diese Art von Informationen nicht geeignet. Während positionierte Objekte in einem örtlich sehr eingegrenztem Bereich wiedergegeben werden, ist die Wiedergabe von unpositionierten Objekten zeitlich und örtlich undefiniert.

- **Festlegung der Wiedergabe-Reihenfolge**
  Ein wichtiges Einsatzgebiet von UMIS ist die Unterstützung von Besichtigungstouren entlang fester, vorgegebener Strecken, bei denen der Autor die Reihenfolge der Objektwiedergaben weitestgehend festlegen möchte. Die Festlegung dieser Reihenfolge erfolgt allerdings nur durch die geographische Position der Informationsobjekte und stößt in vielen Situationen an ihre Grenzen. Anhand des Beispiels aus Salzburg, wo UMIS als virtueller Reisebegleiter auf einem Passagierschi□ zum Einsatz kommt, wurden die prinzipiellen Schwierigkeiten deutlich. Für diese Besichtigungstour muss das UMIS-System vor der Rückfahrt mit einem neuen Datensatz erneut gestartet werden.

Die bisherige geographische Auswahl erfolgt nur relativ zum Benutzer, in Abhängigkeit von Position, Richtung und Geschwindigkeit,. Das neue Verfahren erlaubt dem Autor der Informationsobjekte, den Bereich, in dem das Objekt ausgewählt werden kann, individuell einzuschränken. Aus diesem Grund werden die objektabhängigen Relevanzbereiche eingeführt. Falls für ein Objekt ein objektabhängiger Relevanzbereich definiert ist, gelten für die geographische Auswahl folgende Bedingungen:

- Das Objekt muss zunächst gemäß aktueller Benutzerposition ausgewählt sein. Diese Bedingungen entspricht der bisherigen geographischen Auswahl.

- Zusätzlich muss sich der Benutzer im vom Autor des Informationsobjekts definierten objektabhängigen Relevanzbereich befinden. Falls diese Bedingung nicht erfüllt ist, erfolgt keine Auswahl.

Dieser Abschnitt stellt die detaillierten Anforderungen an das neue Konzept der objektabhängigen Relevanzbereiche vor. Die Anforderungen wurden hauptsächlich auf Basis der Ergebnisse der Evaluierungen erarbeitet.
Im Folgenden wird ein Überblick über die konkreten Anforderungen und Fähigkeiten gegeben, die bei der Entwicklung eines neuen Konzepts für die geographische Auswahl anhand objektabhängiger Relevanzbereiche sinnvoll erscheinen. Die detaillierte Umsetzung dieser Anforderungen beschreiben die nachfolgenden Abschnitte.

- **Definition von geometrischen Grundformen für die objektabhängigen Relevanzbereiche**

  - Bei der Beschreibung von objektabhängigen Relevanzbereichen sollten verschiedene zweidimensionale geometrische Grundformen zur Verfügung gestellt werden. Die Definition der Grundformen sollte sich an den in der Praxis erarbeiteten typischen Problemfällen orientieren.

  - Objektabhängige Relevanzbereiche sollen sowohl auf die "positionierten" als auch auf die "unpositionierten" Objekte anwendbar sein.

  - Die geometrischen Grundformen sollen keine fest definierten Größen besitzen, sondern beliebig parametrisierbar sein.

  - Die Beschreibung der geometrischen Grundformen erfolgt unter anderem durch geographische Standard-Koordinaten. Weiterhin stehen Entfernungs- und Winkelangaben zur Verfügung.

  - Um eine leichte Erzeugung und Zuordnung der Verwaltungsdaten zu jedem Objekt sicherzustellen, werden die entsprechenden Informationen wie bisher zusammen mit der jeweiligen Objektbeschreibung in einer separaten Datei gespeichert.

- **Bestimmung der relativen Lage eines Benutzers zu einem objektabhängigen Relevanzbereich**
  Für die definierten objektabhängigen Relevanzbereiche soll die relative Lage des Benutzers zu einem objektabhängigen Relevanzbereich bestimmbar sein. Bei der Bestimmung der relativen Lage ist lediglich interessant, ob die aktuelle Benutzerposition sich in einem objektabhängigen Relevanzbereich befindet oder nicht.
- **Definition eines objektabhängigen Relevanzbereichs**

Ein objektabhängiger Relevanzbereich soll aus der Kombination der zur Verfügung stehenden geometrischen Grundformen erstellt werden. Zu diesem Zweck soll ein boolscher Ansatz entwickelt werden, der beliebige Verknüpfungen geometrischer Grundformen im Rahmen eines boolschen Ausdrucks erlaubt. Geometrische Grundformen sollen dabei explizit ein- und auch ausschließbar sein.

- **Kompatibilität des neuen Auswahlverfahrens mit dem bisherigen Verfahren**
  Das neue Konzept soll sowohl in der Lage sein, das bisherige Auswahlverfahren komplett zu ersetzen, als auch als zusätzliche Komponente integrierbar sein. Bei der Benutzung als zusätzliche Komponente wird die Anforderung gestellt, dass bei fehlender Angabe eines objektabhängigen Relevanzbereichs das System das bisherige Auswahlverfahren verwendet.

- **Erweiterung der Testumgebung**
  Zur Evaluierung des neuen Verfahrens soll der Logfile-Viewer um die Darstellung der objektabhängigen Relevanzbereiche erweitert werden.

Der folgende Abschnitt gibt zunächst einen Überblick über das Prinzip der objektabhängigen Relevanzbereiche. Anschließend folgt eine detaillierte Beschreibung der einzelnen Arbeitsschritte und der detaillierten Funktionsweise.

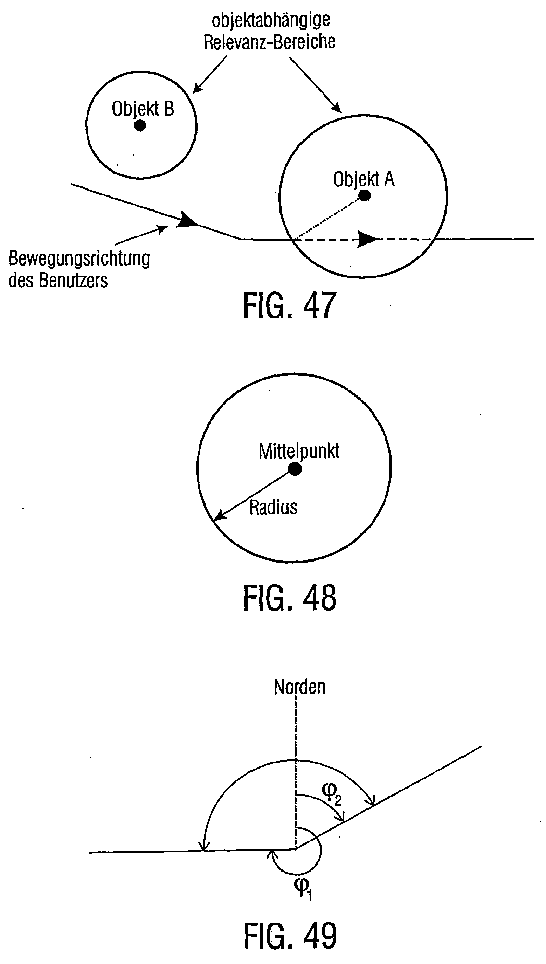

Anhand der Fig. 47 wird das grundlegende Prinzip der objektabhängigen Relevanzbereiche beschrieben. Die Figur zeigt zwei Informationsobjekte und deren Relevanzbereiche. Weiterhin ist ein exemplarischer Streckenverlauf dargestellt. Solange sich der Benutzer außerhalb eines objektabhängigen Relevanzbereichs bewegt, erfolgt keine Auswahl dieses Objekts, selbst wenn die Objekt-Auswahl gemäß des bisherigen geographischen Auswahlverfahrens in Frage käme. Die entsprechenden Abschnitte der Strecke sind in der Fig. rot markiert. Sobald sich der Benutzer jedoch innerhalb eines objektabhängigen Relevanzbereichs befindet, steht das Objekt für eine Auswahl zur Verfügung. In Fig. 47 kann zum Beispiel das Informationsobjekt A ausgewählt werden, solange sich der Benutzer in dessen objektabhängigen Relevanzbereich befindet. Der betreffende Streckenverlauf ist grün dargestellt. Die Auswahl in diesem Beispiel findet unmittelbar nach dem Eintritt in den objektabhängigen RelevanzBereich von Objekt A statt, weil zu diesem Zeitpunkt keine anderen Objekte zur Auswahl stehen.

Dieser Abschnitt führt vier geometrische Grundformen ein, die bei der Beschreibung von objektabhängigen Relevanzbereichen zur Verfügung stehen. Die folgende Auflistung stellt die vier geometrischen Grundformen zusammen mit den dazugehörigen Parametern allgemein und mathematisch vor.

- **Kreis**
  Ein wesentliches Problem bei der Objektbeschreibung durch den Autor, ist die nicht vorhandene Möglichkeit, verschiedene Auswahlentfernungen zu vergeben. Die Einführung der Kreisform beseitigt dieses Problem. Für die Beschreibung ist lediglich die Angabe des Mittelpunkts in geographischen Standard-Koordinaten und der Radius in Metern notwendig. Der Mittelpunkt des Kreises muss nicht identisch mit der Position des Objekts sein. Fig. 48 zeigt die entsprechende Form und die benötigten Parameter.

- **Winkelbereich**
  Bei dieser Grundform kann ein Winkelbereich angegeben werden, der nicht durch die Entfernung eingeschränkt ist, sondern nur durch einen definierten Start- und Stoppwinkel. Der Bereich ist durch die Angabe eines Ursprungs und durch zwei Winkel festgelegt, wie in Fig. 49 dargestellt. Für die Angabe eines Winkels ist eine gemeinsame Bezugsrichtung notwendig. Als gemeinsame Bezugsrichtung ist die Himmelsrichtung Nord definiert. Die Angabe der Winkel erfolgt relativ zur Richtung Norden (entspricht 0˚). Der Winkelbereich beginnt mit der Angabe des öffnenden Winkels und endet mit dem schließenden Winkel. Beide Werte müssen im Bereich [0˚ - 360˚] liegen. Die Orientierung verläuft im Uhrzeigersinn.

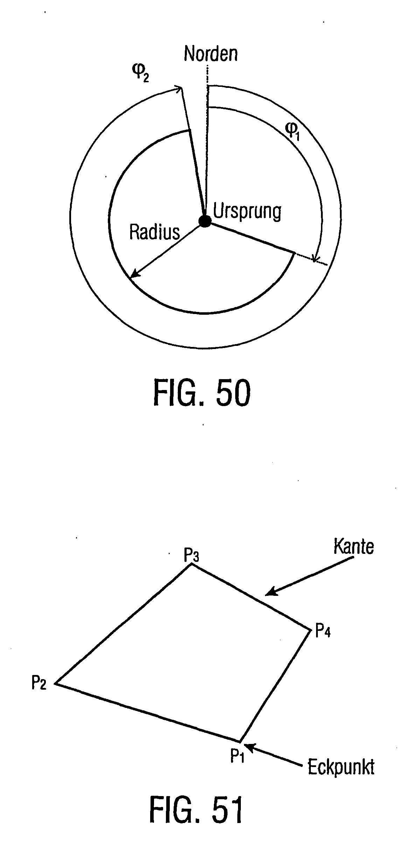

- **Kreissegment**
  Das Kreissegment stellt die Kombination aus Kreis und Winkelbereich dar. Diese Grundform ermöglicht die Angabe einer Auswahlentfernung und eines Winkelbereichs. Die benötigten Parameter sind die Vereinigungsmenge aus Kreisparametern und Winkelbereichsparametern. Fig. 50 zeigt ein Kreissegment zusammen mit den benötigten Parametern.

- **Polygon**
  Das Polygon ist eine geschlossene Figur, die durch ein Tupel von n Punkten

$$P = \{P_1, P_2, \ldots, P_n\}, \ P_n \in R^2$$

eindeutig definiert ist. Die Punkte werden als Eckpunkte bezeichnet. Ein Tupel bezeichnet eine geordnete Zusammenstellung von Objekten, bei der im Gegensatz zu Mengen eine Reihenfolge festgelegt ist. Die Seiten oder Kanten eines Polygons sind durch die Strecken $\overline{P_iP_{i+1}}$ (i = 1, ... , n - 1) und $\overline{P_nP_1}$ festgelegt. Ein Polygon muss weiterhin mindestens 3 Eckpunkte besitzen. Die hier eingeführten Bezeichnungen sind in Fig. 51 zur besseren Veranschaulichung dargestellt.

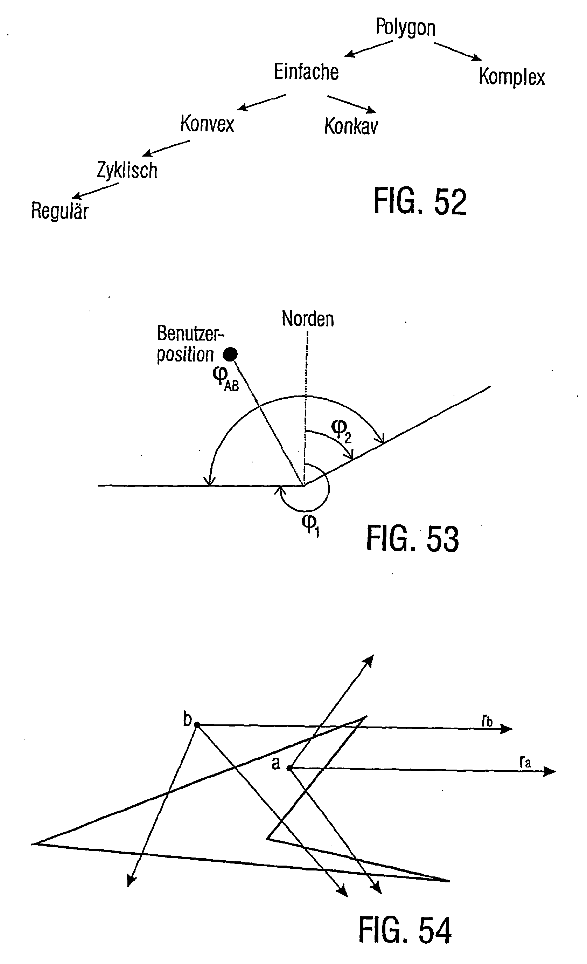

Polygone lassen sich in verschiedene Typen unterteilen, wie in Fig. 52 dargestellt. Zunächst können Polygone in einfache und komplexe Polygone unterteilt werden. Bei einem einfachen Polygon schneiden sich die Kanten nur in den Eckpunkten, andernfalls handelt es sich um ein *komplexes Polygon.*

*Konvexe Polygone* besitzen keine internen Winkel, die größer als 180˚ sind. Andernfalls handelt es sich um ein *konkaves Polygon.* Ein konvexes Polygon ist *zyklisch,* wenn alle Eckpunkte auf einem gemeinsamen Kreis liegen. Weiterhin ist ein zyklisches Polygon regulär, wenn sämtliche Kanten die gleiche Länge besitzen.

Nach der Einführung der für UMIS verfügbaren geometrischen Grundformen zur Beschreibung von objektabhängigen Relevanzbereichen, wird in diesem Abschnitt die Bestimmung der relativen Lage der Benutzerposition zu den jeweiligen geometrischen Grundformen behandelt. Bei der Bestimmung der relativen Lage ist lediglich interessant, ob der Benutzer sich innerhalb oder außerhalb einer geometrischen Grundform befindet. Diese Information muss möglichst schnell und effizient ermittelt werden, da während eines UMIS-Auswahlvorgangs Dutzende oder gar Hunderte solcher Berechnungen nötig sein können.

**Relative Lage zu einem Kreis**

Beim Kreis kann auf einfache Weise bestimmt werden, ob sich der Benutzer innerhalb oder außerhalb befindet. Für die Berechnung ist lediglich die Benutzerposition, der Kreisursprung und der Radius des Kreises notwendig. In einem ersten Schritt erfolgt die Berechnung des Abstands zwischen dem Mittelpunkt des Kreises und der Benutzerposition. Anschließend wird verglichen, ob die Entfernung zwischen den zwei Punkten größer ist als der Kreisradius. Ist die Entfernung größer, dann liegt die Benutzerposition außerhalb des Kreises, andernfalls innerhalb.

**Relative Lage zu einem Winkelbereich**

Zur Beschreibung der Methode, die die relative Lage eines Benutzers zu einem Winkelbereich berechnet, wird die Fig. 53 zur besseren Veranschaulichung herangezogen. Der Wert des öffnenden und schließenden Winkels liegt zwischen 0˚ und 360˚. Zunächst wird der Winkel $\varphi_{AB}$ berechnet, der die Benutzerposition relativ zum Ursprung des Winkelbereichs beschreibt. In einem zweiten Schritt muss unterschieden werden, ob der Wert des öffnenden Winkels $\varphi_1$ größer ist als der Winkel des schließenden Winkels $\varphi_2$. Ist $\varphi_1$ kleiner als $\varphi_2$, dann liegt die Position des Benutzers innerhalb des Winkelbereichs, wenn zusätzlich $\varphi_{AB}$ nicht kleiner als $\varphi_1$ und nicht größer als $\varphi_2$ ist. Der andere Fall liegt vor, wenn $\varphi_2$ kleiner als $\varphi_1$ ist. In diesem Fall liegt der Benutzer innerhalb des Winkelbereichs, wenn $\varphi_{AB}$ nicht kleiner als $\varphi_1$ ist oder $\varphi_{AB}$ nicht größer als $\varphi_2$ ist.

**Relative Lage zu einem Kreissegment**

Beim Kreissegment werden die Methoden zur Bestimmung der relativen Lage des Kreises und des Winkelbereichs kombiniert. Die Methode zur Bestimmung der Lage bei einem Kreis bestimmt zunächst, ob sich der Benutzer innerhalb des Radius des Kreissegments befindet. Falls das nicht der Fall ist, dann ist die Benutzerposition außerhalb des Kreissegments und das Entscheidungsverfahren endet. Liegt die Position des Benutzers aber in diesem Radius, dann befindet sich der Benutzer im Kreissegment, wenn zusätzlich die Benutzerposition im definierten Winkelbereich liegt.

**Relative Lage zu einem Polygon**

Zur Bestimmung, ob ein Punkt innerhalb eines Polygons liegt, gibt es verschiedene Verfahren. Im Rahmen dieser Arbeit wurde das Ray-Shooting Verfahren gewählt, weil es auf beliebige Polygone angewendet werden kann und dabei äußerst effizient vorgeht (Bjarne Stroustrup: **Die C++ Programmiersprache,** Addison-Wesley, 1997).

Die Bestimmung der Lage eines Punkts a innerhalb oder außerhalb eines Polygons *p* im zweidimensionalen Raum liegt die folgende theoretische Überlegung zugrunde: Man bewegt sich von einem weit entfernten Punkt auf einer geraden Linie zum Punkt *a*. Bis der Punkt *a* erreicht wird, werden die Kanten kein oder mehrmals geschnitten. Wenn eine Kante des Polygons einmal geschnitten wird, dann befindet man sich im Polygon. Nach dem nächsten Schnittpunkt liegt man wieder außerhalb des Polygons, solange bis wiederum eine Kante geschnitten wird. Allgemein lässt sich die Aussage treffen, dass sich der Punkt *a* innerhalb des Polygons *p* befindet, wenn bei der Bewegung vom weit entfernten Punkt zum Punkt *a* die Anzahl der Schnittpunkte des Strahls mit den Polygonkanten ungerade ist. Bei einer geraden Anzahl der Schnittpunkte liegt der Punkt a außerhalb des Polygons *p*. Ein in Fig. 54 dargestelltes Beispiel verdeutlicht diesen Gedankengang. Die Anzahl der Schnittpunkte der Halbgeraden, die ihren Ursprung in a haben, ist ungerade. Eine ungerade Anzahl bedeutet, dass der Punkt innerhalb des Polygons liegt. Die Anzahl der Halbgeraden, die vom Punkt b ausgehen, sind gerade, weil sich dieser Punkt außerhalb des Polygons befindet.

Im Folgenden wird dieser Algorithmus im Detail erläutert. Jede beliebige Halbgerade, die ihren Ursprung im Punkt a hat (Fig. 54), kann zu diesem Zweck verwendet werden. Aus Gründen der Einfachheit wird deshalb die Halbgerade $\overline{r_a}$ verwendet, die ihren Ursprung in a hat und horizontal zur x-Achse verläuft. Die Richtung von $\overline{r_a}$ verläuft in der positiven x-Achsenrichtung. Weiterhin gilt, dass die Reihenfolge der Schnittpunkte mit den Kanten des Polygons irrelevant ist. Die Entscheidung beruht somit nur auf der Parität (Parität ist die Eigenschaft einer Zahl, gerade oder ungerade zu sein) der Schnittpunktanzahl. Auf dieser Feststellung basierend ist es deshalb vollkommen ausreichend, dass der Algorithmus lediglich die Kreuzung einer Kante detektieren kann und die Parität entsprechend setzt.

Eine rechenintensive Simulation einer Bewegung auf einer Halbgeraden entfällt somit.

Die prinzipielle Vorgehensweise ist die Betrachtung der einzelnen Kanten des Polygons. Bei der Betrachtung einer Kante wird jeweils bestimmt, ob die Halbgerade $\overline{r_a}$ diese schneidet. In diesem Fall wird der Wert eines Paritätsbits, welches auf Null initialisiert war, invertiert. Nach der Abarbeitung sämtlicher Kanten liegt der Punkt a innerhalb des Polygons, wenn der Wert des Paritätsbits 1 ist. Anderenfalls liegt der Punkt außerhalb.

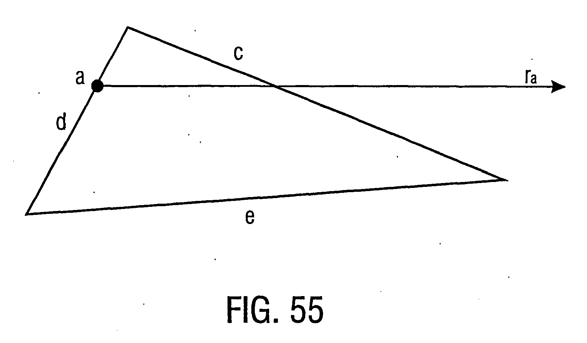

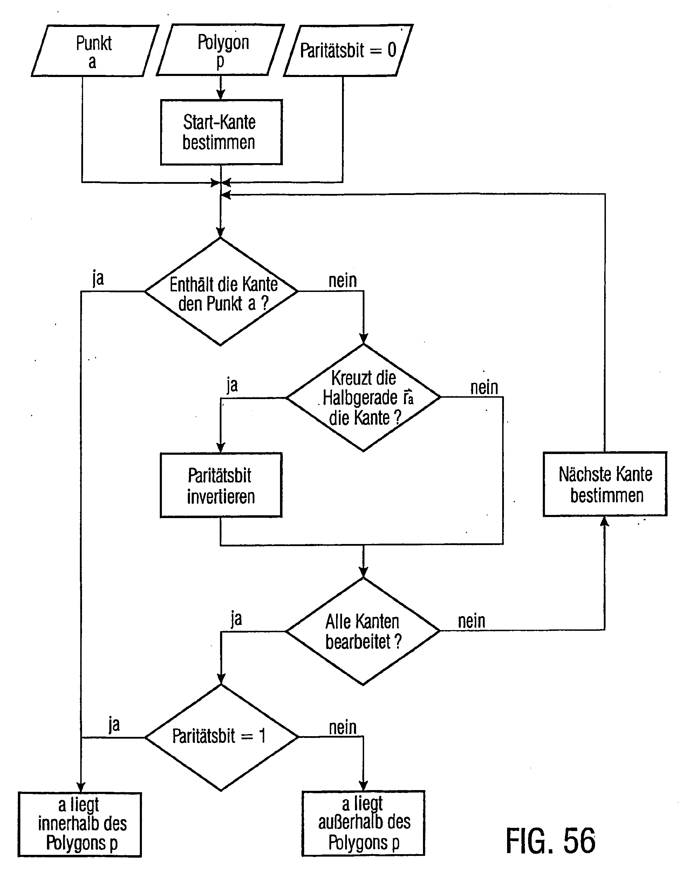

Die Halbgerade $\overline{r_a}$ kann eine Kante des Polygons auf drei verschiedene Arten schneiden. Der Ursprung der Halbgeraden $\overline{r_a}$ kann beispielsweise selbst auf der Kante eines Polygons liegen. Die wesentlichen beiden Möglichkeit sind, dass $\overline{r_a}$ die Kante kreuzt oder überhaupt nicht berührt. Die Kante d in Fig. 55 enthält zum Beispiel den Punkt a, die Kante c wird von $\overline{r_a}$ gekreuzt. Die Kante e dagegen wird von $\overline{r_a}$ nicht berührt. Das Ablaufdiagramm in Fig. 56 zeigt den in dieser Arbeit verwendeten Algorithmus zur Bestimmung, ob ein gegebener Punkt a innerhalb eines Polygons p liegt. Der Algorithmus betrachtet dabei die einzelnen Polygonkanten und invertiert jeweils den Wert des Paritätsbits, wenn die Kante von $\overline{r_a}$ gekreuzt wird. Ist der Wert des Paritätsbits nach der Abarbeitung sämtlicher Kanten 1, dann liegt der Punkt a innerhalb des Polygons, anderenfalls außerhalb. Falls eine Kante den Punkt a enthält, dann liefert der Algorithmus unmittelbar das Ergebnis, dass der Punkt innerhalb des Polygons liegt.

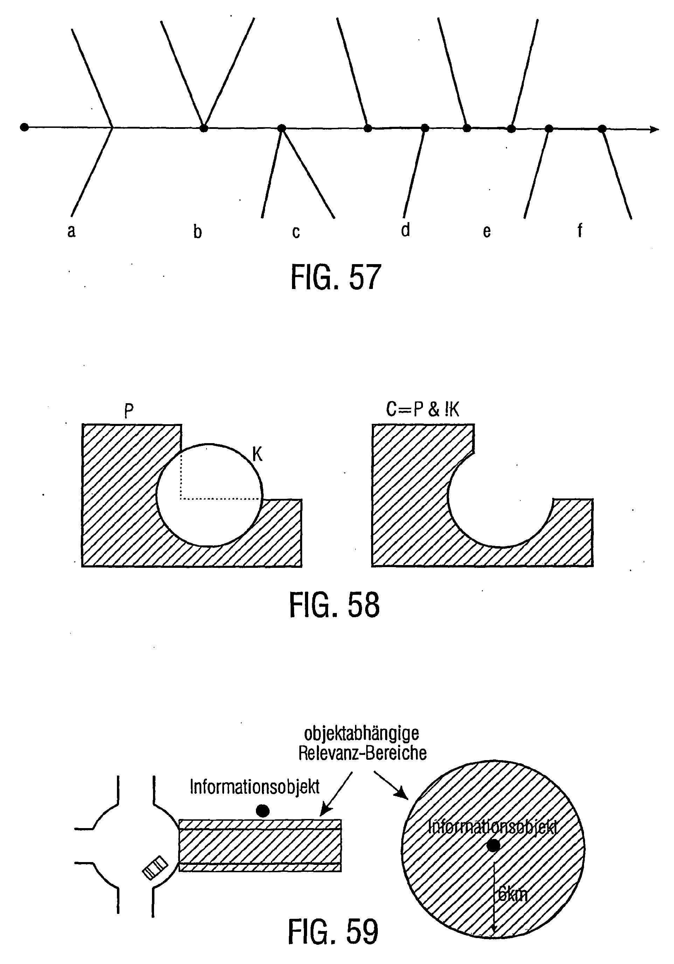

Im Ablaufdiagramm werden bei der Entscheidung, ob $\overline{r_a}$ die Kante kreuzt, einige Sonderfälle beachtet. Die Sonderfälle treten auf, sobald $\overline{r_a}$ den Eckpunkt einer Kante schneidet. Im Fall (a) in Fig. 57 muss das Paritätsbit invertiert werden, obwohl $\overline{r_a}$ eigentlich zwei Kanten kreuzt. In den Fällen (b) und (c) darf sich aber der Wert des Paritätsbit nicht ändern. Liegen die beide Eckpunkte einer Kante auf der Halbgeraden (d-f), dann darf sich die Parität ebenfalls nicht ändern. Dieses Verhalten kann erreicht werden, wenn das "Kreuzen" einer Kante in diesem Algorithmus wie folgt verstanden wird:

- Eine Kante wird nicht als gekreuzt von $\overline{r_a}$ bezeichnet, wenn $\overline{r_a}$ beide Eckpunkte der Kante schneidet.

- Eine Kante wird nicht als gekreuzt von $\overline{r_a}$ bezeichnet, wenn $\overline{r_a}$ den Eckpunkt mit dem niedrigeren y-Koordinatenwert schneidet.

Ein objektabhängiger Relevanzbereich für die Informationsobjekte in UMIS soll aus der Kombination der zur Verfügung stehenden geometrischen Grundformen erstellt werden. Zu diesem Zweck wird ein boolscher Ansatz verwendet, der beliebige Verknüpfungen der geometrischen Grundformen zu einem objektabhängigen Relevanzbereich erlaubt. Die logischen Operatoren UND "&", ODER "|" und NICHT "!" können bei der Erstellung eines booleschen Ausdrucks verwendet werden. Die Elemente in den boolschen Ausdrücken dürfen nur die Werte "wahr" oder "unwahr" annehmen.

Die Definition eines objektabhängigen Relevanzbereichs anhand eines booleschen Ausdrucks zeigt Fig. 58.

Als geometrische Grundform wird in dem vorgestellten Beispiel ein Polygon $P$ und ein Kreis $K$ verwendet. Der boolsche Ausdruck $P\&!K$ definiert den objektabhängigen Relevanzbereich $C$. Die Wahrheitswerte der Elemente des Ausdrucks $P$ und $K$ sind jeweils 0, wenn die Benutzerposition außerhalb dieser geometrischen Grundformen ist. Liegt beispielsweise die Benutzerposition innerhalb des Polygons, dann bekommt das Element $P$ den Wert 1. Ein Informationsobjekt in UMIS wird nur für die Auswahl berücksichtigt, wenn der gesamte boolsche Ausdruck den Wert 1 hat und der Benutzer sich damit in dem vom Autor definierten objektabhängigen Relevanzbereich befindet.

Das hier vorgestellte äußerst flexible Prinzip eröffnet bei der Definition eines objektabhängigen Relevanzbereichs für ein Informationsobjekt vielseitige Möglichkeiten, von denen im Folgenden einige exemplarisch vorgestellt werden.

Dieser Abschnitt zeigt anhand einiger Beispiele, dass das neue Konzept der objekta-bhängigen Relevanzbereiche die gestellten Anforderungen erfüllt und sich flexibel für vielfältige Problemstellungen anwenden lässt. Die folgenden Beispiele behandeln typische Probleme, die mit der bisherigen geographischen Auswahl nicht zufriedenstellend lösbar sind, durch die Definition objektabhängiger Relevanzbereiche jedoch auf einfache Weise umgangen werden können. Zu jedem vorgestellten Problemen wird jeweils eine Lösung beschrieben.

- **Unterschiedliche Auswahlentfernungen für Objekte**

  Mit den objektabhängigen Relevanzbereichen ist es nun möglich, dass Informationsobjekte unterschiedliche Auswahlentfernungen besitzen. Dem Olympiaturm in München kann beispielsweise eine größere Auswahlentfernung zugewiesen werden als einem Restaurant in einer kleinen Seitenstraße. Der Olympiaturm, der aus großer Entfernung ausgewählt werden soll, kann aus Gründen der Einfachheit einen kreisförmiger Bereich um seine geographische Position besitzen. Beim Restaurant soll die Einschränkung gelten, dass es nur ausgewählt werden darf, wenn sich der Benutzer in der gleichen Straße wie das Restaurant befindet. In diesem Fall empfiehlt es sich, den Relevanzbereich durch ein Polygon zu beschreiben, weil auf diese Weise am besten der gewünschte Auswahlbereich definiert werden kann. Fig. 59 zeigt die beschriebenen Relevanzbereiche dieser zwei Informationsobjekte. Der Autor besitzt nun die Möglichkeit, unterschiedliche Auswahlentfernungen zusammen mit der Objektbeschreibung zu definieren. Es gilt jedoch zu beachten, dass die Auswahlentfernungen eines Informationsobjekts nur eingeschränkt werden können, niemals über die geographischen Auswahlparameter hinaus vergrößert werden können.

- **Ansage von Objekten, wenn sie für den Benutzer sichtbar sind**

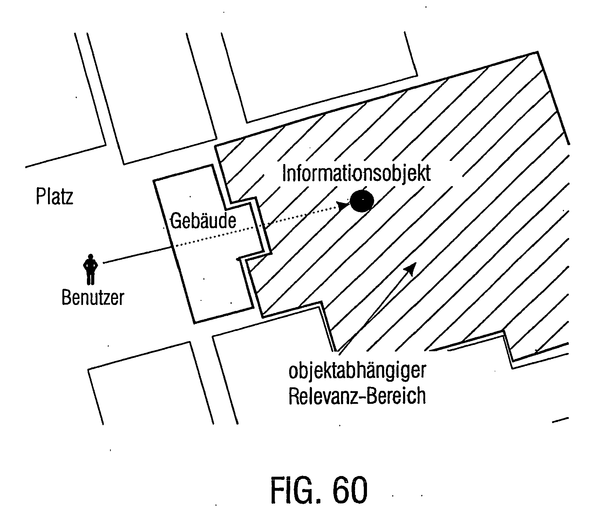

  Eine anschauliche Wiedergabe von Informationsobjekten ist besonders in Städten dann gegeben, wenn für den Benutzer das beschriebene Objekt während der Wiedergabe sichtbar ist. Durch die objektabhängigen Relevanzbereiche kann diese Anforderung erfüllt werden. Das Informationsobjekt in Fig. 60 soll z. B. nur ausgewählt werden, wenn es für den Benutzer sichtbar ist. Der dargestellte objektabhängige Auswahlbereich markiert das entsprechende Gebiet.

- **Entfernungsabhängige Objektbeschreibung**

  Mit Hilfe der objektabhängigen Relevanzbereiche können entfernungsabhängige Objektbeschreibungen wiedergegeben werden. Zum Beispiel können für den Olympiaturm, zwei Informationsobjekte mit unterschiedlichen Relevanzbereichen angelegt werden. Das eine Informationsobjekt soll beispielsweise aus einer großen Entfernung wiedergegeben werden, wobei der Detailgrad wegen der großen Entfernung niedrig sein soll. Im Gegensatz dazu, soll das andere Informationsobjekt nur in unmittelbarer Nähe ausgewählt werden, jedoch mit einem höheren Detailgrad.

- **Gezielte Ansage von Regionsinformationen**

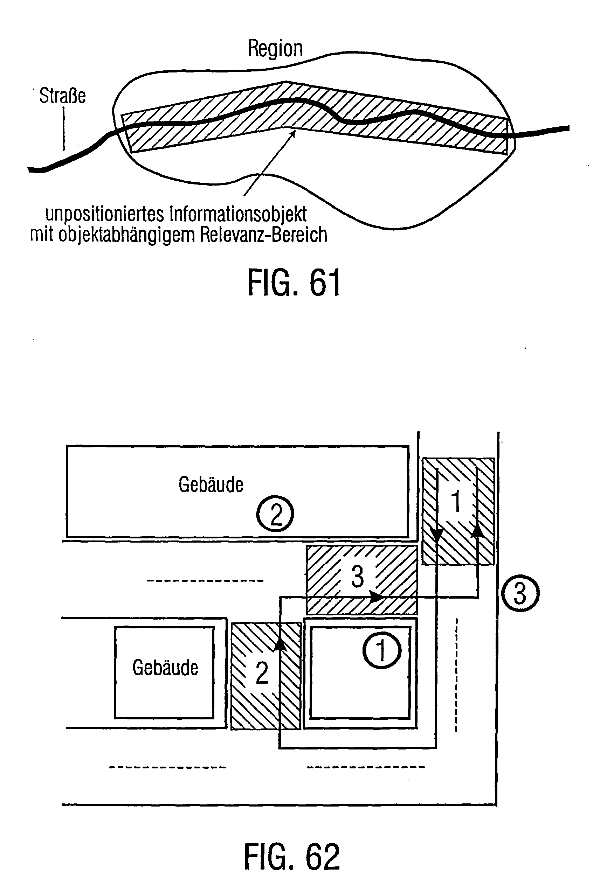

  Die gezielte Ansage von Informationen, die nur in einem bestimmten Gebiet wiedergegeben werden sollen, stellt durch die Einführung des Konzepts der objektabhängigen Relevanzbereiche kein Problem mehr dar. Die unpositionierten Objekte, die für derartige Situationen konzipiert wurden, können nun durch einen objektabhängigen Relevanzbereich gezielt in ihrer "Gültigkeit" auf eine bestimmte Region eingeschränkt werden ohne eine exakte Position angeben zu müssen. Fig. 61 zeigt, wie in einem Gebiet der Straßenverlauf durch ein Polygon als Relevanz-Gebiet markiert ist. Dieser objektabhängige Relevanzbereich gehört hier zu einem unpositionierten Informationsgebiet. Das vorgestellte Szenario erlaubt die einmalige generelle Vorstellung der Region, sobald sich der Benutzer in die Region hineinbewegt (unabhängig von der Richtung aus der er die Region besucht), sobald keine positionierten Informationsobjekte zur Verfügung stehen.

- **Erstellung von Besichtigungstouren**

  Ein wichtiges Einsatzgebiet von UMIS ist die Erstellung von Besichtigungstouren, bei denen der Autor die Reihenfolge der Objektwiedergaben weitgehend festlegt. Die Fig. 62 zeigt einen Streckenverlauf, bei dem die Objekte in einer bestimmten Reihenfolge wiedergegeben werden sollen. Die verwendeten Zahlen zeigen, welcher objektabhängiger Relevanzbereich zu welchem Informationsobjekt gehört. Weiterhin zeigen sie die gewünschte Reihenfolge der Wiedergabe.

Obwohl das objektabhängige Auswahl-Verfahren zusammen mit dem Standard-Verfahren eine eigenständige Lösung für die geographische Auswahl darstellt, bietet eine Kombination mit dem dynamischen Auswahlverfahren weitere Vorteile.

Bei der objektabhängigen Auswahl müssen sämtliche verfügbaren Objekte, die am Ende aller selektiven Auswahlschritte übrig sind, bei jedem neuen Auswahlprozess darauf hin überprüft werden, ob der Benutzer sich im zugehörigen objektabhängigen Relevanzbereich befindet. Dieses Vorgehen ist bei einer großen Anzahl von Objekten sehr rechenintensiv. Die Lösung ist eine geschickte Kombination des dynamischen Auswahlprozesses mit der objektabhängigen Auswahl.

Die geographische Grobauswahl liefert in diesem Fall wie bisher aus der Menge der registrierten Informationsobjekte diejenigen, die gemäß der aktuellen geographischen Auswahl-parameter überhaupt in Frage kommen. Die geographischen Auswahlparameter werden durch das dynamische Adaptionsverfahren auf die gegenwärtige Umgebungssituation angepasst. Die vorselektierten Objekte müssen nun auf die Einhaltung der geographischen und abstrakten Mindestanforderungen überprüft werden. Folgende Mindestanforderungen werden bei diesem kombinierten Auswahlverfahren in der aufgelisteten Reihenfolge abgefragt:

- Der erste Schritt überprüft, ob das Objekt aus der aktuellen Umgebungssituation ausgewählt werden darf. Dieser Schritt ermöglicht es schon im Vorfeld, viele Objekte aus der Auswahlliste zu entfernen, die nicht für die aktuelle Umgebungssituation verfügbar sind.

- Falls keine gültigen Situationstypen in der Objektbeschreibung spezifiziert sind, wird diese Anforderung immer als erfüllt angesehen.

- Der nächste Schritt beinhaltet die bisherigen geographischen und abstrakten Auswahlkriterien, die die Anzahl der in Frage kommenden Objekte weiter reduzieren (selektive nicht gerichtete Auswahl).

- Im letzten Schritt wird überprüft, ob das Objekt einen objektabhängigen Relevanzbereich besitzt und ob der Benutzer sich in diesem Auswahlbereich befindet. Falls kein objektabhängiger Relevanzbereich definiert ist, gilt auch diese Anforderung automatisch als erfüllt.

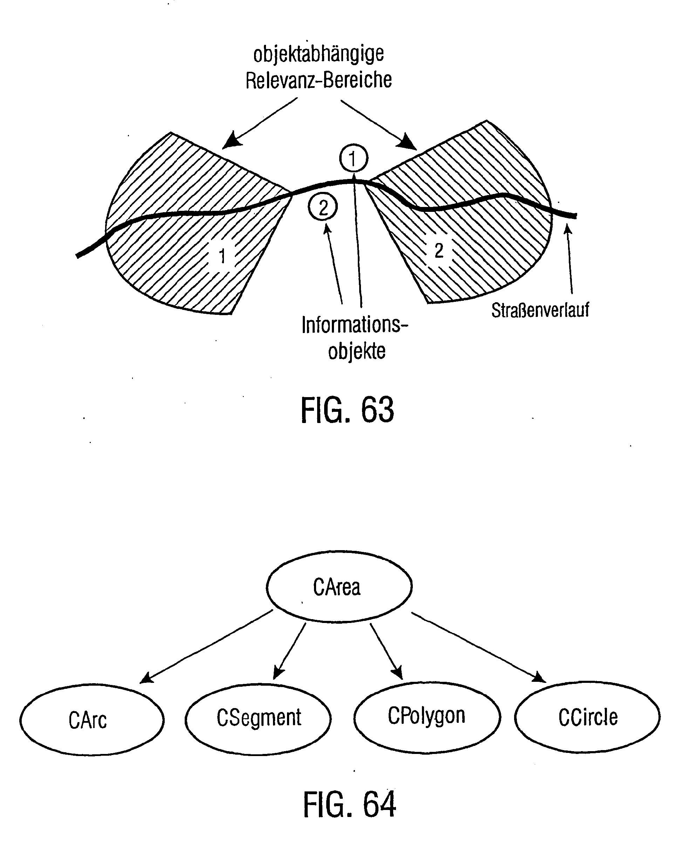

Ein Objekt, das alle diese Kriterien erfüllt, wird der vorläufigen Auswahl hinzugefügt. Anschließend erfolgt die gewichtende Auswahl, um aus der Menge aller gültigen Objekte, das für den Benutzer relevanteste zu ermitteln. Das Objekt, das nach der endgültigen Auswahl als aktuell relevantestes übrig bleibt, wird für die Wiedergabe zurückgeliefert.
Das kombinierte Auswahlverfahren eröffnet des weiteren neue Möglichkeiten bei der gezielten Wiedergabe von Objekten. So kann ein objektabhängiger Relevanzbereich so erstellt werden, dass eine richtungsabhängige Auswahl möglich ist. Fig. 63 zeigt als Beispiel zwei Informationsobjekte, die nur aus einer bestimmten Richtung angesagt werden dürfen.
Das Informationsobjekt mit der Nummer 1 soll nur präsentiert werden, wenn der Benutzer sich vom Westen aus auf das Objekt zu bewegt. Beim Informationsobjekt mit der Nummer 2 verhält es sich umgekehrt.
Diese neue Möglichkeit wird später bei der Evaluierung in verschiedenen Situationen ausgenutzt, um bisherige problematische Situationen zu lösen.
Das bereits vorhandene UMIS-System besitzt einen modularen Aufbau, der sich auch in der Implementierung wiederspiegelt. Dies bedeutet, dass funktionale Einheiten gekapselt wurden und ausschließlich über exakt definierte Schnittstellen miteinander kommunizieren. Das UMIS-System wurde daher in ANSI C++ implementiert. Diese Programmiersprache erlaubt eine modulare und objektorientierte Softwareentwicklung. Weiterhin ist diese Programmiersprache auf zahlreichen Plattformen und Betriebssystem vorhanden.
Das Konzept der objektabhängigen Auswahlbereiche erlaubt es den Wiedergabebereich eines Objekts gezielt einzuschränken. Dazu werden geographische Bereiche definiert in denen eine Auswahl möglich ist. Damit ein Objekt wiedergegeben werden kann müssen die bereits vorhandenen geographischen und abstrakten Kriterien erfüllt sein. Zusätzlich muss überprüft werden ob sich der Benutzer in einem erlaubten Wiedergabebereich befindet. Bei Verwendung komplexer Auswahlbereiche kann diese Berechnung sehr rechenintensiv sein. Dieser zusätzliche Auswahlschritt wird daher erst am Ende des bisherigen Auswahlprozesses durchgeführt. Die Auswahlschritte für den erweiterten Auswahlprozess werden daher in der folgenden Reihenfolge durchgeführt.

- Geographische Grobauswahl

- Auswahl nach geographischen und abstrakten Kriterien

- Überprüfung der objektabhängigen Relevanzbereiche

- Endgültige Auswahl

Alle bisher vorhandenen Auswahlschritte wurden im Auswahl-Modul durchgeführt. Dieses Modul wird daher um den neuen Auswahlschritt erweitert. Im Folgenden wird dieser Auswahlprozess kurz beschrieben:
Die geographische Grobauswahl bestimmt zu Beginn des Auswahlprozesses die grundsätzlich für eine Selektion in Frage kommende Menge an Objekten. Dazu wird ein maximaler Auswahlbereich berechnet. Sukzessiv werden alle in diesem maximalen Auswahlbereich befindlichen Objekte zurückgeliefert. Für jedes zurückgelieferte Objekt überprüft das Auswahl-Modul im zweiten Schritt die bisherigen geographischen und abstrakten Mindest-Anforderungen. Sämtliche Objekte die diese Kriterien erfüllen werden in einer Objektliste gespeichert. Anschließend entfernt das Auswahl-Modul alle Objekte, deren Relevanzbereiche für die aktuelle Position keine Wiedergabe erlauben, aus dieser Liste. Falls nach diesem Schritt zwei oder mehr Objekte in der Objekt-liste verbleiben, werden bei der Endgültigen Auswahl die einzelnen Objekte untereinander verglichen und genau ein Objekt für die Wiedergabe selektiert.
Wie bereits in diesem Abschnitt erwähnt, können objektabhängige Relevanzbereiche durch eine boolsche Kombination geometrischer Grundformen definiert werden. Für die Definition von objektabhängigen Relevanzbereichen werden daher folgende Informationen benötigt.

- Liste der verwendeten geometrischen Grundformen

- Beschreibung der boolschen Verknüpfung

Die geometrischen Grundformen wurden mit den in Fig. 64 dargestellten Modulen realisiert. Für jede benötigte geometrische Grundform existiert ein entsprechendes C++ Modul. Alle dargestellten Klassen sind von der Basis-Klasse CArea abgeleitet, welche die Basisfunktionalitäten enthält.

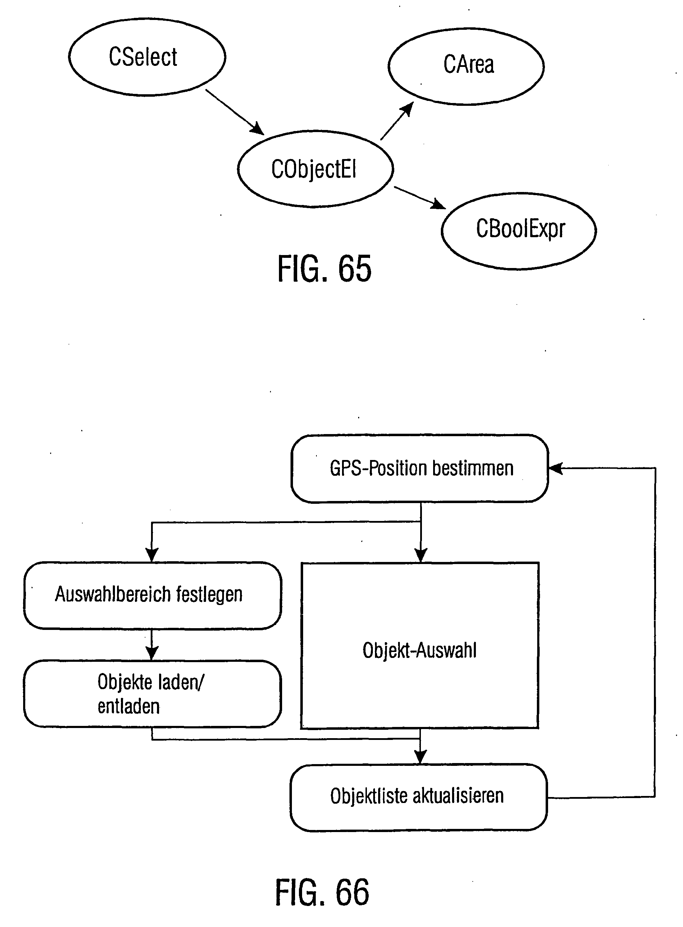

Fig. 65 zeigt eine Übersicht über die bei der Auswertung der objektabhängigen Relevanzbereiche beteiligten Module.

Die Klasse cobjectElement wurde erweitert und ist nun in der Lage eine Liste der oben beschriebenen geometrischen Grundformen zu verwalten. Zusätzlich ist die Klasse nun in der Lage, die Beschreibung der boolschen Verknüpfung von geometrischen Grundformen zur Laufzeit zu speichern. Die boolsche Verknüpfung wird in der Klasse CObjectElement als String abgespeichert.

Die Klasse CBoolExpression wird verwendet um die in der Beschreibungsdatei angegebene boolsche Verknüpfung auszuwerten.

Für eine effiziente Auswahl von Informationsobjekten muss die Anzahl der zur Laufzeit verfügbaren Informationsobjekte zu jeder Zeit begrenzt werden. Das vorliegende Abschnitt beschäftigt sich nun mit einem möglichen Ansatz, auch die Menge an im Speicher zu haltenden Metadaten zur UMIS-Laufzeit zu reduzieren. Die Reduzierung der Anzahl der Informationsobjekte nach geographischen Kriterien erfolgt in UMIS zum einen beim Programmstart und während der Initialisierung und zum anderen zyklisch bei jedem Auswahlprozess in der geographischen Vorauswahl.

Um die Anzahl der Informationsobjekte bei jedem Auswahlvorgang möglichst gering zu halten, können bisher Informationsobjekte nach Regionen geordnet in Verzeichnissen gespeichert werden. Vor Antritt einer Fahrt kann durch die Wahl eines Ordners eine bestimmte Region in ÜMIS gewählt werden. In diesem Fall werden durch UMIS nur die zu der gewählten Region gehörenden Informationsobjekte eingelesen. Ein Vorteil ist der niedrigere Bedarf an Speicher und Rechenzeit durch die begrenzte Anzahl an Objekten. Der gravierende Nachteil dieser Vorgehensweise ist die Interaktion des Benutzers, der seine Fahrtstrecke im Voraus kennen muss.

Die Initialisierung des Objektlisten-Moduls erlaubt es, Minimal- und Maximalwerte für den Längen- bzw. Breitengrad der Objekte zu setzen, die eingelesen werden sollen. Alle Objekte, die außerhalb dieses Bereiches liegen, werden nicht berücksichtigt und bereits bei der Initialisierung des UMIS-Systems verworfen. Dieser Mechanismus besitzt den Nachteil, dass der zu Beginn gewählte Bereich zur Laufzeit nicht geändert werden kann. Er setzt damit voraus, dass die Reiseroute schon vor Antritt der Fahrt vollständig bekannt ist, was dem Grundgedanken von UMIS bezüglich völliger Bewegungsfreiheit als Benutzer widerspricht.

Wie obenstehend beschrieben, wird bei der geographischen Grobauswahl in Abhängigkeit von der Position des Benutzers ein rechtwinkliger Auswahlbereich berechnet. Nur die in diesem Auswahlbereich befindlichen Objekte werden für die nachfolgenden Auswahlverfahren berücksichtigt. Die Implementierung der geographischen Grobauswahl in UMIS besitzt den Nachteil, dass alle Informationsobjekte bereits während der Initialisierung eingelesen werden müssen. Dadurch wird die notwendige Dauer des Programmstarts und der Speicherbedarf erhöht. Weiterhin ist das beschriebene Raster für die Berechnung des Auswahlbereiches bisher relativ grob gewählt so, dass eine freie Vorauswahl der überhaupt relevanten Objekte nur eingeschränkt möglich ist.

Um die im vorigen Abschnitt genannten Probleme zu vermeiden, wurden im Rahmen dieser Diplomarbeit folgende Anforderungen für eine zukünftige Objekt-Verwaltung in UMIS erarbeitet:

- Benutzerinteraktionen müssen minimiert werden

- während der Initialisierung dürfen nur Objekte geladen werden, die sich in dem oben genannten Auswahlbereich befinden

- der Auswahlbereich für die geographische Grobauswahl muss verfeinert werden

- Objekte müssen dynamisch zur Laufzeit vom UMIS System geladen werden können

- Objekte müssen dynamisch zur Laufzeit vom UMIS System entfernt werden können

- Objekte dürfen erst bei Bedarf geladen werden

- durch die dynamische Aktualisierung der Objektliste dürfen im System zur Laufzeit keine erheblichen Verzögerungen stattfinden

Im Rahmen dieser Diplomarbeit wurde das Verfahren zur geographischen Vorauswahl verfeinert. Die grundsätzliche Idee besteht darin, ein intelligentes Zwischenspeichern von Informationsobjekten durchzuführen. Es sollen hierbei nur Objekte im Speicher gehalten werden, die zum aktuellen Zeitpunkt relevant sind. Zusätzlich soll eine ständige Anpassung des relevanten Auswahlbereichs, und ein damit verbundenes Ent- bzw. Nachladen der Informationsobjekte anhand der Parameter Geschwindigkeit, Bewegungsrichtung, Umgebungssituation etc. erfolgen.

Während der Initialisierung des Systems sind in Bezug auf die geographische Auswahl folgende Aufgaben in der unten beschriebenen Reihenfolge durchzuführen.

- Position des Benutzers über GPS bestimmen

- aktuell relevanten Auswahlbereich bestimmen

- Informationsobjekte im definierten Auswahlbereich laden

- Position aller verfügbaren Informationsobjekte bestimmen

Die Bestimmung der Position aller verfügbaren Objekte im ersten Schritt muss derart erfolgen, dass ein Laden der Objektdateien nicht notwendig ist. Im Gegensatz zum existierenden System werden während der Initialisierung nicht alle in einer durch den Benutzer vorgegebenen Region vorhandenen Objekte geladen, sondern nur die im berechneten, aktuell maximal relevanten Auswahlbereich befindlichen Objekte. Der Auswahlbereich wird in Abhängigkeit vom Standort des Benutzers während des Programmstarts berechnet, weshalb die Verfügbarkeit von GPS während der Initialisierung vorausgesetzt wird.

Damit der Auswahlprozess durch das Laden von Objekten nicht längerfristig unterbrochen wird, muss das dynamische Nach- bzw. Entladen von Objekten parallel zum Auswahlprozess erfolgen, wie in Fig. 66 dargestellt.

Die nachgeladenen Objekte werden im Anschluss an die Objekt-Auswahl, in die Objektverwaltung eingefügt. Objekte, die sich nicht mehr im Auswahlbereich befinden, müssen aus der Objektlistenverwahrung entfernt werden. Die Aktualisierung der Objektliste darf erst am Ende des Auswahlprozesses erfolgen, da ansonsten Zugriffe auf die Objektliste durch das UMIS-Hauptmodul inkonsistent werden würden. Die Objekt-liste sollte daher während der Objekt-Auswahl durch das UMIS-Hauptmodul "gesperrt" sein.

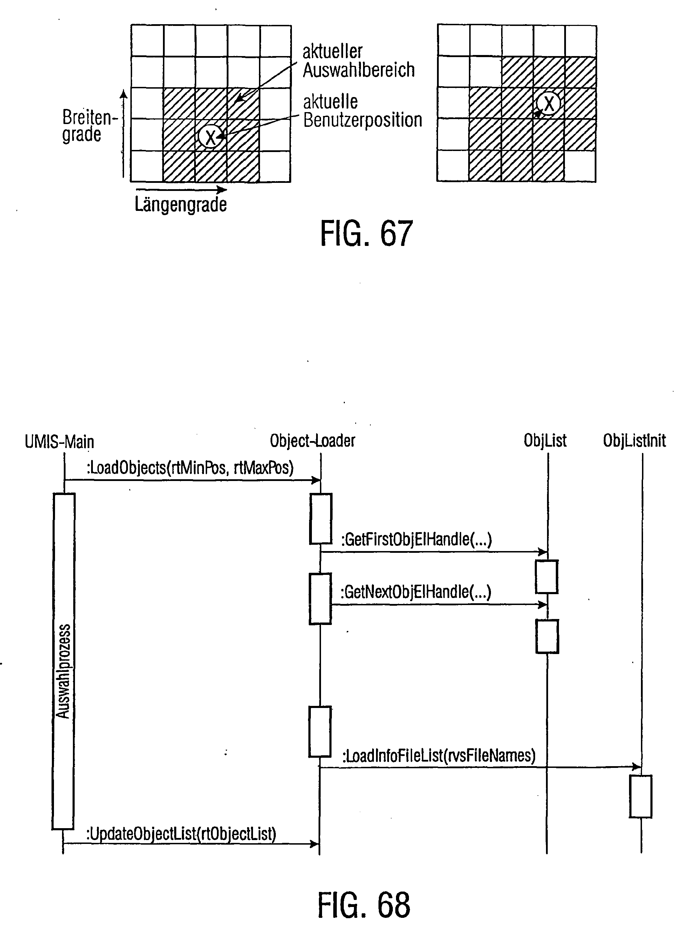

Ein Beispiel für eine Änderung des Auswahlbereichs ist in Fig. 67 dargestellt. In den beiden Rasterfeldern ist das Feld, in dem sich der Benutzer aktuell befindet, durch ein "X" markiert. Der schwarz schraffierte Bereich markiert den aktuellen Auswahlbereich. Die Objekte in diesen Feldern sind bereits im System geladen und stehen für den Auswahlprozess zur Verfügung. Die grün schraffierten Felder zeigen Bereiche, in denen Objekte nachgeladen werden müssen. Felder, deren Informationsobjekte nicht mehr benötigt werden, sind rot schraffiert.

Die Reihenfolge der zu ladenden Objekte muss entfernungsabhängig gewählt werden. Dies bedeutet, dass Objekte mit einer kleineren Distanz zum Benutzer auch früher geladen werden und damit schneller für nachfolgende Auswahlprozesse zur Verfügung stehen. Diese Vorgehensweise hat mehrere Vorteile. Zum einen stehen die zeitlich früher benötigten Objekte, wie bereits erwähnt, auch früher für den Auswahlprozess zur Verfügung. Zum anderen ist das System unempfindlicher gegen häufige Änderungen des Auswahlbereichs. Objekte, die zeitlich früher im Auswahlprozess benötigt werden, bleiben im Speicher erhalten. Das Entfernen von Objekten sollte aus den erwähnten Gründen in der umgekehrten Reihenfolge erfolgen. Dies bedeutet, dass Objekte mit der größten Entfernung zum Benutzer als erstes entfernt werden.

Für die Realisierung des oben erläuterten Konzeptes einer ortsabhängigen dynamischen Aktualisierung der Objektliste wird ein neues Modul als Kontrollinstanz eingeführt. Dieses Modul implementiert die Ablaufsteuerung für die in Fig. 66 dargestellten "quasiparallelen" Vorgänge und ist für die Aktualisierung der Objektliste verantwortlich. Für das neue Modul, dem *ObjectLoader*, ergeben sich somit folgende Teilaufgaben:

- maximalen Auswahlbereich für die Objektauswahl festlegen

- Liste der zu ladenden Objekte bzw. nicht mehr benötigten Objekte erstellen

- Objekte laden

- Objektliste aktualisieren

Für die Realisierung der genannten Teilaufgaben kann der *objectLoader* auf die bereits vorhandenen Module zurückgreifen. Das *Objectlist-Modul* wird beispielsweise benötigt, um die vom ObjectLoader geladenen Objekte in einer temporären Objektliste abzuspeichern. Die Objektliste des UMIS-Hauptmoduls darf während des Objekt-Aktualisierung nicht verwendet werden, damit der Zugriff des UMIS-Hauptmoduls auf die Objektliste konsistent bleibt. Zum Laden der Objekte greift der ObjectLoader auf das *ObjListInit-Modul* zu.

Anhand eines UML-Sequenzdiagramms (UML = Unified Modeling Language) werden die beschriebenen Arbeitsschritte in Fig. 68 verdeutlicht. Das Sequenzdiagramm stellt die beteiligten Objekte (horizontale Anordnung) und die zeitliche Aufrufreihenfolge (vertikale Darstellung) ihrer Funktionen dar. Nachdem das UMIS-Hauptmodul den Minimal- und Maximalwert der Längen und Breitengrade des Auswahlbereichs berechnet hat, werden diese Werte an den *ObjectLoader* übergeben. Der *ObjectLoader* reicht diese Werte an das *ObjectList-Modul.*

Das *ObjectList-Modul* berechnet mit Hilfe die dazugehörigen Auswahlfelder. Anschließend ermittelt der *ObjectLoader* durch das mehrmalige Aufrufen der Funktion *GetNextObjEl-Handle* alle Objekte im Auswahlbereich. Mit Hilfe des *ObjListInit-Moduls* kann der *ObjectLoader* anschließend die zu ladenden Objekte aus dem Datei-System des jeweiligen Rechners laden. Dazu wird dem *ObjListInit-Modul* eine Referenz auf die Objekt-Liste des *ObjectLoaders* und eine Liste von Dateinamen übergeben. Dieser Prozess wird durch das UMIS-Hauptmodul unterbrochen, sobald der Auswahlprozess abgeschlossen ist. Das UMIS-Hauptmodul übergibt eine Referenz seiner Objektliste an den *Object-Loader.* Der *ObjectLoader* aktualisiert, die vom UMIS-Hauptmodul übergebene Objektliste mit Hilfe der von ihm erstellten temporären Objektliste.

Durch die dynamische Adaption der geographischen Auswahlparameter werden die Auswahlbereiche kontinuierlich an die Umgebungssituation des UMIS-Benutzers angepasst.

Das Verfahren versucht in einem ersten Schritt, die aktuelle Umgebungssituation des Benutzers festzustellen. Nach der Situationsbestimmung werden die geographischen Auswahlparameter, wie beispielsweise die Auswahlentfernung, entsprechend des erkannten Situationstyps adaptiert. Während der Evaluierung des bisherigen UMIS-Systems wurde festgestellt, dass die zuverlässige Situationsbestimmung bei diesem Verfahren das Hauptproblem darstellt. Aus diesem Grund wurde die Situationsbestimmung für dieses Verfahren dahingehend optimiert. Weiterhin wurde zusätzlich eine Erweiterung des geographischen Auswahlprozesses vorgestellt, der die situationsabhängige Auswahl von Informationsobjekten erlaubt. Zusätzlich wurde die dynamische Parameteradaption um einen neuen Umgebungstyp erweitert. Anhand von Testergebnissen werden im folgenden die erzielten Verbesserungen gezeigt.

Ein wesentliches Problem beim bisherigen dynamischen Auswahlverfahren war die zuverlässige Bestimmung der aktuellen Umgebungssituation des Benutzers, die für die folgenden Adaptionsschritte beim dynamischen Auswahlverfahren maßgeblich ist.

Beim bisherigen Verfahren zur dynamischen Parameteradaption werden drei unterschiedliche Situationstypen unterschieden, welche die üblichen Umgebungssituationen eines UMIS-Benutzers berücksichtigen. Es werden die Situationstypen *Stadt, Landstraße und Autobahn* verwendet. Der Situationstyp *Stadt* repräsentiert dicht besiedelte Umgebungen mit einer hohen Dichte von Informationsobjekten. Der Situationstyp *Autobahn* ist für Umgebungen mit einer geringen Dichte an Informationsobjekten und daraus resultierenden großen Auswahlbereichen vorgesehen. Für Umgebungen, deren Dichte an Informationsobjekten zwischen den beiden genannten Situationen liegt, wird der Situationstyp *Landstraße* verwendet.

Beim bisherigen Verfahren erfolgte die Bestimmung der Situation anhand der Betrachtung der durchschnittlichen Geschwindigkeit, Anhaltedauer sowie Anhaltehäufigkeit.

Wie sich bei der in dieser Arbeit durchgeführten Evaluierung zeigte, führt die alleinige Betrachtung der drei genannten durchschnittlichen Bewegungsmerkmale zu einer trägen Situationserkennung. Dies führt unter Umständen zur Wahl eines zu großen Auswahlbereichs, was eine Überflutung des Benutzers mit Informationen bewirkt.

Es wurden daher drei Lösungsansätze für eine verbesserte und schnellere Situationsbestimmung vorgestellt. Um einen besseren Vergleich zwischen den drei Ansätzen zu ermöglichen, werden bei der folgenden Verifikation der Optimierungs-Ergebnisse die präsentierten Testfahrten mit einem einheitlichen GPS-Datensatz simuliert. Die verwendete Teststrecke liegt im Stadtgebiet und der Umgebung von Erlangen und enthält alle drei beschriebenen Situationstypen.

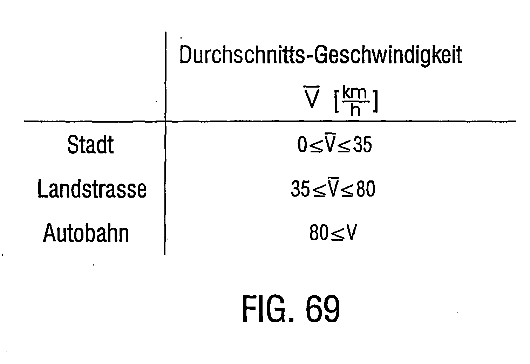

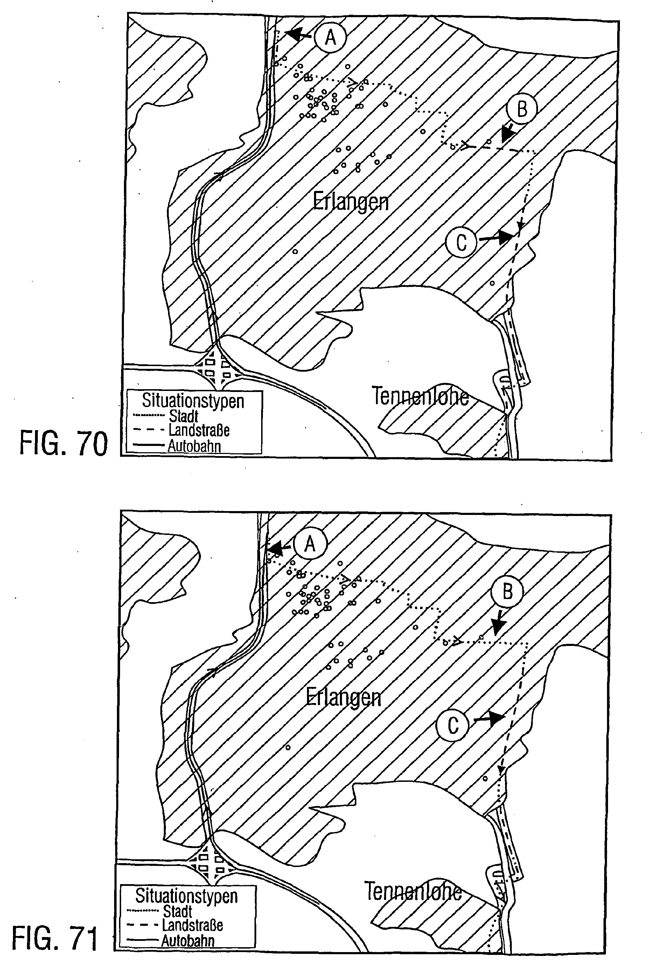

Der vorgestellte Lösungsansatz berücksichtigt bei der Entscheidung über die aktuelle Situation des Benutzers lediglich die ermittelte Durchschnittsgeschwindigkeit. Die minimalen und maximalen Geschwindigkeitswerte für die jeweiligen Situationen sind in Fig. 69 aufgelistet. Die Bewegungsmerkmale Anhaltedauer und Anhaltehäufigkeit werden bei diesem Ansatz vernachlässigt, um bei fehlenden Anhaltevorgängen eine falsche Situationserkennung zu vermeiden. Dieses Problem tritt zum Beispiel beim Übergang von einem "schnellen" zu einem "langsameren" Situationstyp auf. Das oben beschriebene Problem trat beispielsweise im Bereich A (siehe Fig. 70) auf und wurde bereits erkannt.

Fig. 70 zeigt den Verlauf der verwendeten Teststrecke. Der Verlauf der Teststrecke wurde entsprechend der erkannten Situation farblich markiert. Rote Streckenabschnitte entsprechen dem Situationstyp *Stadt*. Der Situationstyp *Autobahn* ist blau und der Situationstyp *Landstraße* grün dargestellt. Im Bereich A ist der Übergang vom Situationstyp *Autobahn* zum Situationstyp *Stadt* dargestellt. Aufgrund der fehlenden Anhaltevorgänge auf der Autobahn lieferte hier die bisherige Situationserkennung falsche Ergebnisse. Die Vernachlässigung der Anhaltedauer und Anhaltehäufigkeit beschleunigt in diesem Bereich die Situationserkennung, wie in Fig. 70 zu sehen ist.

Zusätzlich wurde bei diesem Test die Fensterlänge von 600 auf 300 Sekunden verkürzt, um die Trägheit der Situationserkennung weiter zu verkleinern. Allerdings traten, wie erwartet, unerwünschte Nebeneffekte auf. Durch die Verkürzung der Fensterlänge und die Vernachlässigung der Anhaltevorgänge wird das System empfindlicher gegenüber kurzzeitigen Geschwindigkeitsschwankungen (siehe Bereich B).

Im Bereich C macht sich die verringerte Trägheit der Situationsbestimmung durch eine falsche Situationsauswahl nachteilig bemerkbar. Beim Übergang von einem "langsamen" zu einem "schnelleren" Situationstyp ist generell eine große Trägheit erwünscht, um große Auswahlbereiche zu vermeiden.

Die Testergebnisse bestätigen die Annahmen, dass die Verwendung der Durchschnittsgeschwindigkeit als alleiniges Kriterium zwar die Trägheit der Situationsbestimmung vermindert, jedoch auch die bereits erwähnten, unerwünschten Effekte verursacht. Dieser Ansatz wurde aus den genannten Nachteilen nicht für die endgültige Implementierung ausgewählt.

Um die Trägheit der Situationserkennung zu vermindern, wurde im vorigen Abschnitt die Fensterlänge verkürzt. Das führte jedoch auch gleichzeitig zu einer Erhöhung der Empfindlichkeit gegenüber Geschwindigkeitsschwankungen. Aus diesem Grund wird beim Lösungsansatz wieder die ursprüngliche Fensterlänge von 600 Sekunden gewählt. Damit trotzdem eine schnelle Erkennung des Situationstyps Stadt erfolgt, wird zusätzlich die aktuelle Geschwindigkeit berücksichtigt. Dazu wird im ersten Schritt geprüft, ob die aktuelle Geschwindigkeit im Bereich zwischen 0 und 60 km/h liegt. In diesem Fall wird unmittelbar der Situationstyp Stadt erkannt. Falls die aktuelle Geschwindigkeit außerhalb dieses Bereichs liegt, wird wie obenstehend beschrieben die Situationserkennung anhand der durchschnittlichen Geschwindigkeit durchgeführt.

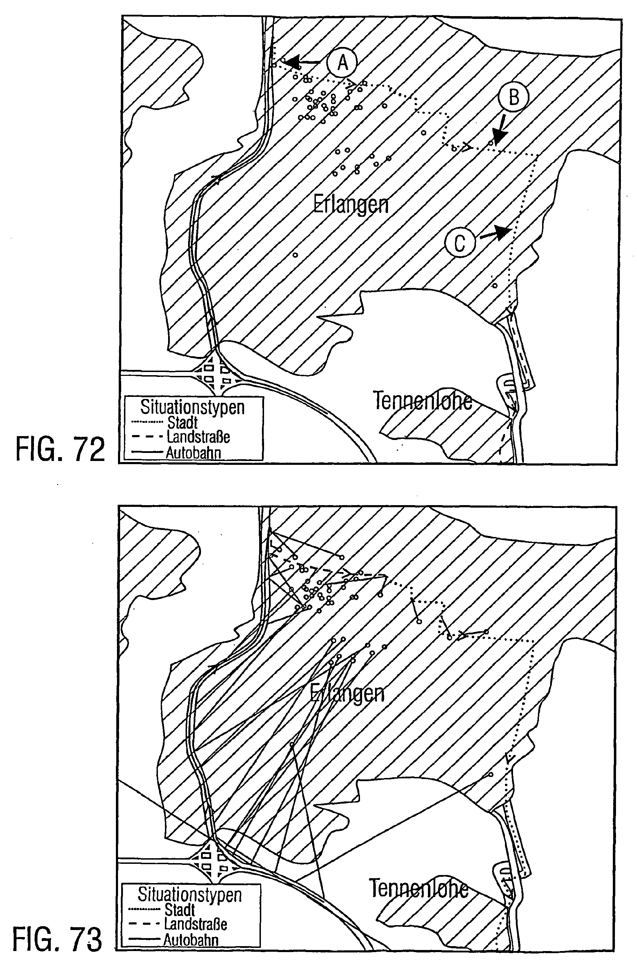

Wie in Fig. 72 zu sehen ist, wird der Abschnitt B, welcher bei dem vorigen Lösungsansatz falsch detektiert wurde, mit diesem Ansatz wegen der erhöhten Trägheit richtig erkannt. Allerdings ist auch zu sehen, dass auch bei diesem Lösungsansatz in bestimmten Streckenabschnitten fälschlicherweise der Situationstyp *Landstraße* innerhalb der Stadt erkannt wird. Die Ursache dieses Fehlers sind längere innerstädtische Fahrten mit einer Geschwindigkeit von über 60 km/h. Der hier verwendete Lösungsansatz zeigt durch Einbeziehung der aktuellen Geschwindigkeit im Vergleich zum vorherigen Ansatz eine verbesserte Situationserkennung. Allerdings stellte sich bei den Testfahrten heraus, dass die zusätzliche Berücksichtigung der Bewegungsmerkmale Anhaltedauer und Anhaltehäufigkeit notwendig ist, um eine noch höhere Trägheit bei der Erkennung einer schnelleren Situation zu erreichen.

Das Hauptziel bei der Optimierung der Situationserkennung war die Vermeidung von zu großen Auswahlbereichen beim "langsamen" Situationstyp Stadt. Der im letzten Abschnitt getestete Lösungsansatz liefert eine schnelle Situationserkennung bei Übergängen von "schnellen" Situationstypen zum "langsamen" Situationstyp *Stadt*. Jedoch zeigte sich im letzten Abschnitt, dass beim Übergang von "langsamen" zu "schnelleren" Situationstypen die Trägheit der Situationserkennung vergrößert werden muss, um ausreichend lange bei kleinen Auswahlbereichen zu verweilen. Aus diesem Grund wird im Lösungsansatz die Berücksichtigung der aktuellen Geschwindigkeit mit der bisherigen Situationserkennung kombiniert, welche zusätzlich zur Durchschnittsgeschwindigkeit die durchschnittliche Anhaltedauer und Anhaltehäufigkeit berücksichtigt. Um die Trägheit des Systems generell zu begrenzen, werden daneben im letzten Schritt der Situationserkennung die üblichen Geschwindigkeitsbegrenzungen der verwendeten Situationstypen beachtet.

Wie in Fig. 72 zu sehen ist, liefert dieses Verfahren sehr gute Ergebnisse bei der Situationserkennung für die verwendete Teststrecke. Im Vergleich zum vorherigen Verfahren wird der Situationstyp *Stadt* durchgehend als solcher erkannt.

Im Vergleich zum ursprünglichen Verfahren liefert dieser Lösungsansatz eine schnelle Erkennung des Situationstyps *Stadt* und zeigt weiterhin bei Übergängen zu "schnelleren" Situationstypen eine ausreichend hohe Trägheit. Diese beiden Eigenschaften vermeiden die Wahl von zu großen Auswahlbereichen und bewirken somit eine wesentliche Verbesserung der bisherigen Situationserkennung.

Da der hier verwendete Lösungsansatz auch auf anderen Teststrecken die besten Ergebnisse bei der Situationserkennung lieferte wird er für die endgültige Implementierung ausgewählt.

Ein weiteres Problem bei der Objekt-Auswahl mit dynamischen Auswahlbereichen ist die Auswahl von Informationsobjekten aus einer größeren Entfernung, die eigentlich für eine Wiedergabe in unmittelbarer Nähe bestimmt sind. Dies wurde bereits festgestellt und ist in Fig. 73 nochmals dargestellt.

Die Figur zeigt eine Testfahrt in Erlangen, bei der der Benutzer über die Autobahn in die Stadt hineinfährt. Solange sich der Benutzer auf der Autobahn befindet, werden fälschlicherweise durch die großen Auswahlbereiche kontinuierlich Objekte aus der Stadt ausgewählt und wiedergegeben. Die Auswahl eines Objekts ist in der Fig. 73 durch Auswahllinien dargestellt, die die Objektposition mit der Position des Benutzers, an der die Auswahl erfolgte, verbindet. Die beiden Nachteile, die dadurch entstehen, sind eine Überflutung des Benutzers mit zahlreichen Objektwiedergaben und die fehlende Wiedergabe von Objekten, die bereits angesagt wurden, wenn sich der Benutzer ihnen später direkt nähert. Objekte stehen für eine erneute Auswahl nicht zur Verfügung, wenn die maximal spezifizierte Wiederholungszahl (typischerweise 1) erreicht worden ist.

Daher wurde eine Erweiterung der geographischen Auswahl eingeführt. Diese Erweiterung erlaubt dem Autor der Informationsobjekte, die Situationstypen zu definieren, die für eine Auswahl des Objekts in Frage kommen. Die Fig.

74 zeigt die erzielte Verbesserung bei der Verwendung der situationsabhängigen Auswahl.

Sämtliche Informationsobjekte in dieser Figur wurden nur für eine Auswahl aus der Situation *Stadt* definiert. Aus diesem Grund wurden bei der neu eingeführten situationsabhängigen Objekt-Auswahl im Gegensatz zum bisherigen Auswahlverfahren keine Informationsobjekte für den Situationstyp *Autobahn* ausgewählt. Eine Überflutung des Benutzers mit Informationen wurde dadurch verhindert. Alle Informationsobjekte wurden, wie erwünscht bzw. definiert, aus der Situation *Stadt* ausgewählt. Weiterhin konnte die benötigte Rechenzeit des Auswahlprozesses beschleunigt werden. Objekte, die für die aktuelle Situation nicht verfügbar waren, wurden nach diesem Auswahlschritt in den folgenden Auswahlprozessen nicht mehr berücksichtigt.

In dieser Arbeit wurde das UMIS-System auch für eine Verwendung während einer Fortbewegung als Fußgänger getestet. Wie bereits festgestellt wurde, waren die bei der dynamischen Parameteradaption verwendeten Auswahlbereiche für ein anschauliche Wiedergabe zu groß. Weiterhin ergaben sich falsche Richtungsangaben, wenn der Benutzer in kurzen Abständen seine Richtung änderte, sich langsam (ca. 0 bis 1,5 km/h) oder gar nicht bewegte. Obenstehend wurde daher der neue Situationstyp *Fußgänger* bei der dynamischen Parameteradaption eingeführt, der diese Probleme berücksichtigt.

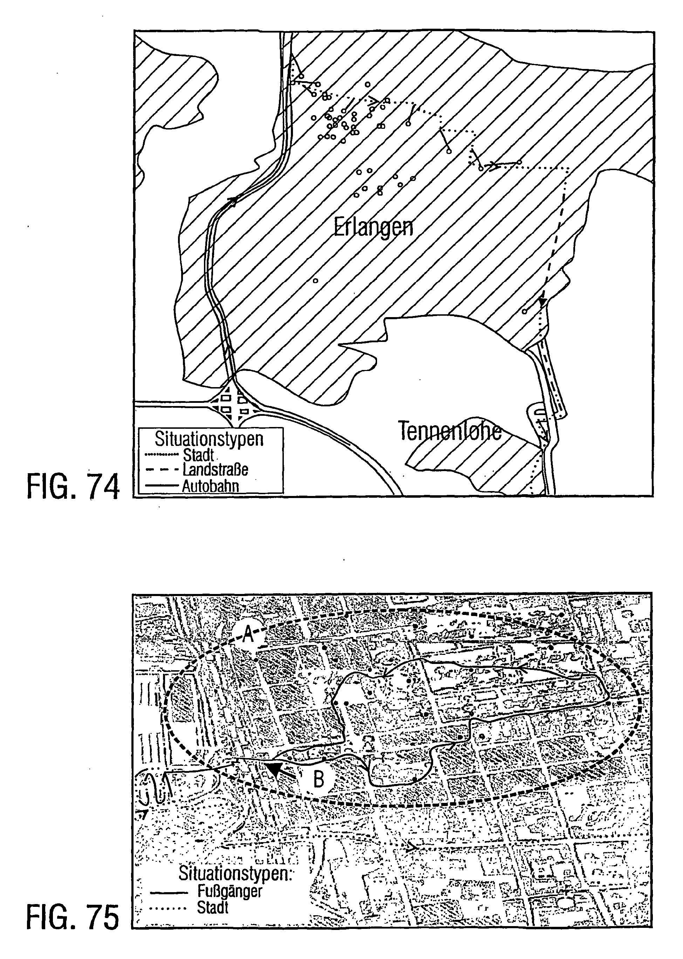

Im Folgenden werden die Evaluierungsergebnisse für den neu eingeführten Situationstyp *Fußgänger* in zwei Schritten vorgestellt. Im ersten Schritt wird die dynamische Situationsbestimmung für den Situationstyp *Fußgänger* getestet. Anschließend erfolgt eine Betrachtung der Auswahlergebnisse mit den für diese Situation spezifizierten Auswahlparametern. Fig. 75 gibt einen Überblick über den Streckenverlauf und die detektierten Situationstypen. Rot markierte Strecken wurden als Situationstyp Stadt erkannt. Die braun markierten Strecken repräsentieren den neu eingeführten Situationstyp *Fußgänger.* Diese Figur zeigt einen typischen Anwendungsfall, bei dem der Benutzer das UMIS-System sowohl während der Fahrt im Auto als auch zu Fuß benutzt. Das System wurde in dem dargestellten Fall durchgehend verwendet ohne einen Neustart durchzuführen. Die Situationsbestimmung des neuen Situationstyps *Fußgänger* erfolgte, wie in 5.1.2 beschrieben, nur anhand der aktuellen Geschwindigkeit. Lag diese unter 6 km/h so wurde der Situationstyp *Fußgänger* unmittelbar gewählt. Die Figur zeigt, dass die im Bereich A zu Fuß zurückgelegte Strecke fast durchgehend richtig erkannt wurde. Lediglich im Bereich B wurde ein falscher Situationstyp erkannt, da sich der Benutzer in einer Unterführung befand und ein GPS-Signal fehlte.

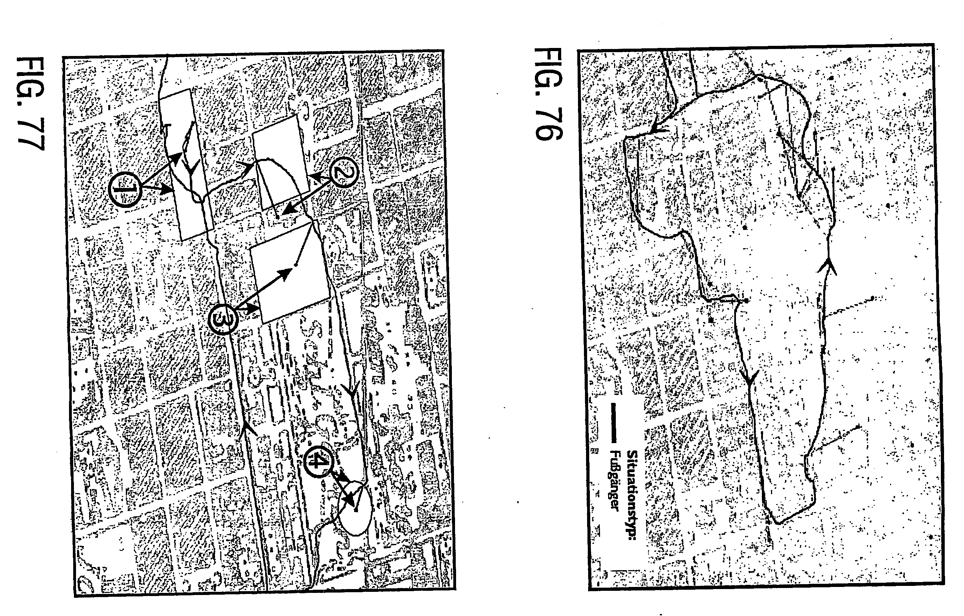

Im Folgenden werden die Auswahlergebnisse für den neu eingeführten Situationstyp *Fußgänger* vorgestellt. Einen Überblick über die Auswahlergebnisse zeigt Fig. 76. Der beim Test zurückgelegte Streckenverlauf ist braun dargestellt. Die Auswahl eines Objekts ist in der Fig. 76 durch Auswahllinien dargestellt, die die Objektposition mit der Position, an der die Auswahl erfolgte, verbindet. Die ausgewählten Informationsobjekte befanden sich durch die kleinen Auswahlentfernungen fast durchwegs in Sichtweite, was eine anschauliche Wiedergabe der Informationsobjekte ermöglichte. Bei einer Geschwindigkeit unterhalb von 2 km/h wurde die Auswahlentfernung des sekundären Auswahlbereichs auf den Wert Null gesetzt, weil keine zuverlässige Richtungsangabe möglich ist. In diesen Fällen erfolgte die Auswahl nur anhand des primären Auswahlbereichs, der in diesem Fall eine minimale Auswahlentfernung von 50 Metern besaß. Bei dieser Auswahlentfernung wurden in den meisten Fällen Objekte in Sichtweite des Benutzers ausgewählt. Ab einer Geschwindigkeit von 2km/h wurden die Auswahlentfernungen bis zu einem Maximalwert von 100 Metern erhöht. Diese maximale Entfernung erwies sich für den neuen Situationstyp als ausreichend.

Wie die vorgestellten Testergebnisse zeigen, erwies sich die Einführung des neuen Situationstyps *Fußgänger* als sinnvoll. Das um diesen Situationstyp erweiterte Adaptionsverfahren erlaubt im Gegensatz zum bisherigen Verfahren fast durchwegs eine anschauliche Wiedergabe von Informationsobjekten bei der Verwendung des UMIS-Systems als Fußgänger.

Beim bisherigen geographischen Auswahlverfahren konnte die besondere Beschaffenheit und die geographische Umgebung eines Informationsobjekts nicht berücksichtigt werden. Die Informationsobjekte konnten nur durch ihre geographische Position beschrieben werden. Anhand ausgewählter repräsentativer Beispiele wurde festgestellt, dass eine differenzierte Betrachtung der Informationsobjekte notwendig ist, um eine gezielte und anschauliche Wiedergabe der unterschiedlichen Informationsobjekte zu ermöglichen. Obenstehend wurde daher das Konzept der objektabhängigen Relevanzbereiche eingeführt. Dieses neue Konzept erlaubt dem Autor der Informationsobjekte, den geographischen Bereich, in dem das Objekt ausgewählt werden kann, individuell zu definieren.

In diesem Abschnitt werden die Evaluierungsergebnisse der objektabhängigen Relevanzbereiche vorgestellt, welche die Effektivität und Flexibilität des neu eingeführten Konzepts bestätigen sollen. Die folgenden Beispiele greifen daher bisher problematische Situationen auf und zeigen, wie durch die gezielte Definition von objektabhängigen Relevanzbereichen für einzelne problematische Informationsobjekte, eine einfache Lösung erreicht werden kann.

Eine anschauliche Wiedergabe von Informationsobjekten ist in der Regel dann gegeben, wenn das wiedergegebene Objekt für den Benutzer sichtbar ist. Durch objektabhängige Relevanzbereiche kann diese Anforderung erfüllt werden. Mit diesen können geographische Bereiche definiert werden, in denen ein Objekt sichtbar ist und wiedergegeben werden soll.

Der Aspekt der Sichtbarkeit lag auch bei der Definition der objektabhängigen Relevanzbereiche der vier Informationsobjekte in Fig. 77 zugrunde. Objekt und zugehöriger Relevanzbereich sind mit einer Nummer versehen. Der Verlauf der zurückgelegten Teststrecke ist dunkelbraun dargestellt. Die Teststrecke beginnt im Relevanzbereich des Objekts 1, das aus diesem Grund unmittelbar für eine Wiedergabe ausgewählt wurde. Bei den weiteren Objekten fand jeweils eine Auswahl statt, sobald der Benutzer in den jeweiligen Relevanzbereich eintrat.

Objekt 2 ist das Erlangener Schloss, welches vom Marktplatz aus (Relevanzbereich 2) gut sichtbar ist. Bei den Objekten 3 und 4 handelt es sich um den Hugenotten-Brunnen und um ein kleines Denkmal im Schlosspark, die ebenfalls nur in den gewählten Relevanzbereichen gut sichtbar sind. Durch die Beschreibung der Sichtbarkeitsbereiche waren die Objekte im geschilderten Beispiel zum Wiedergabezeitpunkt für den Nutzer sichtbar. Dadurch konnte eine anschauliche Wiedergabe erzielt werden.

Für eine gezielte Wiedergabe von Informationsobjekten sind objektabhängige Auswahlentfernungen erforderlich, da zum Beispiel die räumlichen Ausmaße der Objekte sehr unterschiedlich sein können. Bisher konnte ein Objekt nur durch seine geographischen Koordinaten beschrieben werden, was dazu führte, dass die oben genannte Anforderung nicht erfüllt werden konnten. Mit den objektabhängigen Relevanzbereichen können nun unterschiedliche Auswahlentfernungen durch die Definition von geographischen Wiedergabebereichen erzielt werden.

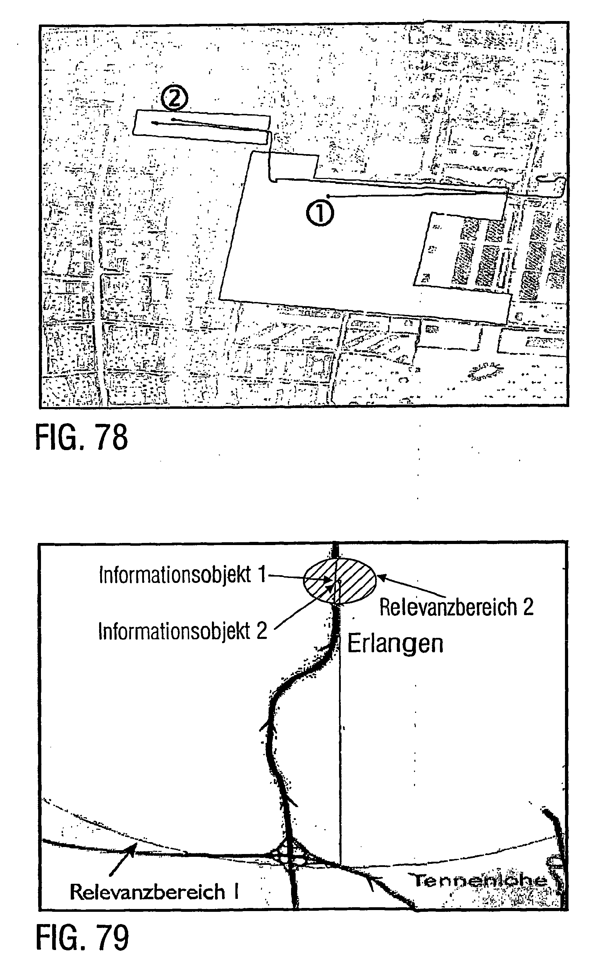

Das Beispiel in Fig. 78 zeigt zwei Informationsobjekte, die durch entsprechende Definition ihrer Relevanzbereiche unterschiedliche Auswahlentfernungen besitzen. Das Objekt 1 besitzt eine große räumliche Ausdehnung und wurde deshalb vom Autor des Informationsobjekts mit einem großen Relevanzbereich versehen, um eine Auswahl aus einer großen Entfernung zu ermöglichen. Entsprechend wurde Objekt 2 wegen seiner geringen räumlichen Ausmaße mit einem kleinen Relevanzbereich versehen. Die Auswahl der Informationsobjekte fand erst nach Eintritt in die jeweiligen Relevanzbereiche statt. Wie in Fig. 78 zu sehen ist, wurde das Objekt 1 aus einer großen Entfernung ausgewählt. Das Objekt 2 hingegen wurde erst in der unmittelbaren Umgebung ausgewählt.

Mit Hilfe der objektabhängigen Relevanzbereiche können entfernungsabhängige Objektbeschreibungen wiedergegeben werden. Zum Beispiel kann dies genutzt werden, um den Detailgrad einer Wiedergabe entfernungsabhängig zu gestalten. Eine detaillierte Beschreibung ist in der Regel nur bei kleinen Auswahlentfernungen sinnvoll, da nur hier eine anschauliche Wiedergabe gegeben ist. Eine entfernungsabhängige Objektbeschreibung kann erreicht werden, indem für ein reales Objekt mehrere Informationsobjekte mit unterschiedlichen Wiedergabeinhalten erstellt werden. Durch die objektabhängigen Relevanzbereiche kann für jedes einzelne Informationsobjekt ein eigener Wiedergabebereich bzw. eine eigene Wiedergabeentfernung definiert werden. Das in der Fig. 79 dargestellte reale Objekt wird durch zwei Informationsobjekte beschrieben. Diese besitzen unterschiedliche Relevanzbereiche und Wiedergabeinhalte. Das Informationsobjekt 1 kann bereits aus einer großen Entfernung ausgewählt werden, während das Informationsobjekt 2 nur in unmittelbarer Nähe wiedergegeben werden kann.

In bestimmten Anwendungsfällen von UMIS ist eine richtungsabhängige Objektauswahl erforderlich. Ein wichtiges Einsatzgebiet von UMIS ist die Unterstützung von Besichtigungstouren entlang fester, vorgegebener Strecken. Der Autor möchte in der Regel für derartige Strecken die Reihenfolge der Objektwiedergaben festlegen.

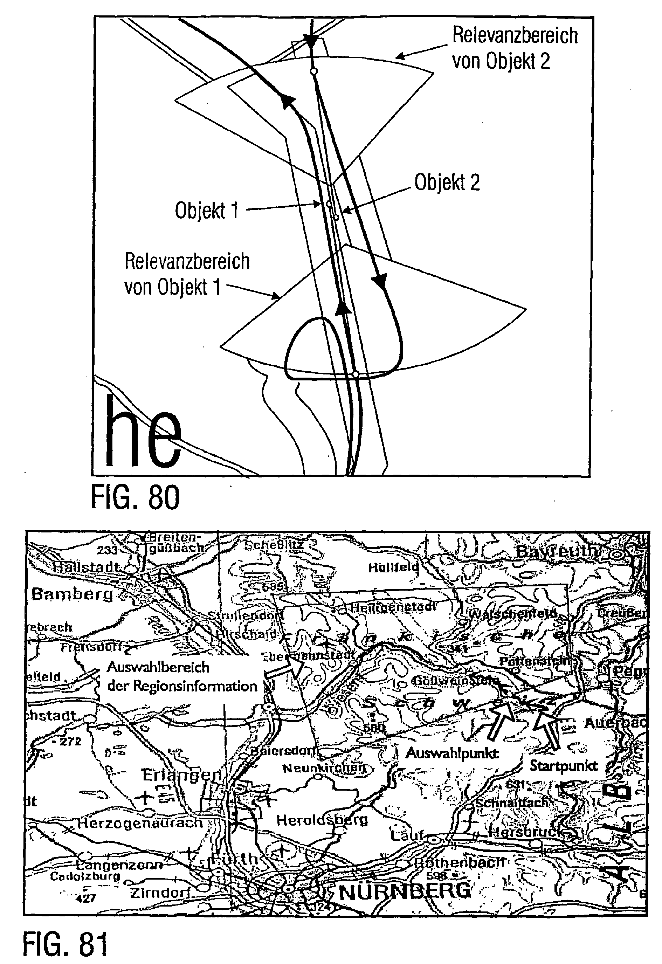

Bisher konnte dies durch die alleinige Beschreibung eines Informationsobjekts anhand seiner geographische Koordinaten nicht erreicht werden. Das folgende Beispiel beschreibt, wie durch eine Kombination der objektabhängigen Relevanzbereiche und des Auswahlbereichs des Benutzers eine richtungsabhängige Auswahlreihenfolge erzielt wird. Fig. 80 zeigt die Lösung eines derartigen Problems. Objekt 1 soll ausgewählt werden, wenn sich der Benutzer von Süden nähert. Objekt 2 soll aus nördlicher Fahrtrichtung wiedergegeben werden. Bei der Fahrt aus südlicher Richtung tritt der Benutzer zuerst in den Relevanzbereich 1 ein. Zu diesem Zeitpunkt befindet sich das Objekt 1 und Objekt 2 im Auswahlbereich des Benutzers. Beide Objekte sind mit Ausnahme ihrer geographischen Position und ihrer Relevanzbereiche hinsichtlich Ihrer weiteren Auswahlparameter gleichwertig. Aus diesem Grund wäre beim bisherigen Auswahlverfahren das Objekt 2 wegen seiner geringeren Entfernung zum Benutzer ausgewählt worden. Dieses Objekt kann bei dem dargestellten Beispiel nicht ausgewählt werden, da sich der Benutzer nicht in seinem Relevanzbereich befindet. Stattdessen wird Objekt 1 ausgewählt, da sich der Benutzer in dessen Relevanzbereich befindet. Für die Fahrt aus nördlicher Richtung findet die Auswahl in der umgekehrten Reihenfolge statt.

Ein weiteres Problem beim bisherige Auswahlverfahren war die gezielte Ansage von Regionsinformationen. Diese Informationen besitzen keine feste geographische Position, sind jedoch für ein größeres, wohl definiertes Gebiet relevant. Aus diesem Grund sollen Regionsinformationen nur wiedergegeben werden, wenn sich der Benutzer in diesem Bereich befindet.

Die bisherige Realisierung als positioniertes oder unpositioniertes Objekt war für diese Art von Informationen nicht geeignet. Während positionierte Objekte in einem örtlich sehr eingegrenzten Bereich wiedergegeben werden, war die Wiedergabe von unpositionierten Objekten zeitlich und örtlich undefiniert.

Aus diesem Grund wurde das Konzept der unpositionierten Objekte, die für derartige Situationen konzipiert waren, erweitert. Sie können nun durch die Angabe eines objektabhängigen Relevanzbereichs gezielt in ihrer "Gültigkeit" auf eine bestimmte Region eingeschränkt werden ohne eine exakte Position angeben zu müssen.

Das folgende Beispiel greift das Problem wieder auf. Es soll eine Regionsinformation für das Gebiet der Fränkischen Schweiz erstellt werden. Dazu wird ein unpositioniertes Informationsobjekt mit dem in Fig. 81 dargestellten Relevanzbereich erstellt.

Wie in der Figur zu sehen ist, erfolgte die Wiedergabe der Regionsinformation nach Eintritt in den Relevanzbereich. Die Regionsinformationen erlauben somit die Erstellung und Nutzung eines völlig neuen Typs von Informati-onsobjekten.

Abhängig von den Gegebenheiten können die erfindungsgemäßen Verfahren in Hardware oder in Software implementiert werden. Die Implementierung kann auf einem digitalen Speichermedium, insbesondere auf einer Diskette oder CD mit elektronisch auslesbaren Steuersignalen erfolgen, die so mit einem programmierbaren Computersystem zusammenwirken können, dass das entsprechende Verfahren ausgeführt wird. Allgemein besteht die Erfindung somit auch in einem Computerprogrammprodukt mit auf einem maschinenlesbaren Trägergespeicherten Programmcode zur Durchführung von zumindest einem der des erfindungsgemäßen Verfahren, wenn das Computerprogrammprodukt auf einem Rechner abläuft. In anderen Worten ausgedrückt, kann die Erfindung somit als ein Computerprogramm mit einem Programmcode zur Durchführung des Verfahrens realisiert werden, wenn das Computerprogramm auf einem Computer abläuft.

**Patentansprüche**

1.  Informationspunkt mit folgenden Merkmalen:

    einer Einrichtung (101) zum Bereitstellen einer Datenstruktur, die Einträge über verschiedene Objekte aufweist, wobei jedem Objekt ein begrenzter geographischer Bereich zugeordnet ist und wobei jedem Objekt eine Objektinformation zugeordnet ist, und wobei der begrenzte geographische Bereich einen Relevanzbereich definiert, in dem sich der Informationspunkt befinden muss, damit die Objektinformation zu dem der Relevanzbereich geliert, ausgewählt werden kann;
    einer Einrichtung (103) zum Bestimmen einer geographischen Position des Informationspunktes;
    einer Einrichtung (107) zum Untersuchen, ob die geographische Position des Informationspunktes in dem geographischen Bereich, der einem Objekt zugeordnet ist, liegt; und
    einer Einrichtung (105) zum Bereitstellen von Objektinformationen, die einem Objekt zugeordnet sind, falls die Einrichtung (107) zum Untersuchen festgestellt hat, dass der Informationspunkt in dem geographischen Bereich des Objekts liegt.

2.  Informationspunkt gemäß Anspruch 1, wobei ein geographischer Bereich, der einem Objekt zugeordnet ist, von einer Topologie der Umgebung, in der das Objekt angeordnet ist, abhängt.

3.  Informationspunkt gemäß Anspruch 1 oder 2, wobei ein geographischer Bereich, der einem Objekt zugeordnet ist, von einer Topologie der Umgebung, in der das Objekt angeordnet ist, und von einem geographischen Bereich, der einem weiteren Objekt zugeordnet ist, abhängt.

4.  Informationspunkt gemäß einem der Ansprüche 1 bis 3, wobei einem geographischen Bereich, der einem Objekt zugeordnet ist, ein Objektattribut zugeordnet ist.

5.  Informationspunkt gemäß Anspruch 4, wobei das Objektattribut eine wählbare Objektrelevanz umfasst, wobei die wählbare Objektrelevanz eine Relevanz des Objekts für einen Benutzer des Informationspunktes angibt.

6.  Informationspunkt gemäß einem der Ansprüche 1 bis 5, wobei ein geographischer Bereich eine Mehrzahl von Subobjektbereichen umfasst, die in unterschiedlicher Entfernung zum Objekt liegen, wobei jedem Subobjektbereich unterschiedliche Informationen zugeordnet sind.

7.  Informationspunkt gemäß einem der Ansprüche 1 bis 6, wobei die Einrichtung (103) zum Bestimmen der geographischen Position einen GPS-Empfänger umfasst.

8.  Informationspunkt gemäß einem der Ansprüche 1 bis 7, wobei die Einrichtung (103) zum Bestimmen der geographischen Position ausgebildet ist, um eine Geschwindigkeit des Informationspunktes zu bestimmen, und wobei die Einrichtung (107) zum Untersuchen ausgebildet ist, um festzustellen, dass der Informationspunkt in dem geographischen Bereich liegt, wenn der Informationspunkt sich innerhalb eines vorbestimmten Zeitintervalls in dem geographischen Bereich befindet.

9.  Informätionspunkt gemäß einem der Ansprüche 1 bis 8, wobei die Einrichtung (103) zum Bestimmen der geographischen Position ausgebildet ist, um eine Geschwindigkeitsrichtung des Informationspunktes zu erfassen, und wobei die Einrichtung (107) zum Untersuchen ausgebildet ist, um festzustellen, dass der Informationspunkt in dem geographischen Bereich liegt, wenn das Objekt innerhalb eines Winkelbereichs, der durch einen Auswahlwinkel relativ zur Fahrtrichtung bestimmt ist, liegt, und um festzustellen, dass der Informationspunkt außerhalb des geographischen Bereichs liegt, wenn das Objekt außerhalb des Winkelbereichs liegt.

10. Informationspunkt gemäß einem der Ansprüche 1 bis 9, wobei die Einrichtung (103) zum Bestimmen der geographischen Position ausgebildet ist, um eine Geschwindigkeitsrichtung des Informationspunktes zu erfassen, und wobei die Einrichtung (107) zum Untersuchen ausgebildet ist, um festzustellen, dass der Informationspunkt in dem geographischen Bereich liegt, wenn das Objekt vor dem Informationspunkt angeordnet ist, oder um festzustellen, dass der Informationspunkt nicht in dem geographischen Bereich liegt, wenn sich das Objekt hinter dem Informationspunkt befindet.

11. Informationspunkt gemäß Anspruch 9 oder 10, wobei die Einrichtung (101) zum Bereitstellen der Datenstruktur ausgebildet ist, um Objektinformationen in Abhängigkeit von einer Geschwindigkeit oder einer Geschwindigkeitsrichtung des Informationspunktes anzuzeigen.

12. Informationspunkt gemäß einem der Ansprüche 1 bis 11, wobei ein geographischer Bereich durch eine boolsche Verknüpfung von geometrischen Formen definiert ist.

13. Verfahren zur Informationsauswahl mit folgenden Schritten:

Bereitstellen einer Datenstruktur, die Einträge über verschiedene Objekte aufweist, wobei jedem Objekt ein begrenzter geographischer Bereich zugeordnet ist und wobei jedem Objekt eine Objektinformation zugeordnet ist, und wobei der begrenzte geographische Bereich einen Relevanzbereich definiert, in dem sich der Informationspunkt befinden muss, damit die Objektinformation zu dem der Relevanzbereich genRrt, ausgewählt werden kann;
Bestimmen einer geographischen Position eines Informationspunktes;
Untersuchen, ob die geographische Position des Informationspunktes in dem geographischen Bereich, der einem Objekt zugeordnet ist, liegt; und
Bereitstellen von Objektinformationen, die einem Objekt zugeordnet sind, falls festgestellt wurde, dass der Informationspunkt in dem geographischen Bereich des Objekts liegt.

14. Computerprogramm zum Durchführen des Verfahrens gemäß Anspruch 13, wenn das Computerprogramm auf einem Computer abläuft.

**Claims**

1. An information point, comprising:

a means (101) for providing a data structure having entries about different objects, wherein a limited geographical area is associated to every object, and wherein object information is associated to every object, and wherein the limited geographical area defines a relevance area, in which the information point has to be so that the object information to which the relevance area belongs can be selected;
a means (103) for determining a geographical position of the information point;
a means (107) for examining whether the geographical position of the information point lies in the geographical area associated to an object; and
a means (105) for providing object information associated to an object, if the means (107) for examining has determined that the information point lies in the geographical area of the object.

2. The information point according to claim 1, wherein a geographical area associated to an object depends on a topology of the surroundings where the object is located.

3. The information point according to claim 1 or 2, wherein a geographical area associated to an object depends on a topology of the surroundings where the object is located and on a geographical area associated to a further object.

4. The information point according to one of claims 1 to 3, wherein an object attribute is associated to a geographical area associated to an object.

5. The information point according to claim 4, wherein the object attribute comprises a selectable object relevance, wherein the selectable object relevance indicates a relevance of the object for a user of the information point.

6. The information point according to one of claims 1 to 5, wherein a geographical area comprises a plurality of subobject areas, which are at different distances to the object, wherein different information is associated to every subobject area.

7. The information point according to one of claims 1 to 6, wherein the means (103) for determining the geographical position comprises a GPS receiver.

8. The information point according to one of claims 1 to 7, wherein the means (103) for determining the geographical position is implemented to determine a speed of the information point, and wherein the means (107) for examining is implemented to determine that the information point lies in the geographical area, when the information point is in the geographical area within a predetermined time interval.

9. The information point according to one of claims 1 to 8, wherein the means (103) for determining the geographical position is implemented to detect a speed direction of the information point, and wherein the means (107) for examining is implemented to determine that the information point lies in the geographical area, when the object lies within an angle area, determined by a selection angle relative to the driving direction, and to determine that the information point lies outside the geographical area when the object lies outside the angle area.

10. The information point according to one of claims 1 to 9, wherein the means (103) for determining the geographical position is implemented to detect a speed direction of the information point, and wherein the means (107) for examining is implemented to determine that the information point lies in the geographical area, when the object is located in front of the information point, or to determine that the information point does not lie in the geographical area, when the object is behind the information point.

11. The information point according to claim 9 or 10, wherein the means (101) for providing the data structure is implemented to indicate object information in dependence on a speed or a speed direction of the information point.

12. The information point according to one of claims 1 to 11, wherein a geographical area is defined by a Boolean operation of geometrical forms.

13. A method for information selection, comprising the steps of:

   providing a data structure having entries about different objects, wherein a limited geographical area is associated to every object, and wherein object information is associated to every object, and wherein the limited geographical area defines a relevance area, in which the information point has to be so that the object information to which the relevance area belongs can be selected;
   determining a geographical position of an information point;
   examining whether the geographical position of the information point lies in the geographical area associated to an object; and
   providing object information associated to an object if it has been determined that the information point lies in the geographical area of the object.

14. A computer program for performing the method according to claim 13 when the computer program runs on a computer.

**Revendications**

1. Point d'information, aux caractéristiques suivantes:

   un moyen (101) pour mettre à disposition une structure de données présentant des entrées sur différents objets, à chaque objet étant associée une zone géographique limitée et à chaque objet étant associée une information d'objet, et la zone géographique limitée définissant une plage de pertinence dans laquelle doit se trouver le point d'information pour que puisse être sélectionnée l'information d'objet à laquelle appartient la plage de pertinence;
   un moyen (103) pour déterminer une position géographique du point d'information;

un moyen (107) pour examiner si la position géographique du point d'information se trouve dans la zone géographique qui est associée à un objet; et
un moyen (105) pour mettre à disposition des informations d'objet associées à un objet si le moyen (107) pour examiner a constaté que le point d'information se trouve dans la zone géographique de l'objet.

2. Point d'information selon la revendication 1, dans lequel une zone géographique associée à un objet dépend d'une topologie de l'environnement dans lequel est disposé l'objet.

3. Point d'information selon la revendication 1 ou 2, dans lequel une zone géographique associée à un objet dépend d'une topologie de l'environnement dans lequel est disposé l'objet et d'une zone géographique associée à un autre objet.

4. Point d'information selon l'une des revendications 1 à 3, dans lequel un attribut d'objet est associé à la zone géographique associée à un objet.

5. Point d'information selon la revendication 4, dans lequel l'attribut de l'objet comprend une pertinence d'objet sélectionnable, dans lequel la pertinence d'objet sélectionnable indique une pertinence de l'objet pour un utilisateur du point d'information.

6. Point d'information selon l'une des revendications 1 à 5, dans lequel une zone géographique comprend une pluralité de sous-zones d'objet qui se trouvent à une distance différente de l'objet, à chaque sous-zone d'objet étant associées des informations différentes.

7. Point d'information selon l'une des revendications 1 à 6, dans lequel le moyen (103) pour déterminer la position géographique comprend un récepteur GPS.

8. Point d'information selon l'une des revendications 1 à 7, dans lequel le moyen (103) pour déterminer la position géographique est conçu pour déterminer une vitesse du point d'information, et dans lequel le moyen (107) pour examiner est conçu pour constater que le point d'information se trouve dans la zone géographique lorsque le point d'information se trouve, dans un intervalle de temps prédéterminé, dans la zone géographique.

9. Point d'information selon l'une des revendications 1 à 8, dans lequel le moyen (103) pour déterminer la position géographique est conçu pour saisir une direction de vitesse du point d'information, et dans lequel le moyen (107) pour examiner est conçu pour constater que le point d'information se trouve dans la zone géographique lorsque l'objet se trouve dans une plage angulaire qui est définie par un angle de choix par rapport à la direction de conduite, et pour constater que le point d'information se trouve en-dehors de la zone géographique lorsque l'objet se trouve en-dehors de la plage angulaire.

10. Point d'information selon l'une des revendications 1 à 9, dans lequel le moyen (103) pour déterminer la position géographique est conçu pour saisir une direction de vitesse du point d'information, et dans lequel le moyen (107) pour examiner est conçu pour constater que le point d'information se trouve dans la zone géographique lorsque l'objet est disposé devant le point d'information ou pour constater que le point d'information ne se trouve pas dans la zone géographique lorsque l'objet se trouve derrière le point d'information.

11. Point d'information selon la revendication 9 ou 10, dans lequel le moyen (101) pour mettre à disposition la structure de données est conçu pour indiquer des informations d'objet en fonction d'une vitesse ou d'une direction de vitesse du point d'information.

12. Point d'information selon l'une des revendications 1 à 11, dans lequel une zone géographique est définie par un couplage booléen de formes géométriques.

13. Procédé de sélection d'informations, aux étapes suivantes consistant à :

mettre à disposition une structure de données qui présente des entrées sur différents objets, à chaque objet étant associée une zone géographique limitée et à chaque objet étant associée une information d'objet, et la zone géographique limitée définissant une plage de pertinence dans laquelle doit se trouver le point d'information pour que puisse être sélectionnée l'information d'objet à laquelle appartient la plage de pertinence;
déterminer une position géographique d'un point d'information;

examiner si la position géographique du point d'information se trouve dans la zone géographique qui est associée à l'objet; et

mettre à disposition des informations d'objet associées à un objet, s'il a été constaté que le point d'information se trouve dans la zone géographique de l'objet.

**14.** Programme d'ordinateur pour la mise en oeuvre du procédé selon la revendication 13 lorsque le programme d'ordinateur est exécuté sur un ordinateur.

EP 1 789 755 B1

FIG. 1

FIG. 2

FIG. 3

FIG. 4

EP 1 789 755 B1

Hauptmodul

Programm-start

fordert Objekt an

Initialisierungs-einheit

interne Schnittstelle zur Ein-/Ausgabe

Verwaltung der Arbeits-Module

zentrale Programmschleife

Benutzer-Ein-/Ausgaben

fordert Position an

**FIG. 5**

Positionserfassungsmodul

liefert Position

Positions-repräsentat.-dienste

öffentliche Schnittstelle

interne Schnittstelle zur Ein-/Ausgabe

NMEA-Verarbeitung

Positions-repräsentation

GPS-Empfänger

GPS-Simulation

Zugriff auf Schnittstellen

**FIG. 6**

liefert
Objekte

Objekt-Verwaltungsmodul

Objekt-
repräsentation

Objektlisten-
erfassung

Kategorie-
verwaltung

Objektlistenverwahrung

Einzelobjektbeschreibung

Objekt-
repräsentat.-
dienste

Zugriff auf
Schnittstellen

## FIG. 7

liefert
ein Objekt

Auswahl-Modul

geografische
Grobauswahl

öffentliche
Schnittstelle

Auswahl nach
abstrakten Kriterien

Parameter-
Speicher

endgültige
Auswahl

Zugriff
auf Objekt-
Verwaltung

## FIG. 8

Schnittstellen-Module

UMIS-
Module

Kommunikationsschnittstelle

Ein-/Ausgaben
inUMIS

Ein-/Ausgaben
im Betriebssystem

Datei-
system

Hardware-
Schnittstellen

Betriebssystem

## FIG. 9

CObjListInit
(Objektlisten-
Erfassung)

legt an

CObjectList
(Objektlisten-
Verwahrung)

erzeugt für
jedes Objekt

CInfoFile
(Einzelobjekt-
Beschreibung)

CObjectElement
(Objekt-
Repräsentation)

verweist auf

nutzt

CCategory
(Kategorie-
Verwaltung)

## FIG. 10

a) "reale" Situation:

b) Repräsentation in Speicher-Strukturen:

FIG. 11

FIG. 12

START
Übergabe der aktuellen Parameter

Standort relativieren gemäß aktueller Geschwindigkeit

Standard-Grenzwerte setzen

"rechteckigen" Haupt-Auswahl-Bereich berechnen

nächstes Objekt in Haupt-Auswahl-Bereich auswählen

keine weiteren verfügbar

untere Kategorie-Auswahl-Schwelle übertroffen? — ja → tatsächliche Entfernung berechnen

nein

Entfernung zwischen minimal und maximal erlaubter? — ja

nein

relative Richtung zwischen minimal und maximal erlaubter? — ja

nein

Wiederholungszahl unendlich oder kleiner als maximal erlaubte? — ja → Objekt in vorläufige Auswahl aufnehmen

nein

untere Grenze für Kategorie-Auswahl auf absolutes Minimum setzen

absolute untere Grenze für Kategorie-Auswahl erreicht? — ja

nein

obere Grenze für die Entfernung auf absolutes Maximum setzen

absolute obere Grenze für die Entfernung erreicht? — ja

nein

untere Grenze für die Entfernung auf absolutes Minimum setzen

absolute untere Grenze für die Entfernung erreicht? — ja

nein

obere Grenze der relativen Richtung auf absolutes Maximum setzen

absolute obere Grenze der relativen Richtung erreicht? — ja

nein

untere Grenze der relativen Richtung auf absolutes Minimum setzen

absolute untere Grenze der relativen Richtung erreicht? — ja

vorläufige Objekt-Auswahl leer? — nein

ja

Auswahl von "unpositionierten Objekten" erlaubt? — ja → nächstes Objekt aus "unpositionierten" Objekten auswählen

keine weiteren verfügbar

untere Kategorie-Auswahl-Schwelle übertroffen? — ja → Objekt in vorläufige Auswahl aufnehmen

nein

Wiederholungszahl unendlich oder kleiner als maximal erlaubte? — ja

nein

vorläufige Objekt-Auswahl leer? — ja → kein Objekt verfügbar

nein

lösche alle Objekte, deren Wiederholungszahl nicht minimal ist

lösche alle Objekte, deren mittlere Kategorie-Bewertung nicht maximal ist

lösche alle Objekte, deren Wichtigkeit nicht maximal ist

wähle Objekt mit minimaler Entfernung bzw. erstbestes "Unpositioniertes"

genau 1 Objekt erfolgreich ausgewählt

FIG. 13

FIG. 14

Position data :

-Position
-Fahrtrichtung
-Geschwindigkeit
-Zeitstempel der
 Positionserfassung

Positionen
der
Informationsobjekte

Physical Adaptation
Module

SelectionLimits :

-unteres reguläres
 Entfernungs-Limit und
 Öffnungswinkel
-oberes reguläres
 Entfernungs-Limit und
 Öffnungswinkel
-unteres minimales
 Entfernungs-Limit und
 Öffnungswinkel
-oberes maximales
 Entfernungs-Limit und
 Öffnungswinkel

## FIG. 15

Auswahl-Modul

Zugriff auf
Objektverwaltung

adaptierte
Auswahlparamer

Aufruf bei jeder
neuen
Positionserfassung

Objekt-
Verwaltungsmodul

nutzt Objekt-Informationen

Auswahl-Modul

fordert
Objekt an

liest Objekt-Beschreibungsdateien ein

Hauptmodul

Benutzer-
Ein-/Ausgaben

fordert
Position an

Schnittstellen-
Module

liest Dateien/serielle Daten ein

Positionserfassungsmodul

## FIG. 16

Geografisches Parameter-Adaptionsmodul

Positionsdaten

Bestimmung der Benutzersituation

Adaption anhand der Durchschnittswerte

Adaption an die Objektdichte

Auswahl-Parameter

Zugriff auf Objektverwaltung

FIG. 17

| | Durchschnitts-Geschwindigkeit $\overline{V}\ [\frac{km}{h}]$ | Stop-Dauer D [%] | Stop-Anzahl N |
|---|---|---|---|
| City | $0 \leq \overline{V} \leq 35$ | $10 \leq D$ | $3 \leq N$ |
| Road | $35 \leq V \leq 80$ | $0 \leq D \leq 10$ | $0 \leq N \leq 3$ |
| Motorway | $80 \leq V$ | $0$ | $0$ |

FIG. 18

CITY
$0 \leq V \leq 35$
$10 \leq D$
$3 \leq N$

Durchschnitts-werte:
- Geschwindigkeit $\overline{V} = 85$ km/h
- Stop-Dauer $D = 2\%$
- Stop-Anzahl $N = 2$

ROAD
$35 \leq \overline{V} \leq 80$
$0 \leq D \leq 10$
$0 \leq N \leq 3$

MOTORWAY
$80 \leq \overline{V}$
$D = 0$
$N = 0$

Situations Auswahl

ROAD

FIG. 19

Geografische
Auswahlparameter

$Y$

$Y_{max}$

$Y_{min}$

$X_{min}$    $X_{max}$    $X$

Charakteristische
Werte der Fahrt

Geografische
Auswahlparameter

$Y$

$Y_{max}$

$Y_{min}$

$X_{min}$    $X_{max}$    $X$

Charakteristische
Werte der Fahrt

FIG. 20

FIG. 21

FIG. 22

FIG. 23

EP 1 789 755 B1

FIG. 24

—— City ---- Road ·········· Motorway

FIG. 25

—— City ---- Road ·········· Motorway

FIG. 26

—— City ---- Road ·········· Motorway

58

FIG. 27

FIG. 28

Logfile-Viewer

Benutzer-Interface

Log-Datei

UMIS

Umis-Kern

GPS-Positionsdaten

Simulations-Modus

Echtzeit-Modus

Aufgezeichnete GPS-Daten

GPS-Empfänger

GPS-Emulator

FIG. 29

EP 1 789 755 B1

FIG. 30

FIG. 31

FIG. 32

**Situationstypen**
········· Stadt
– – – Landstraße
——— Autobahn

**FIG. 33**

**Situationstypen**
········· Stadt
– – – Landstraße
——— Autobahn

**FIG. 34**

FIG. 35

Situationstypen
.......... Stadt
- - - Landstraße
— Autobahn

Erlangen

Tennenlohe

FIG. 36

FIG. 37

FIG. 38

FIG. 39

FIG. 40

aktuelle
Geschwindigkeit
v [km/h]

City
$0 \leq \overline{v} \leq 60$

ja     nein

Durchschnittsgeschwindigkeit
v [km/h]

City
$0 \leq \overline{v} \leq 35$

ja     nein

Road
$35 \leq \overline{v} \leq 80$

ja     nein

Auswahl
des Situationstyps
City

Auswahl
des Situationstyps
Road

Auswahl
des Situationstyps
Motorway

# FIG. 41

FIG. 42

FIG. 43

FIG. 44

```
Category      = Gebäude\nKirche\nBarock
Position      = (49*48'49''N;11*13'19''E)
Situation     = city, walking
Importance    = 100
MaxReptitions = 1
```

## FIG. 45

zu
prüfendes
Objekt

Besitzt
das Objekt
definierte Auswah-
Situationen

nein

ja

Übergabe der
erlaubten Auswahl-
Situationen

aktuelle
Benutzer-Situation

Ist
Objekt
für die aktuelle
Situation verfügbar?

ja

nein

Übergabe an
die bisherigen
Auswahl-Routinen

Objekt erfüllt
nicht die
Auswahlbedingung

## FIG. 46

objektabhängige
Relevanz-Bereiche

Objekt B

Objekt A

Bewegungsrichtung
des Benutzers

## FIG. 47

Mittelpunkt

Radius

## FIG. 48

Norden

$\varphi_2$

$\varphi_1$

## FIG. 49

FIG. 50

FIG. 51

Polygon

Einfache

Komplex

Konvex

Konkav

Zyklisch

Regulär

FIG. 52

Benutzerposition

Norden

$\varphi_{AB}$

$\varphi_2$

$\varphi_1$

FIG. 53

b

a

$r_b$

$r_a$

FIG. 54

FIG. 55

FIG. 56

FIG. 57

P

K

C=P & !K

FIG. 58

objektabhängige
Relevanz-Bereiche

Informationsobjekt

Informationsobjekt

6km

FIG. 59

FIG. 60

Region

Straße

unpositioniertes Informationsobjekt
mit objektabhängigem Relevanz-Bereich

# FIG. 61

Gebäude

②

1

3

③

Gebäude

2

①

# FIG. 62

objektabhängige
Relevanz-Bereiche

① ②

Informationsobjekte

Straßenverlauf

## FIG. 63

CArea

CArc  CSegment  CPolygon  CCircle

## FIG. 64

CSelect

CArea

CObjectEl

CBoolExpr

## FIG. 65

GPS-Position bestimmen

Auswahlbereich festlegen

Objekt-Auswahl

Objekte laden/ entladen

Objektliste aktualisieren

## FIG. 66

FIG. 67

FIG. 68

| | Durchschnitts-Geschwindigkeit $\overline{V}$ $[\frac{km}{h}]$ |
|---|---|
| Stadt | $0 \leq \overline{V} \leq 35$ |
| Landstrasse | $35 \leq \overline{V} \leq 80$ |
| Autobahn | $80 \leq V$ |

# FIG. 69

**FIG. 70**

Situationstypen
Stadt
Landstraße
Autobahn

Erlangen

Tennenlohe

**FIG. 71**

Situationstypen
Stadt
Landstraße
Autobahn

Erlangen

Tennenlohe

Situationstypen
............ Stadt
– – – Landstraße
——— Autobahn

**FIG. 72**

Situationstypen
............ Stadt
– – – Landstraße
——— Autobahn

**FIG. 73**

FIG. 74

Situationstypen
········· Stadt
– – – Landstraße
——— Autobahn

FIG. 75

Situationstypen:
——— Fußgänger
········· Stadt

EP 1 789 755 B1

FIG. 76

FIG. 77

86

FIG. 78

Informationsobjekt 1

Relevanzbereich 2

Informationsobjekt 2

Erlangen

Relevanzbereich I

Tennenlohe

FIG. 79

Relevanzbereich
von Objekt 2

Objekt 2

Objekt 1

Relevanzbereich
von Objekt 1

FIG. 80

FIG. 81